# EUROPEAN PATENT APPLICATION

(11) **EP 4 843 459 A1**
(43) Date of publication of application: **25.11.2026**
(21) Application number: 26180063.5
(22) Date of filing: 20.05.2026
(51) Int. Cl.: A47J 37/06, F24C 7/00

(54) **COOKING APPLIANCE**

(30) Priority: 20.05.2025 CN 202510653193; 02.09.2025 CN 202511250643; 02.09.2025 CN 202511250538; 25.12.2025 WO PCT/CN2025/145627; 19.03.2026 CN 202610346695
(71) Applicant: Guangdong Midea Kitchen Appliances Manufacturing Co., Ltd., Foshan, Guangdong 528311 (CN)
(72) Inventor: YU, Yankun, Shunde, 528311 (CN); ZHOU, Meng, Shunde, 528311 (CN); SUN, Yanjun, Shunde, 528311 (CN); TANG, Xiangwei, Shunde, 528311 (CN)
(74) Representative: RGTH

(57) **Abstract**

This application provides a cooking appliance (1), comprising: an appliance body (10), the appliance body (10) being provided with a cooking cavity (110) therein, and the cooking cavity (110) comprising a placement region (112) therein; and a heating assembly (20) located within the cooking cavity (110), the heating assembly (20) comprising a first heating element (200) and a reflecting portion (300), the reflecting portion (300) being used for reflecting at least part of the thermal radiation emitted by the first heating element (200) during operation to the placement region (112). The reflecting portion (300) of the present application has a function of optimizing a heat radiation path of the first heating element (200), so as to reflect at least part of the radiation energy emitted by the first heating element (200) to food ingredients (2) in the placement region (112) and then reduce the radiation energy absorbed by a cavity wall of the cooking cavity (110), so that the thermal radiation emitted by the first heating element (200) is more intensively reflected to the food ingredients (2) in the placement region (112), which improves the heating efficiency of the food ingredients (2), increases energy utilization rate, enhances the energy efficiency of the cooking appliance (1), and further improves product service performance and market competitiveness.

## Description

This application claims priorities to Chinese Patent Application No. 202510653193.9 filed with China National Intellectual Property Administration on May 20, 2025 and entitled "COOKING APPLIANCE", Chinese Patent Application No. 202511250643.6 filed with China National Intellectual Property Administration on September 02, 2025 and entitled "COOKING APPLIANCE", Chinese Patent Application No. 202511250538.2 filed with China National Intellectual Property Administration on September 02, 2025 and entitled "COOKING APPLIANCE", international Patent Application No. PCT/CN2025/145627 filed on December 25, 2025 and entitled "COOKING APPLIANCE", and Chinese Patent Application No. 202610346695.1 filed with China National Intellectual Property Administration on March 19, 2026 and entitled "COOKING APPLIANCE".

### FIELD

The present application relates to the technical field of cooking appliances, and specifically relates to a cooking appliance.

### BACKGROUND

A cooking appliance has a cooking cavity therein, and a heating element is provided within the cooking cavity. The heating element operates to transfer heat through thermal radiation, thereby achieving a purpose of heating food ingredients in the cooking cavity. During an energy radiation process, the energy is relatively dispersed. Some of the energy is dissipated as ineffective heat to the surrounding environment through an appliance body. As a result, only a small amount of energy is absorbed by the food, leading to slow food ingredients heating, low heating efficiency, and low energy efficiency of the cooking appliance. This significantly reduces product service performance and market competitiveness.

### SUMMARY

The present application aims to at least solve one of the technical problems existing in the prior art or related art.

Thus, a first aspect of the present application proposes a cooking appliance.

A second aspect of the present application proposes a cooking appliance.

A third aspect of the present application proposes a cooking appliance.

A fourth aspect of the present application proposes a cooking appliance.

**In** view of this, the first aspect of the present application proposes a cooking appliance, comprising: an appliance body, the appliance body being provided with a cooking cavity therein, and the cooking cavity comprising a placement region therein; and a heating assembly located within the cooking cavity, the heating assembly comprising a first heating element and a reflecting portion, the reflecting portion being used for reflecting at least part of the thermal radiation emitted by the first heating element during operation to the placement region.

The present application provides the cooking appliance, and the cooking appliance comprises the appliance body and the heating assembly. The appliance body is provided with a cooking cavity therein, and the cooking cavity comprises the placement region therein, and food ingredients can be placed in the placement region.

The heating assembly is located within the cooking cavity, and the heating assembly comprises the first heating element and the reflecting portion. The first heating element operates to transfer heat by thermal radiation. The reflecting portion reflects at least part of the thermal radiation emitted from the operation of the first heating element to the placement region. That is, the reflecting portion has a function of optimizing a heat radiation path of the first heating element, so as to reflect at least part of the radiation energy emitted by the first heating element to the food ingredients in the placement region and then reduce the radiation energy absorbed by a cavity wall of the cooking cavity, so that the thermal radiation emitted by the first heating element is more intensively reflected to the food ingredients in the placement region, which can improve the heating efficiency of the food ingredients, and then increases energy utilization rate, enhances the energy efficiency of the cooking appliance, and further improves product service performance and market competitiveness.

It can be understood that the thermal radiation emitted by the first heating element is more intensively reflected to the food ingredients in the placement region, and thus the radiation energy absorbed by the cavity wall of the cooking cavity can be reduced, and the temperature rise of the outer surface of the appliance body can be lowered. In this way, the touch feeling can be improved when the hand of a user touches the outer surface of the appliance body, which avoids the occurrence of a situation of scalding the user, and helps further improve the service performance of the cooking appliance.

In some technical solutions, optionally, the reflecting portion comprises a first reflecting plate, and the first heating element is disposed on a side of the first reflecting plate facing the placement region.

In some technical solutions, optionally, the reflecting portion comprises a reflecting cover, the reflecting cover comprises an opening, the first heating element is arranged within the reflecting cover, and at least part of the opening is disposed opposite to the placement region.

In some technical solutions, optionally, the reflecting portion comprises the first reflecting plate, and the first heating element is arranged on the side of the first reflecting plate facing the placement region. The reflecting portion further comprises the reflecting cover, the reflecting cover comprises the opening, the first heating element is disposed within the reflecting cover, and at least part of the opening is disposed opposite to the placement region.

In some technical solutions, optionally, when the reflecting portion comprises the reflecting cover, the reflecting cover comprises a surrounding plate, the surrounding plate is arranged around the first heating element, and one end of the surrounding plate encloses the opening.

In some technical solutions, optionally, the reflecting cover further comprises a cover plate, and the cover plate is arranged to cover the other end of the surrounding plate.

In some technical solutions, optionally, along the height direction of the cooking appliance, the height of the surrounding plate is greater than or equal to 1cm.

In some technical solutions, optionally, a cross section of the appliance body and the surrounding plate are taken in a direction perpendicular to the height direction of the cooking appliance. In the cross section, the area of a region enclosed by the contour line of the cavity wall of the cooking cavity is S1, and the area of a region enclosed by the inner contour line of the surrounding plate is S2, and S2/S1≤50%.

In some technical solutions, optionally, a cross section of the surrounding plate is taken in a direction perpendicular to the height direction of the cooking appliance. In the cross section, the inner contour line of the surrounding plate comprises at least one or a combination of a straight line, a curved line and a broken line.

In some technical solutions, optionally, the heating assembly further comprises a protective net disposed at the opening.

In some technical solutions, optionally, when the reflecting portion comprises the first reflecting plate, the first reflecting plate is connected to the cavity wall of the cooking cavity through a first connecting element, and a gap is provided between a side of the first reflecting plate facing away from the first heating element and the cavity wall of the cooking cavity.

In some technical solutions, optionally, when the reflecting portion comprises the reflecting cover and the first reflecting plate, the reflecting cover is located on a side of the first reflecting plate facing the placement region, and the reflecting cover is connected to the cavity wall of the cooking cavity through the first reflecting plate.

In some technical solutions, optionally, the reflecting cover is connected to the first reflecting plate through a second connecting element, and a gap is provided between the reflecting cover and the first reflecting plate.

In some technical solutions, optionally, an ear plate is arranged on the peripheral side of the reflecting cover; the second connecting element comprises a spacer plate and a fastener, the spacer plate is disposed between the ear plate and the first reflecting plate, and the fastener passes through the ear plate and the first reflecting plate.

In some technical solutions, optionally, a first part of the first reflecting plate is recessed in a direction away from the first heating element to form a first recessed portion; the reflecting cover is opposite to and spaced apart from the groove bottom of the first recessed portion, and the part of the first reflecting plate located on the peripheral side of the first recessed portion is connected with the reflecting cover.

In some technical solutions, optionally, the heating assembly further comprises a second heating element. The second heating element and the reflecting cover are disposed on the same side of the first reflecting plate, and the second heating element is arranged around the reflecting cover.

In some technical solutions, optionally, the first reflecting plate covers the second heating element, and a distance from the second heating element to the outer edge of the first reflecting plate is less than a distance from the second heating element to the reflecting cover.

In some technical solutions, optionally, a second part of the first reflecting plate is recessed in a direction away from the placement region to form a second recessed portion, and the second heating element, the reflecting cover and the first heating element are all located at the second recessed portion.

In some technical solutions, optionally, the heating assembly and the placement region are located on two opposite sides of the cooking cavity.

In some technical solutions, optionally, the cooking appliance further comprises a second reflecting plate. The second reflecting plate and the heating assembly are disposed on two adjacent sides of the cooking cavity, and the second reflecting plate is used for reflecting at least part of the thermal radiation emitted from the operation of the first heating element to the placement region.

The second aspect of the present application proposes a cooking appliance, comprising: an appliance body, the appliance body being provided with a cooking cavity therein; a heating assembly located within the cooking cavity, the heating assembly comprising a first heating element and a reflecting portion, wherein, the reflecting portion comprises a first reflecting plate and a reflecting cover, the reflecting cover is stacked on one side of the first reflecting plate, the reflecting cover is connected to the cavity wall of the cooking cavity through the first reflecting plate, a side of the reflecting cover facing away from the first reflecting plate comprises an opening, and the first heating element is arranged within the reflecting cover; in the cavity walls of the cooking cavity, the cavity wall on a side immediately adjacent to the first reflecting plate comprises a central region, and the first reflecting plate covers the central region; along a direction from the reflecting cover to the first reflecting plate, the first heating element forms an orthographic projection on the cavity wall of the cooking cavity, and at least part of the projection of the first heating element overlaps the central region; in the overlapping portion of the projection of the first heating element and the central region, the contour line of the projection and the central region enclose at least one closed region, the maximum area of the at least one closed region is Ae, the area of the central region is S0, and Ae≥0.1×S0.

The present application provides the cooking appliance, and the cooking appliance comprises the appliance body and the heating assembly. The appliance body is provided with the cooking cavity therein, and food ingredients can be placed within the cooking cavity.

The heating assembly is located within the cooking cavity, and the heating assembly comprises the first heating element and the reflecting portion. The first heating element operates to transfer heat by thermal radiation. The reflecting portion reflects at least part of the thermal radiation emitted from the operation of the first heating element to the food ingredients. That is, the reflecting portion has a function of optimizing a heat radiation path of the first heating element, so as to reflect at least part of the radiation energy emitted by the first heating element to the food ingredients and then reduce the radiation energy absorbed by a cavity wall of the cooking cavity, so that the thermal radiation emitted by the first heating element is more intensively reflected to the food ingredients, which can improve the heating efficiency of the food ingredients, and then increases energy utilization rate, enhances the energy efficiency of the cooking appliance, and further improves product service performance and market competitiveness.

It can be understood that the thermal radiation emitted by the first heating element is more intensively reflected to the food ingredients, and thus the radiation energy absorbed by the cavity wall of the cooking cavity can be reduced, and the temperature rise of the outer surface of the appliance body can be lowered. In this way, the touch feeling can be improved when the hand of a user touches the outer surface of the appliance body, which avoids the occurrence of a situation of scalding the user, and helps further improve the service performance of the cooking appliance.

The reflecting portion comprises the first reflecting plate, the first reflecting plate has a function of separating the first heating element from the cavity wall of the cooking cavity immediately adjacent to the first heating element, and the first reflecting plate can reflect at least part of the radiation energy emitted by the first heating element to the food ingredient and reduce the radiation energy absorbed by the cavity wall of the cooking cavity.

If the first reflecting plate is not provided, the thermal radiation emitted by the first heating element will directly irradiate the cavity walls of the cooking cavity, especially the cavity wall immediately adjacent to the first heating element, and this will cause the temperature rise of the cavity wall of the cooking cavity and further dissipate heat in the form of secondary radiation, thus reducing the heating efficiency of the cooking appliance; meanwhile, the cavity wall of the cooking cavity will heat up after absorbing radiation and dissipate heat through the outer surface of the appliance body, and thus this will raise the temperature of the outer surface of the appliance body and cause energy waste. Therefore, the structural arrangement of the present application can reduce the thermal load of the cavity wall of the cooking cavity, concentrate more heat on food ingredients, which can increase energy utilization rate, enhance the energy efficiency of the cooking appliance, and further improve product service performance and market competitiveness.

The reflecting portion further comprises the reflecting cover, the side of the reflecting cover facing away from the first reflecting plate comprises an opening, the first heating element is arranged within the reflecting cover, and at least part of the opening is arranged opposite to the region where food ingredients are located. The structural arrangement of the reflecting cover has a function of optimizing the heat radiation path of the first heating element, so as to reflect at least part of the radiation energy emitted by the first heating element to the food ingredients through the opening, and reduce the radiation energy absorbed by the cavity wall of the cooking cavity, and then the thermal radiation emitted by the first heating element is more intensively reflected to the food ingredients.

If the reflecting cover is not provided, the thermal radiation emitted by the first heating element will directly irradiate the cavity wall of the cooking cavity, and this will cause the temperature rise of the cavity wall of the cooking cavity and further dissipate heat in the form of secondary radiation and reduce the heating efficiency of the cooking appliance; meanwhile, the cavity wall of the cooking cavity will heat up after absorbing radiation and dissipate heat through the outer surface of the appliance body, and this will raise the temperature of the outer surface of the appliance body and cause energy waste. The present application reasonably arranges the structure of the cooking appliance, which can reduce the thermal load of the cavity wall of the cooking cavity, concentrate more heat on food ingredients, and then can increase energy utilization rate, enhance the energy efficiency of the cooking appliance, and further improve product service performance and market competitiveness.

In other words, the first reflecting plate and the reflecting cover cooperate with each other to jointly optimize the heat radiation path of the first heating element, so as to reflect at least part of the radiation energy emitted by the first heating element to the food ingredients, and reduce the radiation energy absorbed by the cavity wall of the cooking cavity, and then the thermal radiation emitted by the first heating element is more intensively reflected to the food ingredients.

Wherein, in the cavity walls of the cooking cavity, the cavity wall on the side immediately adjacent to the first reflecting plate comprises the central region, and the first reflecting plate covers the central region; that is, the first reflecting plate is located between the reflecting cover and the cavity wall of the cooking cavity comprising the central region, and the first reflecting plate can also cover the central region.

In the direction from the reflecting cover to the first reflecting plate, the first heating element forms an orthographic projection on the cavity wall of the cooking cavity, and at least part of the projection of the first heating element overlaps the central region, so as to ensure that the thermal radiation emitted by the first heating element is more intensively reflected to the food ingredients and then ensure the cooking efficiency of the cooking appliance.

In the overlapping portion of the projection of the first heating element and the central region, the contour line of the projection and the central region enclose at least one closed region, the maximum area of the at least one closed region is Ae, and the area of the central region is S0, wherein, Ae≥0.1×S0. Ae is correlated with S0, and by defining the relationship between Ae and SO to satisfy Ae≥0.1×S0, both the cooking efficiency and energy consumption of the cooking appliance are balanced, which can avoid increasing the energy consumption of the cooking appliance due to an excessively large Ae, and can also prevent lowering the cooking efficiency of the cooking appliance due to an excessively small Ae.

In some technical solutions, optionally, the outer edge of the central region comprises a first side and a second side arranged adjacent to each other, the length of the first side is d1, and the length of the second side is d2; wherein, 150mm≤d1≤450mm, 80mm≤d2≤200mm, and d2<d1.

In some technical solutions, optionally, in the overlapping portion of the projection of the first heating element and the central region, the contour line of the projection forms the entire outer edge of the closed region.

In some technical solutions, optionally, in the overlapping portion of the projection of the first heating element and the central region, the contour line of the projection forms part of the outer edge of the closed region.

In some technical solutions, optionally, the outer edge of the central region forms another part of the outer edge of the closed region.

In some technical solutions, optionally, the number of intersection points of the contour line of the projection of the first heating element and the outer edge of the central region is greater than or equal to 3, and the connecting line of all intersection points forms another part of the outer edge of the closed region.

In some technical solutions, optionally, the first heating element is a linear heating element, and the length of the first heating element is d; when the projection of the first heating element is parallel to the first side or the included angle between the projection of the first heating element and the first side is less than 45°, d≤1.5×d1; when the included angle between the projection of the first heating element and the first side is greater than or equal to 45°, d≤1.5×d2.

In some technical solutions, optionally, SO and Ae satisfy: 0.5×S0≤Ae≤S0.

In some technical solutions, optionally, the first heating element comprises at least one heat generating tube; when the number of the heat generating tube is one, the power of the first heating element is P, the power density of the first heating element is PD1, the area of a region enclosed by the outermost contour line in the projection of the first heating element on the cavity wall of the cooking cavity is A, P≥800W, and PD1=P/A≥0.028W/mm²; when the number of the heat generating tubes is greater than or equal to two, the power of the first heating element is P, the power density of the first heating element is PD2, P≥800W, and PD2=P/Ae≥0.061W/mm².

In some technical solutions, optionally, the closed region with the maximum area covers the center of the central region.

In some technical solutions, optionally, the first reflecting plate comprises a plate body and two bent plates, the plate body is connected between the two bent plates, and the reflecting cover is stacked on one side of the plate body; the spacing between the sides of the two bent plates facing away from the plate body is larger than the spacing between the sides of the two bent plates connected to the plate body.

In some technical solutions, optionally, the heating assembly is disposed at the top of the cooking cavity; or the heating assembly is disposed at a side portion of the cooking cavity.

In some technical solutions, optionally, the reflecting cover comprises a surrounding plate, the surrounding plate is arranged around the first heating element, and one end of the surrounding plate encloses the opening.

In some technical solutions, optionally, the reflecting cover further comprises a cover plate, and the cover plate is arranged to cover the other end of the surrounding plate.

In some technical solutions, optionally, along a direction from the reflecting cover to the first reflecting plate, the height of the surrounding plate is greater than or equal to 1cm.

In some technical solutions, optionally, across section of the appliance body and the surrounding plate is taken along a direction perpendicular to the direction from the reflecting cover to the first reflecting plate. In the cross section, the area of the region enclosed by the contour line of the cavity wall of the cooking cavity is S1, and the area of the region enclosed by the inner contour line of the surrounding plate is S2, where S2/S1≤50%.

In some technical solutions, optionally, 5%≤S2/S1≤40%.

In some technical solutions, optionally, the height of the surrounding plate is greater than or equal to 1.5cm, and less than or equal to 5cm.

In some technical solutions, optionally, a cross section of the surrounding plate is taken along a direction perpendicular to the direction from the reflecting cover to the first reflecting plate. In the cross section, the inner contour line of the surrounding plate comprises at least one or a combination of a straight line, a curved line and a broken line.

In some technical solutions, optionally, the heating assembly further comprises a protective net disposed at the opening.

In some technical solutions, optionally, the first reflecting plate is connected to the cavity wall of the cooking cavity through a first connecting element, and a gap is provided between a side of the first reflecting plate facing away from the first heating element and the cavity wall of the cooking cavity.

In some technical solutions, optionally, the gap between the side of the first reflecting plate facing away from the first heating element and the cavity wall of the cooking cavity is greater than or equal to 0.5mm and less than or equal to 5mm.

In some technical solutions, optionally, the reflecting cover is connected to the first reflecting plate through a second connecting element, and a gap is provided between the reflecting cover and the first reflecting plate.

In some technical solutions, optionally, the gap between the reflecting cover and the first reflecting plate is greater than or equal to 0.5mm and less than or equal to 5mm.

In some technical solutions, optionally, an ear plate is arranged on the peripheral side of the reflecting cover; the second connecting element comprises a spacer plate and a fastener, the spacer plate is disposed between the ear plate and the first reflecting plate, and the fastener passes through the ear plate and the first reflecting plate.

In some technical solutions, optionally, a first part of the first reflecting plate is recessed in a direction away from the first heating element to form a first recessed portion; the reflecting cover is opposite to and spaced apart from the groove bottom of the first recessed portion, and the part of the first reflecting plate located on the peripheral side of the first recessed portion is connected with the reflecting cover.

In some technical solutions, optionally, the heating assembly further comprises a second heating element. The second heating element and the reflecting cover are disposed on the same side of the first reflecting plate, and the second heating element is arranged around the reflecting cover.

In some technical solutions, optionally, the first reflecting plate covers the second heating element, and a distance from the second heating element to the outer edge of the first reflecting plate is less than a distance from the second heating element to the reflecting cover.

In some technical solutions, optionally, a second part of the first reflecting plate is recessed in a direction away from the placement region to form a second recessed portion, and the second heating element, the reflecting cover and the first heating element are all located at the second recessed portion.

In some technical solutions, optionally, the first heating element comprises any one or a combination of a metal heating element, a graphene heating element, a halogen tube and an infrared tube; and/or the second heating element comprises any one or a combination of a metal heating element, a graphene heating element, a halogen tube and an infrared tube.

In some technical solutions, optionally, the placement region is provided in the cooking cavity, the heating assembly and the placement region are located on two opposite sides of the cooking cavity.

In some technical solutions, optionally, the cooking appliance further comprises a second reflecting plate. The second reflecting plate and the heating assembly are disposed on two adjacent sides of the cooking cavity, and the second reflecting plate is used for reflecting at least part of the thermal radiation emitted from the operation of the first heating element to the placement region.

In some technical solutions, optionally, the cooking appliance further comprises a protective sleeve sleeved on the outer side of the first heating element, the protective sleeve is provided with a hole, and the hole is in communication with the first heating element.

In some technical solutions, optionally, the thickness of the protective sleeve is greater than or equal to 0.2mm and less than or equal to5mm.

In some technical solutions, optionally, there are multiple holes, and the ratio of the sum of the areas of the cross sections of the multiple holes to the area of the outer surface of the protective sleeve is greater than or equal to 10% and less than or equal to 90%; the distance between any two points on the hole wall of the hole is less than or equal to 10mm.

In some technical solutions, optionally, the spacing between the inner surface of the protective sleeve and the outer surface of the first heating element is greater than or equal to 0.1mm.

In some technical solutions, optionally, the protective sleeve is a metal sleeve.

In some technical solutions, optionally, the side of the reflecting cover facing the placement region is attached to a side of the protective net facing the first heating element; the outer edge of the protective net is provided with multiple connecting plates arranged at intervals, and the connecting plates are located on the peripheral side of the reflecting cover; the cooking appliance comprises multiple positioning elements, and each connecting plate is connected to the cavity wall of the cooking cavity through one positioning element.

In some technical solutions, optionally, a third part of the first reflecting plate is recessed in a direction facing away from the first heating element to form a first groove-shaped structure; the portion of the cavity wall of the cooking cavity disposed opposite to the first reflecting plate is provided with a second groove-shaped structure, at least part of the first groove-shaped structure extends into the second groove-shaped structure, and at least part of the reflecting cover is located within the first groove-shaped structure.

In some technical solutions, optionally, along the direction from the first reflecting plate to the reflecting cover, the height of the second heating element exceeds the reflecting cover.

In some technical solutions, optionally, the groove depth of at least one of the first groove-shaped structure and the second groove-shaped structure is greater than or equal to 17mm.

In some technical solutions, optionally, a fourth part of the first reflecting plate protrudes in a direction facing away from the first heating element to form a protruding portion, and the protruding portion and the cavity wall of the cooking cavity are connected to each other through a third connecting element; wherein, a gap is formed between the portion of the first reflecting plate located on the peripheral side of the protruding portion and the cavity wall of the cooking cavity.

In some technical solutions, optionally, there are multiple protruding portions and multiple third connecting elements, and each protruding portion cooperates with one third connecting element; the multiple protruding portions comprise at least one first protruding portion, at least one second protruding portion and at least one third protruding portion, the first protruding portion is located on the peripheral side of the first groove-shaped structure, the second protruding portion is located at the groove bottom of the first groove-shaped structure, and the third protruding portion is located at the outer edge of the first reflecting plate.

In some technical solutions, optionally, the distance from the portion of the first reflecting plate located on the peripheral side of the protruding portion to the cavity wall of the cooking cavity is greater than or equal to 1mm.

In some technical solutions, optionally, the distance from the portion of the first reflecting plate located on the peripheral side of the protruding portion to the cavity wall of the cooking cavity is greater than or equal to 1.5mm and less than or equal to 10mm.

In some technical solutions, optionally, there are multiple second reflecting plates; the cavity wall of the cooking cavity comprise multiple side walls, and the multiple side walls are sequentially connected along the circumferential direction of the placement region; each side wall of the cooking cavity is disposed opposite to one second reflecting plate; alternatively, the multiple side walls of the cooking cavity comprise a first side wall and a second side wall disposed opposite to each other, and either one of the first side wall and the second side wall is disposed opposite to one second reflecting plate.

In some technical solutions, optionally, for the two end faces of the second reflecting plate in the thickness direction of the second reflecting plate, the reflectivity of at least one end face is greater than or equal to 0.6; the thickness of the second reflecting plate is greater than or equal to 0.3mm; a cross section of the second reflecting plate is taken along a direction perpendicular to the thickness direction of the second reflecting plate, then the area of the cross section of the second reflecting plate is S3, the area of the side wall disposed opposite to the second reflecting plate is S4, and S3≥0.5×S4.

In some technical solutions, optionally, for the two end faces of the first reflecting plate in the thickness direction of the first reflecting plate, the reflectivity of at least one end face is greater than or equal to 0.6; the thickness of the first reflecting plate is greater than or equal to 0.3mm; a cross section of the first reflecting plate is taken along a direction perpendicular to the thickness direction of the first reflecting plate, then the area of the cross section of the first reflecting plate is S5, the area of the cavity wall of the cooking cavity disposed opposite to the first reflecting plate is S6, and S5≥0.5×S6.

In some technical solutions, optionally, a cross section of the reflecting cover is taken along a direction perpendicular to the height direction of the reflecting cover. In the cross section, a reference circle is located within the region enclosed by the inner contour line of the reflecting cover; wherein, the reference circle is a circle with a diameter less than or equal to 210mm, and the minimum distance from the center of the reference circle to a vertical center line of the cooking cavity is less than or equal to 50mm.

In some technical solutions, optionally, the depth of the reflecting cover is H1, and the diameter of the reference circle is H2, where H1/H2≤0.17.

In some technical solutions, optionally, when the heating assembly is disposed on the side portion of the cooking cavity, part of the cavity wall of the cooking cavity is recessed in a direction facing away from the heating assembly to form a third groove-shaped structure, and the heating assembly is disposed within the third groove-shaped structure.

In some technical solutions, optionally, along the direction from the first reflecting plate to the reflecting cover, the height of the reflecting cover exceeds the first heating element.

In some technical solutions, optionally, the power of the first heating element is greater than or equal to 800W.

The third aspect of the present application proposes a cooking appliance, comprising: an appliance body, the appliance body being provided with a cooking cavity therein; a heating assembly located within the cooking cavity, the heating assembly comprising a first heating element and a reflecting portion, wherein, the reflecting portion comprises a first reflecting plate and a reflecting cover, the reflecting cover is stacked on one side of the first reflecting plate, the reflecting cover is connected to the cavity wall of the cooking cavity through the first reflecting plate, a side of the reflecting cover facing away from the first reflecting plate comprises an opening, and the first heating element is arranged within the reflecting cover.

The present application provides the cooking appliance, and the cooking appliance comprises the appliance body and the heating assembly. The appliance body is provided with the cooking cavity therein, and food ingredients can be placed within the cooking cavity.

The heating assembly is located within the cooking cavity, and the heating assembly comprises the first heating element and the reflecting portion. The first heating element operates to transfer heat by thermal radiation. The reflecting portion reflects at least part of the thermal radiation emitted from the operation of the first heating element to the food ingredients. That is, the reflecting portion has a function of optimizing a heat radiation path of the first heating element, so as to reflect at least part of the radiation energy emitted by the first heating element to the food ingredients and then reduce the radiation energy absorbed by a cavity wall of the cooking cavity, so that the thermal radiation emitted by the first heating element is more intensively reflected to the food ingredients, which can improve the heating efficiency of the food ingredients, and then increases energy utilization rate, enhances the energy efficiency of the cooking appliance, and further improves product service performance and market competitiveness.

It can be understood that the thermal radiation emitted by the first heating element is more intensively reflected to the food ingredients, and thus the radiation energy absorbed by the cavity wall of the cooking cavity can be reduced, and the temperature rise of the outer surface of the appliance body can be lowered. In this way, the touch feeling can be improved when the hand of a user touches the outer surface of the appliance body, which avoids the occurrence of a situation of scalding the user, and helps further improve the service performance of the cooking appliance.

The reflecting portion comprises the first reflecting plate, the first reflecting plate has a function of separating the first heating element from the cavity wall of the cooking cavity immediately adjacent to the first heating element, and the first reflecting plate can reflect at least part of the radiation energy emitted by the first heating element to the food ingredient and reduce the radiation energy absorbed by the cavity wall of the cooking cavity.

If the first reflecting plate is not provided, the thermal radiation emitted by the first heating element will directly irradiate the cavity walls of the cooking cavity, especially the cavity wall immediately adjacent to the first heating element, and this will cause the temperature rise of the cavity wall of the cooking cavity and further dissipate heat in the form of secondary radiation, thus reducing the heating efficiency of the cooking appliance; meanwhile, the cavity wall of the cooking cavity will heat up after absorbing radiation and dissipate heat through the outer surface of the appliance body, and thus this will raise the temperature of the outer surface of the appliance body and cause energy waste. Therefore, the structural arrangement of the present application can reduce the thermal load of the cavity wall of the cooking cavity, concentrate more heat on food ingredients, which can increase energy utilization rate, enhance the energy efficiency of the cooking appliance, and further improve product service performance and market competitiveness.

The reflecting portion further comprises the reflecting cover, the side of the reflecting cover facing away from the first reflecting plate comprises an opening, the first heating element is arranged within the reflecting cover, and at least part of the opening is arranged opposite to the region where food ingredients are located. The structural arrangement of the reflecting cover has a function of optimizing the heat radiation path of the first heating element, so as to reflect at least part of the radiation energy emitted by the first heating element to the food ingredients through the opening, and reduce the radiation energy absorbed by the cavity wall of the cooking cavity, and then the thermal radiation emitted by the first heating element is more intensively reflected to the food ingredients.

If the reflecting cover is not provided, the thermal radiation emitted by the first heating element will directly irradiate the cavity wall of the cooking cavity, and this will cause the temperature rise of the cavity wall of the cooking cavity and further dissipate heat in the form of secondary radiation and reduce the heating efficiency of the cooking appliance; meanwhile, the cavity wall of the cooking cavity will heat up after absorbing radiation and dissipate heat through the outer surface of the appliance body, and this will raise the temperature of the outer surface of the appliance body and cause energy waste. The present application reasonably arranges the structure of the cooking appliance, which can reduce the thermal load of the cavity wall of the cooking cavity, concentrate more heat on food ingredients, and then can increase energy utilization rate, enhance the energy efficiency of the cooking appliance, and further improve product service performance and market competitiveness.

In other words, the first reflecting plate and the reflecting cover cooperate with each other to jointly optimize the heat radiation path of the first heating element, so as to reflect at least part of the radiation energy emitted by the first heating element to the food ingredients, and reduce the radiation energy absorbed by the cavity wall of the cooking cavity, and then the thermal radiation emitted by the first heating element is more intensively reflected to the food ingredients.

In some technical solutions, optionally, the reflecting cover comprises a surrounding plate, the surrounding plate is arranged around the first heating element, and one end of the surrounding plate encloses the opening.

In some technical solutions, optionally, the reflecting cover further comprises a cover plate, and the cover plate is arranged to cover the other end of the surrounding plate.

In some technical solutions, optionally, along a direction from the reflecting cover to the first reflecting plate, the height of the surrounding plate is greater than or equal to 1cm.

In some technical solutions, optionally, the height of the surrounding plate is greater than or equal to 1.5cm, and less than or equal to 5cm.

In some technical solutions, optionally, across section of the appliance body and the surrounding plate is taken along a direction perpendicular to the direction from the reflecting cover to the first reflecting plate. In the cross section, the area of the region enclosed by the contour line of the cavity wall of the cooking cavity is S1, and the area of the region enclosed by the inner contour line of the surrounding plate is S2, where S2/S1≤50%.

In some technical solutions, optionally, 5%≤S2/S1≤40%.

In some technical solutions, optionally, a cross section of the surrounding plate is taken along a direction perpendicular to the direction from the reflecting cover to the first reflecting plate. In the cross section, the inner contour line of the surrounding plate comprises at least one or a combination of a straight line, a curved line and a broken line.

In some technical solutions, optionally, the heating assembly further comprises a protective net disposed at the opening.

In some technical solutions, optionally, the first reflecting plate is connected to the cavity wall of the cooking cavity through a first connecting element, and a gap is provided between a side of the first reflecting plate facing away from the first heating element and the cavity wall of the cooking cavity.

In some technical solutions, optionally, the gap between the side of the first reflecting plate facing away from the first heating element and the cavity wall of the cooking cavity is greater than or equal to 0.5mm and less than or equal to 5mm.

In some technical solutions, optionally, the reflecting cover is connected to the first reflecting plate through a second connecting element, and a gap is provided between the reflecting cover and the first reflecting plate.

In some technical solutions, optionally, the gap between the reflecting cover and the first reflecting plate is greater than or equal to 0.5mm and less than or equal to 5mm.

In some technical solutions, optionally, an ear plate is arranged on the peripheral side of the reflecting cover; the second connecting element comprises a spacer plate and a fastener, the spacer plate is disposed between the ear plate and the first reflecting plate, and the fastener passes through the ear plate and the first reflecting plate.

In some technical solutions, optionally, a first part of the first reflecting plate is recessed in a direction away from the first heating element to form a first recessed portion; the reflecting cover is opposite to and spaced apart from the groove bottom of the first recessed portion, and the part of the first reflecting plate located on the peripheral side of the first recessed portion is connected with the reflecting cover.

In some technical solutions, optionally, the heating assembly further comprises a second heating element. The second heating element and the reflecting cover are disposed on the same side of the first reflecting plate, and the second heating element is arranged around the reflecting cover.

In some technical solutions, optionally, the first reflecting plate covers the second heating element, and a distance from the second heating element to the outer edge of the first reflecting plate is less than a distance from the second heating element to the reflecting cover.

In some technical solutions, optionally, a second part of the first reflecting plate is recessed in a direction away from the placement region to form a second recessed portion, and the second heating element, the reflecting cover and the first heating element are all located at the second recessed portion.

In some technical solutions, optionally, the placement region is provided in the cooking cavity, the heating assembly and the placement region are located on two opposite sides of the cooking cavity.

In some technical solutions, optionally, the cooking appliance further comprises a second reflecting plate. The second reflecting plate and the heating assembly are disposed on two adjacent sides of the cooking cavity, and the second reflecting plate is used for reflecting at least part of the thermal radiation emitted from the operation of the first heating element to the placement region.

In some technical solutions, optionally, the side of the reflecting cover facing the placement region is attached to a side of the protective net facing the first heating element; the outer edge of the protective net is provided with multiple connecting plates arranged at intervals, and the connecting plates are located on the peripheral side of the reflecting cover; the cooking appliance comprises multiple positioning elements, and each connecting plate is connected to the cavity wall of the cooking cavity through one positioning element.

In some technical solutions, optionally, a third part of the first reflecting plate is recessed in a direction facing away from the first heating element to form a first groove-shaped structure; the portion of the cavity wall of the cooking cavity disposed opposite to the first reflecting plate is provided with a second groove-shaped structure, at least part of the first groove-shaped structure extends into the second groove-shaped structure, and at least part of the reflecting cover is located within the first groove-shaped structure.

In some technical solutions, optionally, along the direction from the first reflecting plate to the reflecting cover, the height of the second heating element exceeds the reflecting cover.

In some technical solutions, optionally, the groove depth of at least one of the first groove-shaped structure and the second groove-shaped structure is greater than or equal to 17mm.

In some technical solutions, optionally, a fourth part of the first reflecting plate protrudes in a direction facing away from the first heating element to form a protruding portion, and the protruding portion and the cavity wall of the cooking cavity are connected to each other through a third connecting element; wherein, a gap is formed between the portion of the first reflecting plate located on the peripheral side of the protruding portion and the cavity wall of the cooking cavity.

In some technical solutions, optionally, there are multiple protruding portions and multiple third connecting elements, and each protruding portion cooperates with one third connecting element; the multiple protruding portions comprise at least one first protruding portion, at least one second protruding portion and at least one third protruding portion, the first protruding portion is located on the peripheral side of the first groove-shaped structure, the second protruding portion is located at the groove bottom of the first groove-shaped structure, and the third protruding portion is located at the outer edge of the first reflecting plate.

In some technical solutions, optionally, the distance from the portion of the first reflecting plate located on the peripheral side of the protruding portion to the cavity wall of the cooking cavity is greater than or equal to 1mm.

In some technical solutions, optionally, the distance from the portion of the first reflecting plate located on the peripheral side of the protruding portion to the cavity wall of the cooking cavity is greater than or equal to 1.5mm and less than or equal to 10mm.

In some technical solutions, optionally, there are multiple second reflecting plates; the cavity wall of the cooking cavity comprise multiple side walls, and the multiple side walls are sequentially connected along the circumferential direction of the placement region; each side wall of the cooking cavity is disposed opposite to one second reflecting plate; alternatively, the multiple side walls of the cooking cavity comprise a first side wall and a second side wall disposed opposite to each other, and either one of the first side wall and the second side wall is disposed opposite to one second reflecting plate.

In some technical solutions, optionally, for the two end faces of the second reflecting plate in the thickness direction of the second reflecting plate, the reflectivity of at least one end face is greater than or equal to 0.6; the thickness of the second reflecting plate is greater than or equal to 0.3mm; a cross section of the second reflecting plate is taken along a direction perpendicular to the thickness direction of the second reflecting plate, then the area of the cross section of the second reflecting plate is S3, the area of the side wall disposed opposite to the second reflecting plate is S4, and S3≥0.5×S4.

In some technical solutions, optionally, for the two end faces of the first reflecting plate in the thickness direction of the first reflecting plate, the reflectivity of at least one end face is greater than or equal to 0.6; the thickness of the first reflecting plate is greater than or equal to 0.3mm; a cross section of the first reflecting plate is taken along a direction perpendicular to the thickness direction of the first reflecting plate, then the area of the cross section of the first reflecting plate is S5, the area of the cavity wall of the cooking cavity disposed opposite to the first reflecting plate is S6, and S5≥0.5×S6.

In some technical solutions, optionally, when the reflecting portion comprises the reflecting cover, a cross section of the reflecting cover is taken along a direction perpendicular to the height direction of the reflecting cover. In the cross section, a reference circle is located within the region enclosed by the inner contour line of the reflecting cover; wherein, the reference circle is a circle with a diameter less than or equal to 210mm, and the minimum distance from the center of the reference circle to a vertical center line of the cooking cavity is less than or equal to 50mm.

In some technical solutions, optionally, the depth of the reflecting cover is H1, and the diameter of the reference circle is H2, where H1/H2≤0.17.

In some technical solutions, optionally, when the heating assembly is disposed on the side portion of the cooking cavity, part of the cavity wall of the cooking cavity is recessed in a direction facing away from the heating assembly to form a third groove-shaped structure, and the heating assembly is disposed within the third groove-shaped structure.

In some technical solutions, optionally, along the direction from the first reflecting plate to the reflecting cover, the height of the reflecting cover exceeds the first heating element.

In some technical solutions, optionally, in the cavity walls of the cooking cavity, the cavity wall on the side immediately adjacent to the first reflecting plate comprises the central region, and the first reflecting plate covers the central region; along a direction from the reflecting cover to the first reflecting plate, the first heating element forms an orthographic projection on the cavity wall of the cooking cavity, and at least part of the projection of the first heating element overlaps the central region; in the overlapping portion of the projection of the first heating element and the central region, the contour line of the projection and the central region enclose at least one closed region, the maximum area of the at least one closed region is Ae, the area of the central region is S0, and Ae≥0.1×S0.

In some technical solutions, optionally, the outer edge of the central region comprises a first side and a second side arranged adjacent to each other, the length of the first side is d1, and the length of the second side is d2; wherein, 150mm≤d1≤450mm, 80mm≤d2≤200mm, and d2<d1.

In some technical solutions, optionally, in the overlapping portion of the projection of the first heating element and the central region, the contour line of the projection forms the entire outer edge of the closed region.

In some technical solutions, optionally, in the overlapping portion of the projection of the first heating element and the central region, the contour line of the projection forms part of the outer edge of the closed region.

In some technical solutions, optionally, the outer edge of the central region forms another part of the outer edge of the closed region.

In some technical solutions, optionally, the number of intersection points of the contour line of the projection of the first heating element and the outer edge of the central region is greater than or equal to 3, and the connecting line of all intersection points forms another part of the outer edge of the closed region.

In some technical solutions, optionally, the first heating element is a linear heating element, and the length of the first heating element is d; when the projection of the first heating element is parallel to the first side or the included angle between the projection of the first heating element and the first side is less than 45°, d≤1.5×d1; when the included angle between the projection of the first heating element and the first side is greater than or equal to 45°, d≤1.5×d2.

In some technical solutions, optionally, SO and Ae satisfy: 0.5×S0≤Ae≤S0.

In some technical solutions, optionally, the first heating element comprises at least one heat generating tube; when the number of the heat generating tube is one, the power of the first heating element is P, the power density of the first heating element is PD1, the area of a region enclosed by the outermost contour line in the projection of the first heating element on the cavity wall of the cooking cavity is A, P≥800W, and PD1=P/A≥0.028W/mm²; when the number of the heat generating tubes is greater than or equal to two, the power of the first heating element is P, the power density of the first heating element is PD2, P≥800W and PD2=P/Ae≥0.061W/mm².

In some technical solutions, optionally, the closed region with the maximum area covers the center of the central region.

In some technical solutions, optionally, the first reflecting plate comprises a plate body and two bent plates, the plate body is connected between the two bent plates, and the reflecting cover is stacked on one side of the plate body; the spacing between the sides of the two bent plates facing away from the plate body is larger than the spacing between the sides of the two bent plates connected to the plate body.

In some technical solutions, optionally, the heating assembly is disposed at the top of the cooking cavity; or the heating assembly is disposed at a side portion of the cooking cavity.

In some technical solutions, optionally, the first heating element comprises any one or a combination of a metal heating element, a graphene heating element, a halogen tube and an infrared tube; and/or the second heating element comprises any one or a combination of a metal heating element, a graphene heating element, a halogen tube and an infrared tube.

In some technical solutions, optionally, the cooking appliance further comprises a protective sleeve sleeved on the outer side of the first heating element, the protective sleeve is provided with a hole, and the hole is in communication with the first heating element.

In some technical solutions, optionally, the thickness of the protective sleeve is greater than or equal to 0.2mm and less than or equal to 5mm.

In some technical solutions, optionally, there are multiple holes, and the ratio of the sum of the areas of the cross sections of the multiple holes to the area of the outer surface of the protective sleeve is greater than or equal to 10% and less than or equal to 90%; the distance between any two points on the hole walls of the holes is less than or equal to 10mm.

In some technical solutions, optionally, the spacing between the inner surface of the protective sleeve and the outer surface of the first heating element is greater than or equal to 0.1mm.

In some technical solutions, optionally, the protective sleeve is a metal sleeve.

In some technical solutions, optionally, the power of the first heating element is greater than or equal to 800W.

The fourth aspect of the present application proposes a cooking appliance, comprising: an appliance body, the appliance body being provided with a cooking cavity therein, and a cavity wall of the cooking cavity comprising a first mounting wall; a heating assembly located within the cooking cavity, the heating assembly comprising a first heating element and a reflecting portion, the reflecting portion being located between the first mounting wall and the first heating element, and the reflecting portion being connected to the first mounting wall; a reflective protrusion being integrally formed on a side of the reflecting portion facing away from the first mounting wall, and the reflective protrusion being disposed around the first heating element.

The present application provides the cooking appliance, and the cooking appliance comprises the appliance body and the heating assembly. The appliance body is provided with the cooking cavity therein, and food ingredients can be placed inside the cooking cavity.

The heating assembly is located within the cooking cavity, and the heating assembly comprises the first heating element and the reflecting portion. The first heating element operates to transfer heat by thermal radiation. The reflecting portion reflects at least part of the thermal radiation emitted from the operation of the first heating element to the food ingredients. That is, the reflecting portion has a function of optimizing a heat radiation path of the first heating element, so as to reflect at least part of the radiation energy emitted by the first heating element to the food ingredients and then reduce the radiation energy absorbed by a cavity wall of the cooking cavity, so that the thermal radiation emitted by the first heating element is more intensively reflected to the food ingredients, which can improve the heating efficiency of the food ingredients, and then increases energy utilization rate, enhances the energy efficiency of the cooking appliance, and further improves product service performance and market competitiveness.

It can be understood that the thermal radiation emitted by the first heating element is more intensively reflected to the food ingredients, and thus the radiation energy absorbed by the cavity wall of the cooking cavity can be reduced, and the temperature rise of the outer surface of the appliance body can be lowered. In this way, the touch feeling can be improved when the hand of a user touches the outer surface of the appliance body, which avoids the occurrence of a situation of scalding the user, and helps further improve the service performance of the cooking appliance.

The reflecting portion is located between the first mounting wall and the first heating element, the reflecting portion has a function of separating the first heating element from the first mounting wall, and the reflecting portion can reflect at least part of the radiation energy emitted by the first heating element to the food ingredients and reduce the radiation energy absorbed by the cavity wall of the cooking cavity.

If the reflecting portion is not provided, the thermal radiation emitted by the first heating element will be directly irradiated to the cavity walls of the cooking cavity, especially the first mounting wall immediately adjacent to the first heating element, and this will cause the temperature rise of the cavity wall of the cooking cavity and further dissipate heat in the form of secondary radiation, thus reducing the heating efficiency of the cooking appliance; meanwhile, the cavity wall of the cooking cavity will heat up after absorbing radiation and dissipate heat through the outer surface of the appliance body, and thus this will raise the temperature of the outer surface of the appliance body and cause energy waste. Therefore, the structural arrangement of the present application can reduce the thermal load of the cavity wall of the cooking cavity, concentrate more heat on food ingredients, which can increase energy utilization rate, enhance the energy efficiency of the cooking appliance, and further improve product service performance and market competitiveness.

The reflective protrusion is integrally formed on the side of the reflecting portion facing away from the first mounting wall, and the reflective protrusion is arranged around the first heating element. It can be understood that the reflective protrusion is in cylindrical shape and located on the peripheral side of the first heating element. The side of the reflective protrusion facing away from the first mounting wall comprises an opening, and at least part of the opening is disposed opposite to the region where food ingredients are located. The structural arrangement of the reflective protrusion has a function of optimizing the heat radiation path of the first heating element, so as to reflect at least part of the radiation energy emitted by the first heating element to the food ingredients through the opening, and then reduce the radiation energy absorbed by the cavity wall of the cooking cavity, so that the thermal radiation emitted by the first heating element is more intensively reflected to the food ingredients.

Thus, it can be seen that the present application reasonably arranges the structure of the cooking appliance, which can reduce the thermal load of the cavity wall of the cooking cavity, concentrate more heat on the food ingredients, and then can increase energy utilization rate, enhance the energy efficiency of the cooking appliance, and further improve product service performance and market competitiveness.

It can be understood that the reflective protrusion is integrally formed on the side of the reflecting portion facing away from the first mounting wall. Since this structural arrangement omits the assembling process of the reflective protrusion, it simplifies the processes of assembling and subsequently disassembling the reflecting portion, then helps improve the assembling and disassembling efficiency, and thereby reduces production and maintenance costs. In addition, the integral formation of the reflective protrusion on the reflecting portion can meet the precision requirement for the molding dimensions of the reflecting portion, further ensure the position relationship between the first heating element and the region for placing food ingredients, guarantee the contact area between the path of thermal radiation and the food ingredients, and provide structural support for ensuring the cooking effect.

In some technical solutions, optionally, the first portion of the reflecting portion is recessed toward a side facing away from the first mounting wall to form the reflective protrusion.

In some technical solutions, optionally, the reflecting portion comprises the first reflecting plate, the first reflecting plate is located between the reflective protrusion and the first mounting wall, the reflective protrusion is integrally connected with the first reflecting plate, and the first reflecting plate is connected with the first mounting wall.

In some technical solutions, optionally, a first pressing rib structure is arranged on the portion of the reflecting portion located on the peripheral side of the reflective protrusion.

In some technical solutions, optionally, the outer edge of the reflecting portion is bent toward the first mounting wall to form a curled edge.

In some technical solutions, optionally, the reflecting portion comprises a plate body and two bent plates, the plate body is connected between the two bent plates, and the plate body is integrally formed with the reflective protrusion; the spacing between the sides of the two bent plates facing away from the plate body is larger than the spacing between the sides of the two bent plates connected to the plate body; on the basis that the reflecting portion is provided with the first pressing rib structure, the first pressing rib structure comprises a first pressing rib, the first pressing rib is located at the joint of the plate body and the bent plates, and/or the first pressing rib structure comprises a second pressing rib, and the second pressing rib is located at the plate body.

In some technical solutions, optionally, for the two end faces of the reflecting portion in the direction from the heating assembly to the first mounting wall, the reflectivity of at least one end face is greater than or equal to 0.6; the thicknesses of the portion of the reflecting portion located on the peripheral side of the reflective protrusion and the portion of the reflecting portion located within the reflective protrusion are greater than or equal to 0.3mm.

In some technical solutions, optionally, the portion of the reflecting portion located on the peripheral side of the reflective protrusion protrudes toward the first mounting wall to form a protruding portion, and the protruding portion and the first mounting wall are connected through the first connecting element; wherein, a gap is provided between the portion of the reflecting portion located on the peripheral side of the protruding portion and the first mounting wall.

In some technical solutions, optionally, the gap between the portion of the reflecting portion located on the peripheral side of the protruding portion and the first mounting wall is greater than or equal to 1mm.

In some technical solutions, optionally, the gap between the portion of the reflecting portion located on the peripheral side of the protruding portion and the first mounting wall is greater than or equal to 1.5mm and less than or equal to 10mm.

In some technical solutions, optionally, there are multiple protruding portions and multiple first connecting elements, and each protruding portion cooperates with one first connecting element.

In some technical solutions, optionally, along a direction from the heating assembly to the first mounting wall, the height of the reflective protrusion is greater than or equal to 1cm.

In some technical solutions, optionally, the area of the first mounting wall is S1, a cross section of the heating assembly is taken along a direction perpendicular to the direction from the heating assembly to the first mounting wall. In the cross section, the area of the region enclosed by the inner contour line of the reflective protrusion is S2, where S2/S1≤50%.

In some technical solutions, optionally, a cross section of the reflective protrusion is taken along a direction perpendicular to the direction from the heating assembly to the first mounting wall. In the cross section, a reference circle is located within the region enclosed by the inner contour line of the reflective protrusion; wherein, the reference circle is a circle with a diameter less than or equal to 210mm, and the minimum distance from the center of the reference circle to the center line of the cooking cavity is less than or equal to 50mm.

In some technical solutions, optionally, the height of the reflective protrusion in the direction from the heating assembly to the first mounting wall is greater than or equal to 1.5cm and less than or equal to 5cm; 5%≤S2/S1≤40%; the height of the reflective protrusion in the direction from the heating assembly to the first mounting wall is H1, the diameter of the reference circle is H2, and H1/H2≤0.17.

In some technical solutions, optionally, the first heating element is located between a plane where the side of the reflective protrusion facing away from the first mounting wall is located and the first mounting wall.

In some technical solutions, optionally, the heating assembly further comprises a second heating element, the second heating element and the first heating element are arranged on the same side of the reflecting portion, and the second heating element is disposed around the reflective protrusion.

In some technical solutions, optionally, the cooking appliance further comprises a bracket, and the second heating element and the reflecting portion are connected with each other through the bracket.

In some technical solutions, optionally, the reflecting portion covers the second heating element, and the distance from the second heating element to the outer edge of the reflecting portion is less than the distance from the second heating element to the reflective protrusion.

In some technical solutions, optionally, the second portion of the reflecting portion is recessed in a direction facing away from the reflective protrusion to form a third recessed portion, and the second heating element, the reflective protrusion and the first heating element are all disposed at the third recessed portion.

In some technical solutions, optionally, the first heating element comprises any one or a combination of a metal heating element, a graphene heating element, a halogen tube and an infrared tube; and/or the second heating element comprises any one or a combination of a metal heating element, a graphene heating element, a halogen tube and an infrared tube.

In some technical solutions, optionally, the cooking appliance further comprises a second reflecting plate located within the cooking cavity, the cavity wall of the cooking cavity further comprises a second mounting wall, the second reflecting plate is connected with the second mounting wall, and the first mounting wall and the second mounting wall are cavity walls on different sides of the cooking cavity.

In some technical solutions, optionally, there is at least one second reflecting plate and at least one second mounting wall, each second reflecting plate cooperates with one second mounting wall, the first mounting wall and the second mounting wall are two adjacent sides of the cooking cavity. When there are multiple second reflecting plates, the multiple second reflecting plates are arranged along the circumferential direction of the heating assembly.

In some technical solutions, optionally, there is at least one second reflecting plate and at least one second mounting wall, and each second reflecting plate cooperates with one second mounting wall; when there are second multiple mounting walls, part of the multiple second mounting walls and the first mounting wall are opposite sides of the cooking cavity, and the other part of the multiple second mounting walls and the first mounting wall are two adjacent sides of the cooking cavity.

In some technical solutions, optionally, for the two end faces of the second reflecting plate in the thickness direction, the reflectivity of at least one end face is greater than or equal to 0.6; the thickness of the second reflecting plate is greater than or equal to 0.3mm.

In some technical solutions, optionally, the second reflecting plate is provided with a second pressing rib structure.

In some technical solutions, optionally, there are multiple second pressing rib structures; the multiple second pressing rib structures are sequentially nested along a direction from the middle part of the second reflecting plate to the edge of the second reflecting plate.

In some technical solutions, optionally, a cross section of the second reflecting plate is taken along a direction perpendicular to the thickness direction of the second reflecting plate, the area of the cross section of the second reflecting plate is S3, the area of the second mounting wall is S4, and S3≥0.5×S4.

In some technical solutions, optionally, a cross section of the reflective protrusion is taken along a direction perpendicular to the direction from the heating assembly to the first mounting wall. In the cross section, the inner contour line of the reflective protrusion comprises at least one or a combination of a straight line, a curved line and a broken line.

In some technical solutions, optionally, the placement region is provided in the cooking cavity, the heating assembly and the placement region are located on two opposite sides of the cooking cavity.

In some technical solutions, optionally, a cross section of the reflecting portion is taken along the direction perpendicular to the direction from the heating assembly to the first mounting wall. In the cross section, the area of the region enclosed by the outer edge of the reflecting portion is S5, the area of the first mounting wall is S6, and S5≥0.5×S6.

In some technical solutions, optionally, when the heating assembly is disposed on the side portion of the cooking cavity, part of the first mounting wall is recessed in a direction facing away from the heating assembly to form a third groove-shaped structure, and the heating assembly is disposed within the third groove-shaped structure.

In some technical solutions, optionally, the power of the first heating element is greater than or equal to 800W.

In some technical solutions, optionally, the cooking appliance further comprises a protective sleeve sleeved on the outer side of the first heating element, the protective sleeve is provided with a hole, and the hole is in communication with the first heating element.

In some technical solutions, optionally, the thickness of the protective sleeve is greater than or equal to 0.2mm and less than or equal to 5mm.

In some technical solutions, optionally, there are multiple holes, and the ratio of the sum of the areas of the cross sections of the multiple holes to the area of the outer surface of the protective sleeve is greater than or equal to 10% and less than or equal to 90%.

In some technical solutions, optionally, the distance between any two points on the hole walls of the holes is less than or equal to 10mm.

In some technical solutions, optionally, the spacing between the inner surface of the protective sleeve and the outer surface of the first heating element is greater than or equal to 0.1mm.

In some technical solutions, optionally, the protective sleeve is a metal sleeve.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in combination with the following accompanying drawings, wherein:
Fig. 1 is a schematic view of part of the structure of a cooking appliance from a first viewing angle according to a first embodiment of the present application;
Fig. 2 is a schematic view of part of the structure of the cooking appliance from a second viewing angle according to the first embodiment of the present application;
Fig. 3 is a schematic view of the structures of a top plate and a heating assembly according to an embodiment of the present application;
Fig. 4 is a schematic view of the structure of a first part of a top plate and a heating assembly according to an embodiment of the present application;
Fig. 5 is a schematic view of the structure of a second part of a top plate and a heating assembly according to an embodiment of the present application;
Fig. 6 is an exploded view of a heating assembly according to the first embodiment of the present application;
Fig. 7 is a schematic view of the structure of a cooking cavity and food ingredients according to an embodiment of the present application;
Fig. 8 is a schematic view of the structure of a first heating element and a central region according to an embodiment of the present application;
Fig. 9 is a schematic view of the structure of a first heating element and a central region according to the first embodiment of the present application;
Fig. 10 is a schematic view of the structure of a first heating element and a central region according to a second embodiment of the present application;
Fig. 11 is a schematic view of the structure of a first heating element according to the second embodiment of the present application;
Fig. 12 is a schematic view of the structure of a first heating element according to a third embodiment of the present application;
Fig. 13 is a schematic view of the structure of a first heating element according to a fourth embodiment of the present application;
Fig. 14 is a schematic view of the structure of a first heating element according to a fifth embodiment of the present application;
Fig. 15 is a schematic view of the structure of a first heating element according to a sixth embodiment of the present application;
Fig. 16 is a schematic view of the structure of a first heating element according to a seventh embodiment of the present application;
Fig. 17 is a schematic view of the structure of a first heating element according to an eighth embodiment of the present application;
Fig. 18 is a schematic view of the structure of a first heating element according to a ninth embodiment of the present application;
Fig. 19 is a schematic view of the structure of a first heating element according to a tenth embodiment of the present application;
Fig. 20 is a schematic view of the structure of a first heating element according to an eleventh embodiment of the present application;
Fig. 21 is a schematic view of the structure of a first heating element according to a twelfth embodiment of the present application;
Fig. 22 is a schematic view of the structure of the first heating element and a central region according to the third embodiment of the present application;
Fig. 23 is a schematic view of the structure of the first heating element and a central region according to the fourth embodiment of the present application;
Fig. 24 is an exploded view of part of the structure of the cooking appliance according to the first embodiment of the present application;
Fig. 25 is a schematic view of the structure of a first reflecting plate according to an embodiment of the present application;
Fig. 26 is a schematic view of the structure of a first part of the cooking appliance according to the first embodiment of the present application;
Fig. 27 is a partial enlarged view of part A of the cooking appliance as shown in Fig. 26;
Fig. 28 is a schematic view of the structure of a second part of the cooking appliance according to the first embodiment of the present application;
Fig. 29 is a schematic view of the structure of a first heating element, a second heating element and a reflecting cover according to an embodiment of the present application;
Fig. 30 is a schematic view of the structure of a first heating element and a protective sleeve according to an embodiment of the present application;
Fig. 31 is a schematic view of the structure of a top plate, a first reflecting plate, a protective net, a first heating element and a reflecting cover from a first viewing angle according to an embodiment of the present application;
Fig. 32 is a schematic view of the structure of a top plate, a first reflecting plate, a protective net, a first heating element and a reflecting cover from a second viewing angle according to an embodiment of the present application;
Fig. 33 is an exploded view of a heating assembly according to the second embodiment of the present application;
Fig. 34 is an exploded view of the structure of a first part of a cooking appliance according to the second embodiment of the present application;
Fig. 35 is an exploded view of the structure of a second part of the cooking appliance according to the second embodiment of the present application;
Fig. 36 is a schematic view of the structure of a third part of the cooking appliance according to the second embodiment of the present application;
Fig. 37 is a schematic view of the structure of a fourth part of the cooking appliance according to the second embodiment of the present application;
Fig. 38 is a schematic view of the structure of a reflecting portion according to an embodiment of the present application; and
Fig. 39 is a schematic view of the structure of a fifth part of the cooking appliance according to the second embodiment of the present application.

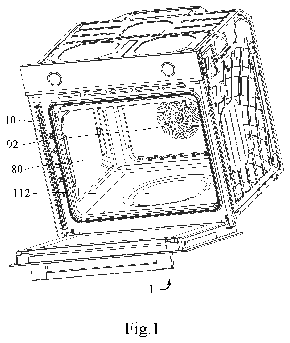

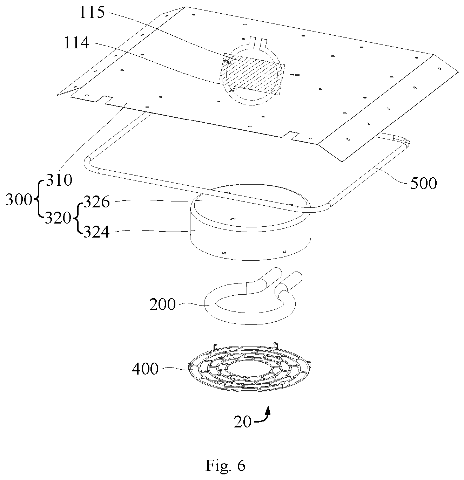

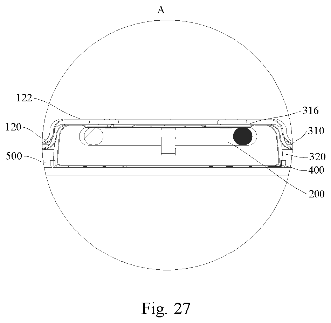

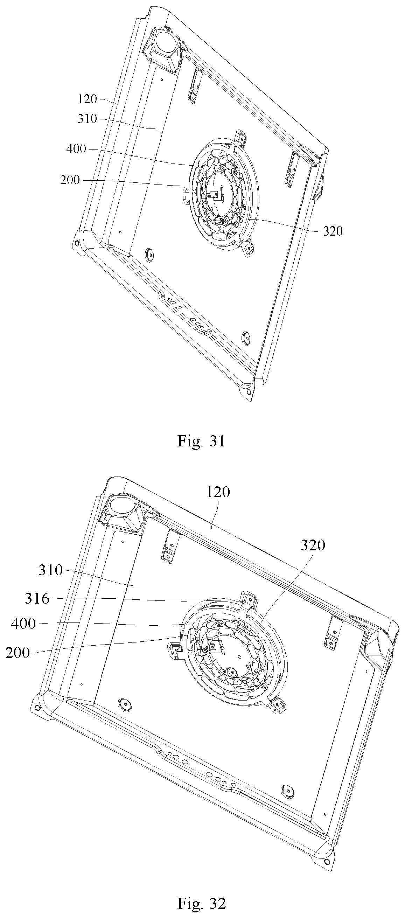

Wherein, the corresponding relationships between the reference signs and the component names in Fig. 1 to Fig. 39 are as follows:

1 cooking appliance,10 appliance body, 110 cooking cavity, 112 placement region, 114 central region, 1142 first side, 1144 second side, 115 closed region, 116 first side wall, 118 second side wall, 120 top plate, 122 second groove-shaped structure, 123 first mounting wall, 124 second mounting wall, 20 heating assembly, 200 first heating element, 210 heat generating tube, 300 reflecting portion, 310 first reflecting plate, 311 plate body, 312 first recessed portion, 313 bent plate, 314 second recessed portion, 316 first groove-shaped structure, 318 protruding portion, 318a first protruding portion, 318b second protruding portion, 318c third protruding portion, 320 reflecting cover, 322 opening, 324 surrounding plate, 326 cover plate, 328 ear plate, 330 first pressing rib structure, 332 first pressing rib, 334 second pressing rib, 340 curled edge, 342 third recessed portion, 344 reflective protrusion, 400 protective net, 410 connecting plate, 500 second heating element, 60 first connecting element, 70 second connecting element, 710 spacer plate, 720 fastener, 80 second reflecting plate, 82 second pressing rib structure, 92 hot air fan, 94 pipe clamp, 95 protective sleeve, 952 hole, 96 bracket, 97 first hanger, 98 second hanger, 2 food ingredient.

### DETAILED DESCRIPTION OF THE DISCLOSURE

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can also be implemented using other embodiments other than these described herein. Therefore, the protection scope of the present application is not limited to the specific embodiments disclosed in the following text.

A cooking appliance 1 according to some embodiments of the present application will be detailed hereinafter by referring to Fig. 1 to Fig. 39.

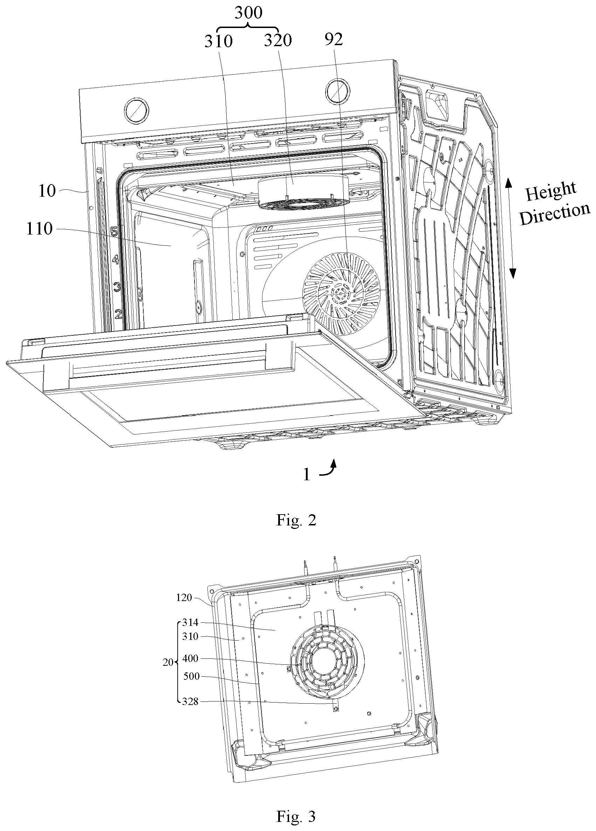

As shown in Fig. 1 and Fig. 2, according to some embodiments of the present application, a cooking appliance 1 comprises an appliance body 10 and a heating assembly 20.

The appliance body 10 is provided with a cooking cavity 110 therein.

The cooking cavity 110 comprises a placement region 112 therein;

The heating assembly 20 is located within the cooking cavity 110.

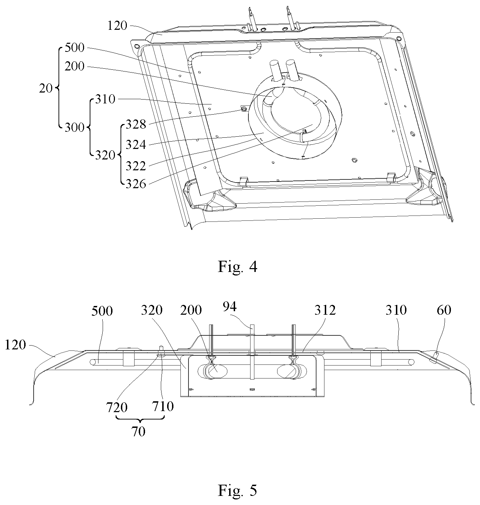

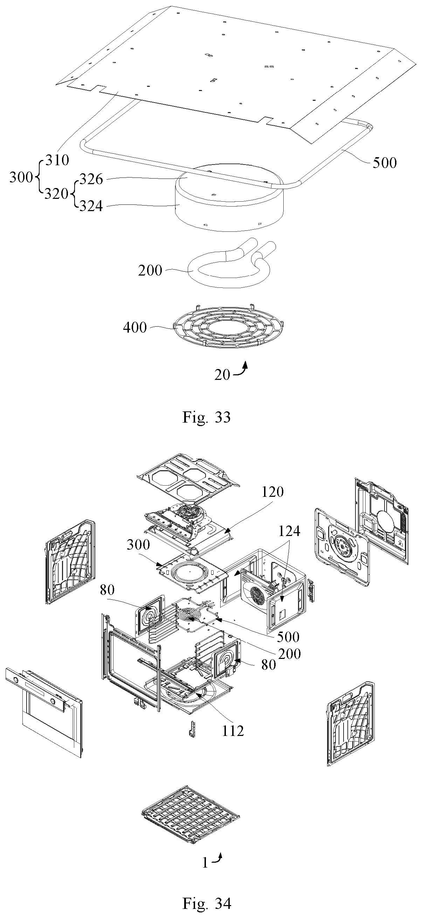

As shown in Fig. 4 and Fig. 33, the heating assembly 20 comprising a first heating element 200 and a reflecting portion 300.

The reflecting portion 300 is used for reflecting at least part of the thermal radiation emitted from the operation of the first heating element 200 to the placement region 112.

The present application provides the cooking appliance 1, and the cooking appliance 1 comprises the appliance body 10 and the heating assembly 20. The appliance body 10 is provided with the cooking cavity 110 therein, and the cooking cavity 110 comprises the placement region 112 therein, and food ingredients can be placed in the placement region 112.

The heating assembly 20 is located within the cooking cavity 110, and the heating assembly 20 comprises the first heating element 200 and the reflecting portion 300.The first heating element 200 operates to transfer heat by thermal radiation. The reflecting portion 300 reflects at least part of the thermal radiation emitted from the operation of the first heating element 200 to the placement region 112. That is, the reflecting portion 300 has a function of optimizing a heat radiation path of the first heating element 200, so as to reflect at least part of the radiation energy emitted by the first heating element 200 to the food ingredients in the placement region 112 and then reduce the radiation energy absorbed by a cavity wall of the cooking cavity 110, so that the thermal radiation emitted by the first heating element 200 is more intensively reflected to the food ingredients in the placement region 112, which can improve the heating efficiency of the food ingredients, and then increases energy utilization rate, enhances the energy efficiency of the cooking appliance 1, and further improves product service performance and market competitiveness.

It can be understood that the thermal radiation emitted by the first heating element 200 is more intensively reflected to the food ingredients in the placement region 112, and thus the radiation energy absorbed by the cavity wall of the cooking cavity 110 can be reduced, and the temperature rise of the outer surface of the appliance body 10 can be lowered. In this way, the touch feeling can be improved when the hand of a user touches the outer surface of the appliance body 10, which avoids the occurrence of a situation of scalding the user, and helps further improve the service performance of the cooking appliance 1.

Exemplarily, the reflecting portion 300 comprises at least one or a combination of a mirror aluminum reflecting portion, a mirror silver reflecting portion, and a mirror stainless steel reflecting portion, which are not listed here one by one.

Exemplarily, the first heating element 200 comprises at least one or a combination of a resistance wire heating element, a quartz tube heating element, a carbon fiber heating element, and a ceramic infrared heating element, which are not listed here one by one.

Exemplarily, the second heating element 500 comprises at least one or a combination of a resistance wire heating element, a quartz tube heating element, a carbon fiber heating element, and a ceramic infrared heating element, which are not listed here one by one.

As shown in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13, Fig. 14, Fig. 15, Fig. 16, Fig. 17, Fig. 18, Fig. 19, Fig. 20, Fig. 21, Fig. 22, Fig. 23, Fig. 24, Fig. 25, Fig. 26, Fig. 27, Fig. 29, Fig. 30, Fig. 31 and Fig. 32, according to some other embodiments of the present application, the cooking appliance 1 specifically comprises: the appliance body 10, the appliance body 10 being provided with the cooking cavity 110 therein; the heating assembly 20 located within the cooking cavity 110, the heating assembly 20 comprising the first heating element 200 and the reflecting portion 300, wherein, the reflecting portion 300 comprises the first reflecting plate 310 and a reflecting cover 320, the reflecting cover 320 is stacked on one side of the first reflecting plate 310, the reflecting cover 320 is connected to the cavity wall of the cooking cavity 110 through the first reflecting plate 310, a side of the reflecting cover 320 facing away from the first reflecting plate 310 comprises an opening 322, and the first heating element 200 is arranged within the reflecting cover 320; in the cavity walls of the cooking cavity 110, the cavity wall on the side immediately adjacent to the first reflecting plate 310 comprises a central region 114, and the first reflecting plate 310 covers the central region 114; along a direction from the reflecting cover 320 to the first reflecting plate 310, the first heating element 200 forms an orthographic projection on the cavity wall of the cooking cavity 110, and at least part of the projection of the first heating element 200 overlaps the central region 114; in the overlapping portion of the projection of the first heating element 200 and the central region 114, the contour line of the projection and the central region 114 enclose at least one closed region 115, the maximum area of the at least one closed region 115 is Ae, the area of the central region 114 is S0, and Ae≥0.1×S0.

The present application provides the cooking appliance 1, and the cooking appliance 1 comprises the appliance body 10 and the heating assembly 20. The appliance body 10 is provided with the cooking cavity 110 therein, and food ingredients 2 can be placed inside the cooking cavity 110.

The heating assembly 20 is located within the cooking cavity 110, and the heating assembly 20 comprises the first heating element 200 and the reflecting portion 300.The first heating element 200 operates to transfer heat by thermal radiation. The reflecting portion 300 reflects at least part of the thermal radiation emitted from the operation of the first heating element 200 to the food ingredients 2. That is, the reflecting portion 300 has a function of optimizing the heat radiation path of the first heating element 200, so as to reflect at least part of the radiation energy emitted by the first heating element 200 to the food ingredients 2 and then reduce the radiation energy absorbed by the cavity wall of the cooking cavity 110, so that the thermal radiation emitted by the first heating element 200 is more intensively reflected to the food ingredients 2, which can improve the heating efficiency of the food ingredients 2, and then increases energy utilization rate, enhances the energy efficiency of the cooking appliance 1, and further improves product service performance and market competitiveness.

It can be understood that the thermal radiation emitted by the first heating element 200 is more intensively reflected to the food ingredients 2, and thus the radiation energy absorbed by the cavity wall of the cooking cavity 110 can be reduced, and the temperature rise of the outer surface of the appliance body 10 can be lowered. In this way, the touch feeling can be improved when the hand of a user touches the outer surface of the appliance body 10, which avoids the occurrence of a situation of scalding the user, and helps further improve the service performance of the cooking appliance 1.

The reflecting portion 300 comprises the first reflecting plate 310, the first reflecting plate 310 has a function of separating the first heating element 200 from the cavity wall of the cooking cavity 110 immediately adjacent to the first heating element 200, and the first reflecting plate 310 can reflect at least part of the radiation energy emitted by the first heating element 200 to the food ingredients 2 and reduce the radiation energy absorbed by the cavity wall of the cooking cavity 110.

If the first reflecting plate 310 is not provided, the thermal radiation emitted by the first heating element 200 will directly irradiate the cavity walls of the cooking cavity 110, especially the cavity wall of the cooking cavity 110 immediately adjacent to the first heating element 200, and this will cause the temperature rise of the cavity wall of the cooking cavity 110 and further dissipate heat in the form of secondary radiation, thus reducing the heating efficiency of the cooking appliance 1; meanwhile, the cavity wall of the cooking cavity 110 will heat up after absorbing radiation and dissipate heat through the outer surface of the appliance body 10, and thus this will raise the temperature of the outer surface of the appliance body 10 and cause energy waste. Therefore, the structural arrangement of the present application can reduce the thermal load of the cavity wall of the cooking cavity 110, concentrate more heat on food ingredients 2, which can increase energy utilization rate, enhance the energy efficiency of the cooking appliance 1, and further improve product service performance and market competitiveness.

The reflecting portion 300 further comprises the reflecting cover 320, the side of the reflecting cover 320 facing away from the first reflecting plate 310 comprises an opening 322, the first heating element 200 is arranged within the reflecting cover 320, and at least part of the opening 322 is arranged opposite to the region where the food ingredients 2 are located. The structural arrangement of the reflecting cover 320 has a function of optimizing the heat radiation path of the first heating element 200, so as to reflect at least part of the radiation energy emitted by the first heating element 200 to the food ingredients 2 through the opening 322, and reduce the radiation energy absorbed by the cavity wall of the cooking cavity 110, and then the thermal radiation emitted by the first heating element 200 is more intensively reflected to the food ingredients 2.

If the reflecting cover 320 is not provided, the thermal radiation emitted by the first heating element 200 will directly irradiate the cavity wall of the cooking cavity 110, and this will cause the temperature rise of the cavity wall of the cooking cavity 110 and further dissipate heat in the form of secondary radiation and reduce the heating efficiency of the cooking appliance 1; meanwhile, the cavity wall of the cooking cavity 110 will heat up after absorbing radiation and dissipate heat through the outer surface of the appliance body 10, and this will raise the temperature of the outer surface of the appliance body 10 and cause energy waste. The present application reasonably arranges the structure of the cooking appliance 1, which can reduce the thermal load of the cavity wall of the cooking cavity 110, concentrate more heat on food ingredients 2, and then can increase energy utilization rate, enhance the energy efficiency of the cooking appliance 1, and further improve product service performance and market competitiveness.

In other words, the first reflecting plate 310 and the reflecting cover 320 cooperate with each other to jointly optimize the heat radiation path of the first heating element 200, so as to reflect at least part of the radiation energy emitted by the first heating element 200 to the food ingredients 2, and reduce the radiation energy absorbed by the cavity wall of the cooking cavity 110, and then the thermal radiation emitted by the first heating element 200 is more intensively reflected to the food ingredients 2.

Wherein, in the cavity walls of the cooking cavity 110, the cavity wall on the side immediately adjacent to the first reflecting plate 310 comprises the central region 114, and the first reflecting plate 310 covers the central region 114; that is, the first reflecting plate 310 is located between the reflecting cover 320 and the cavity wall of the cooking cavity 110 comprising the central region 114, and the first reflecting plate 310 can also cover the central region 114.

In the direction from the reflecting cover 320 to the first reflecting plate 310, the first heating element 200 forms an orthographic projection on the cavity wall of the cooking cavity 110, and at least part of the projection of the first heating element 200 overlaps the central region 114, so as to ensure that the thermal radiation emitted by the first heating element 200 is more intensively reflected to the food ingredients 2, and then ensure the cooking efficiency of the cooking appliance 1.

In the overlapping portion of the projection of the first heating element 200 and the central region 114, the contour line of the projection and the central region 114 enclose at least one closed region 115, the maximum area of the at least one closed region 115 is Ae, and the area of the central region 114 is S0, wherein, Ae≥0.1×S0. Ae is correlated with S0, and by defining the relationship between Ae and SO to satisfy Ae≥0.1×S0, both the cooking efficiency and energy consumption of the cooking appliance 1 are balanced, which can avoid increasing the energy consumption of the cooking appliance 1 due to an excessively large Ae, and can also prevent lowering the cooking efficiency of the cooking appliance 1 due to an excessively small Ae.

As shown in Fig. 1, Fig. 2, Fig. 3, Fig. 4, Fig. 5 and Fig. 6, according to some other embodiments of the present application, the cooking appliance 1 comprises: the appliance body 10, the appliance body 10 being provided with the cooking cavity 110 therein; the heating assembly 20 located within the cooking cavity 110, the heating assembly 20 comprising the first heating element 200 and the reflecting portion 300, wherein, the reflecting portion 300 comprises the first reflecting plate 310 and the reflecting cover 320, the reflecting cover 320 is stacked on one side of the first reflecting plate 310, the reflecting cover 320 is connected to the cavity wall of the cooking cavity 110 through the first reflecting plate 310, the side of the reflecting cover 320 facing away from the first reflecting plate 310 comprises the opening 322, and the first heating element 200 is arranged within the reflecting cover 320.

The cooking appliance 1 provided by the present application comprises the appliance body 10 and the heating assembly 20. The appliance body 10 is provided with the cooking cavity 110 therein, and food ingredients 2 can be placed inside the cooking cavity 110.

The heating assembly 20 is located within the cooking cavity 110, and the heating assembly 20 comprises the first heating element 200 and the reflecting portion 300.The first heating element 200 operates to transfer heat by thermal radiation. The reflecting portion 300 reflects at least part of the thermal radiation emitted from the operation of the first heating element 200 to the food ingredients 2. That is, the reflecting portion 300 has a function of optimizing the heat radiation path of the first heating element 200, so as to reflect at least part of the radiation energy emitted by the first heating element 200 to the food ingredients 2 and then reduce the radiation energy absorbed by the cavity wall of the cooking cavity 110, so that the thermal radiation emitted by the first heating element 200 is more intensively reflected to the food ingredients 2, which can improve the heating efficiency of the food ingredients 2, and then increases energy utilization rate, enhances the energy efficiency of the cooking appliance 1, and further improves product service performance and market competitiveness.

It can be understood that the thermal radiation emitted by the first heating element 200 is more intensively reflected to the food ingredients 2, and thus the radiation energy absorbed by the cavity wall of the cooking cavity 110 can be reduced, and the temperature rise of the outer surface of the appliance body 10 can be lowered. In this way, the touch feeling can be improved when the hand of a user touches the outer surface of the appliance body 10, which avoids the occurrence of a situation of scalding the user, and helps further improve the service performance of the cooking appliance 1.

The reflecting portion 300 comprises the first reflecting plate 310, the first reflecting plate 310 has a function of separating the first heating element 200 from the cavity wall of the cooking cavity 110 immediately adjacent to the first heating element 200, and the first reflecting plate 310 can reflect at least part of the radiation energy emitted by the first heating element 200 to the food ingredients 2 and reduce the radiation energy absorbed by the cavity wall of the cooking cavity 110.

If the first reflecting plate 310 is not provided, the thermal radiation emitted by the first heating element 200 will directly irradiate the cavity walls of the cooking cavity 110, especially the cavity wall of the cooking cavity 110 immediately adjacent to the first heating element 200, and this will cause the temperature rise of the cavity wall of the cooking cavity 110 and further dissipate heat in the form of secondary radiation, thus reducing the heating efficiency of the cooking appliance 1; meanwhile, the cavity wall of the cooking cavity 110 will heat up after absorbing radiation and dissipate heat through the outer surface of the appliance body 10, and thus this will raise the temperature of the outer surface of the appliance body 10 and cause energy waste. Therefore, the structural arrangement of the present application can reduce the thermal load of the cavity wall of the cooking cavity 110, concentrate more heat on the food ingredients 2, which can increase energy utilization rate, enhance the energy efficiency of the cooking appliance 1, and further improve product service performance and market competitiveness.

The reflecting portion 300 further comprises the reflecting cover 320, the side of the reflecting cover 320 facing away from the first reflecting plate 310 comprises the opening 322, the first heating element 200 is arranged within the reflecting cover 320, and at least part of the opening 322 is arranged opposite to the region where the food ingredients 2 are located. The structural arrangement of the reflecting cover 320 has a function of optimizing the heat radiation path of the first heating element 200, so as to reflect at least part of the radiation energy emitted by the first heating element 200 to the food ingredients 2 through the opening 322, and reduce the radiation energy absorbed by the cavity wall of the cooking cavity 110, and then the thermal radiation emitted by the first heating element 200 is more intensively reflected to the food ingredients 2.

If the reflecting cover 320 is not provided, the thermal radiation emitted by the first heating element 200 will directly irradiate the cavity wall of the cooking cavity 110, and this will cause the temperature rise of the cavity wall of the cooking cavity 110 and further dissipate heat in the form of secondary radiation and reduce the heating efficiency of the cooking appliance 1; meanwhile, the cavity wall of the cooking cavity 110 will heat up after absorbing radiation and dissipate heat through the outer surface of the appliance body 10, and this will raise the temperature of the outer surface of the appliance body 10 and cause energy waste. The present application reasonably arranges the structure of the cooking appliance 1, which can reduce the thermal load of the cavity wall of the cooking cavity 110, concentrate more heat on the food ingredients 2, and then can increase energy utilization rate, enhance the energy efficiency of the cooking appliance 1, and further improve product service performance and market competitiveness.

In other words, the first reflecting plate 310 and the reflecting cover 320 cooperate with each other to jointly optimize the heat radiation path of the first heating element 200, so as to reflect at least part of the radiation energy emitted by the first heating element 200 to the food ingredients 2, and reduce the radiation energy absorbed by the cavity wall of the cooking cavity 110, and then the thermal radiation emitted by the first heating element 200 is more intensively reflected to the food ingredients 2.

In some technical solutions, optionally, as shown in Fig. 3, Fig. 4, Fig. 5 and Fig. 33, the reflecting portion 300 comprises the first reflecting plate 310.

The first heating element 200 is disposed on a side of the first reflecting plate 310 facing the placement region 112.

In the embodiments, the structure of the reflecting portion 300 is defined.

The reflecting portion 300 comprises the first reflecting plate 310, and the first heating element 200 is arranged on the side of the first reflecting plate 310 facing the placement region 112. That is, the position relation among the first reflecting plate 310, the first heating element 200 and the placement region 112 are defined. The reflecting portion 310 has a function of separating the first heating element 200 from the cavity wall of the cooking cavity 110 immediately adjacent to the first heating element 200, and the first reflecting plate 310 can reflect at least part of the radiation energy emitted by the first heating element 200 to the food ingredients in the placement region 112 and reduce the radiation energy absorbed by the cavity wall of the cooking cavity 110.

If the first reflecting plate 310 is not provided, the thermal radiation emitted by the first heating element 200 will directly irradiate the cavity wall of the cooking cavity 110 immediately adjacent to the first heating element 200, especially the cavity wall immediately adjacent to the first heating element 200,and this will cause the temperature rise of the cavity wall of the cooking cavity 110 and further dissipate heat in the form of secondary radiation, thus reducing the heating efficiency of the cooking appliance 1; meanwhile, the cavity wall of the cooking cavity 110 will heat up after absorbing radiation and dissipate heat through the outer surface of the appliance body 10, and thus this will raise the temperature of the outer surface of the appliance body 10 and cause energy waste. Therefore, the present application reasonably disposes the cooperation structure of the first reflecting plate 310, the placement region 112 and the first heating element 200, can reduce the thermal load of the cavity wall of the cooking cavity 110, and concentrate more heat on food ingredients, which can increase energy utilization rate, enhance the energy efficiency of the cooking appliance 1, and further improve product service performance and market competitiveness.

In some embodiments, optionally, as shown in Fig. 2, Fig. 4, Fig. 5 and Fig. 33, the reflecting portion 300 comprises the first reflecting plate 320.

The reflecting cover 320 comprises the opening 322.

The first heating element 200 is disposed within the reflecting cover 320.

At least part of the opening 322 is disposed opposite to the placement region 112.

In the embodiments, the structure of the reflecting portion 300 is defined.

The reflecting portion 300 further comprises the reflecting cover 320, the reflecting cover 320 comprises the opening 322, the first heating element 200 is arranged within the reflecting cover 320, the first heating element 200 is disposed opposite to the opening 322, and at least part of the opening 322 is arranged opposite to the placement region 112. The structural arrangement of the reflecting cover 320 has a function of optimizing the heat radiation path of the first heating element 200, so as to reflect at least part of the radiation energy emitted by the first heating element 200 to the food ingredients in the placement region 112 through the opening 322, and reduce the radiation energy absorbed by the cavity wall of the cooking cavity 110, and then the thermal radiation emitted by the first heating element 200 is more intensively reflected to the food ingredients in the placement region 112.

If the reflecting cover 320 is not provided, the thermal radiation emitted by the first heating element 200 will directly irradiate the cavity walls of the cooking cavity 110, especially the cavity wall of the cooking cavity 110 immediately adjacent to the first heating element 200, and this will cause the temperature rise of the cavity wall of the cooking cavity 110 and further dissipate heat in the form of secondary radiation and reduce the heating efficiency of the cooking appliance 1; meanwhile, the cavity wall of the cooking cavity 110 will heat up after absorbing radiation and dissipate heat through the outer surface of the appliance body 10, and this will raise the temperature of the outer surface of the appliance body 10 and cause energy waste. The present application reasonably arranges the cooperation structure of the reflecting cover 320 and the first heating element 200, which can reduce the thermal load of the cavity wall of the cooking cavity 110, concentrate more heat on the food ingredients, and then can increase energy utilization rate, enhance the energy efficiency of the cooking appliance 1, and further improve product service performance and market competitiveness.

In some embodiments, optionally, as shown in Fig. 2, Fig. 4, Fig. 5 and Fig. 33, the reflecting portion 300 comprises the first reflecting plate 310 and the reflecting cover 320.

The first heating element 200 is disposed on a side of the first reflecting plate 310 facing the placement region 112.

The reflecting cover 320 comprises the opening 322.

The first heating element 200 is arranged within the reflecting cover 320.

At least part of the opening 322 is disposed opposite to the placement region 112.

In the embodiments, the structure of the reflecting portion 300 is defined.

The reflecting portion 300 comprises the first reflecting plate 310, andthe first heating element 200 is located on the side of the first reflecting plate 310 facing the placement region 112. That is, the position relation among the first reflecting plate 310, the first heating element 200 and the placement region 112 is defined. The first reflecting plate 310 has the function of separating the first heating element 200 from the cavity wall of the cooking cavity 110 immediately adjacent to the first heating element 200, and the first reflecting plate 310 can reflect at least part of the radiation energy emitted by the first heating element 200 to the food ingredient in the placement region 112 and reduce the radiation energy absorbed by the cavity wall of the cooking cavity 110.

The reflecting portion 300 comprises the reflecting cover 320, the reflecting cover 320 comprises the opening 322, the first heating element 200 is arranged within the reflecting cover 320, the first heating element 200 is arranged opposite to the opening 322, and at least part of the opening 322 is arranged opposite to the placement region 112. The structural arrangement of the reflecting cover 320 has the function of optimizing the heat radiation path of the first heating element 200, so as to reflect at least part of the radiation energy emitted by the first heating element 200 to the food ingredients in the placement region 112 through the opening 322, the radiation energy absorbed by the cavity wall of the cooking cavity 110 is reduced, and the thermal radiation emitted by the first heating element 200 is more intensively reflected to the food ingredients in the placement region 112.

In other words, the first reflecting plate 310 and the reflecting cover 320 cooperate with each other to jointly optimize the heat radiation path of the first heating element 200, so as to reflect at least part of the radiation energy emitted by the first heating element 200 to the food ingredients in the placement region 112, and reduce the radiation energy absorbed by the cavity wall of the cooking cavity 110, and then the thermal radiation emitted by the first heating element 200 is more intensively reflected to the food ingredients in the placement region 112.

In some embodiments, optionally, as shown in Fig. 4, when the reflecting portion 300 comprises the reflecting cover 320, the reflecting cover 320 comprises a surrounding plate 324, the surrounding plate 324 is arranged around the first heating element 200, and one end of the surrounding plate 324 encloses the opening 322.

In the embodiments, when the reflecting portion 300 comprises the reflecting cover 320, the structure of the reflecting cover 320 is detailed. Specifically, the reflecting cover 320 comprises the surrounding plate 324, the surrounding plate 324 is disposed around the first heating element 200, and one end of the surrounding plate 324 encloses the opening 322. In other words, the first heating element 200 is located within a region enclosed by the surrounding plate 324. The surrounding plate 324 can limit the heat radiation path of the first heating element 200 from multiple directions and multiple angles, so as to meet a use need of effectively reflecting at least part of the radiation energy emitted by the first heating element 200 through the opening 322 to the food ingredients in the placement region 112.

It can be understood that the surrounding plate 324 is a cylindrical structure.

In some embodiments, optionally, as shown in Fig. 4, the reflecting cover 320 further comprises a cover plate 326.

The cover plate 326 is arranged to cover the other end of the surrounding plate 324.

In the embodiments, the structure of the reflecting cover 320 is further defined. The reflecting cover 320 comprises the surrounding plate 324 and the cover plate 326. The surrounding plate 324 is disposed around the first heating element 200, one end of the surrounding plate 324 encloses the opening 322, and the cover plate 326 is disposed to cover the other end of the surrounding plate 324. That is, the surrounding plate 324 and the cover plate 326 enclose a groove-shaped structure with the opening 322. The surrounding plate 324 has a function of reflecting at least part of the radiation energy emitted by the first heating element 200 toward the opening 322, so as to further reduce the heat radiated to the cavity wall of the cooking cavity 110 immediately adjacent to the first heating element 200, then lower the temperature rise of the cavity wall of the cooking cavity 110 immediately adjacent to the first heating element 200, reduce ineffective heat dissipation, and provide structural support for improving the energy efficiency of the cooking appliance 1.

In some embodiments, optionally, along the height direction of the cooking appliance 1, the height of the surrounding plate 324 is greater than or equal to 1cm.

In the embodiments, the structure of the surrounding plate 324 is further defined, so that along the height direction of the cooking appliance 1, the height of the surrounding plate 324 is greater than or equal to 1cm. By defining the height of the surrounding plate 324, the effectiveness of limiting the heat radiation path of the first heating element 200 is ensured.

If the height of the surrounding plate 324 is less than 1cm, the constraining effect of the surrounding plate 324 on the heat radiation range of the first heating element 200 is relatively poor, and then less heat is reflected by the surrounding plate 324 to the placement region 112; the energy inside the cooking cavity 110 is dispersed, and most of the energy is still dissipated as ineffective heat to the surrounding environment through the appliance body 10, leading to low energy efficiency of the cooking appliance 1.

Exemplarily, the height of the surrounding plate 324 comprises 1.5cm, 2cm, 2.6cm, 3cm, 3.2cm, etc., which are not listed here one by one.

In some embodiments, optionally, a cross section of the appliance body 10 and the surrounding plate 324 are taken in a direction perpendicular to the height direction of the cooking appliance 1. In the cross section, the area of a region enclosed by the contour line of the cavity wall of the cooking cavity 110 is S1, and the area of a region enclosed by the inner contour line of the surrounding plate 324 is S2, and S2/S1≤50%.

In the embodiments, the cooperation structure of the surrounding plate 324 and the appliance body 10 is further defined.

A cross section of the appliance body 10 and the surrounding plate 324 is taken along the direction perpendicular to the height direction of the cooking appliance 1. In the cross section, the area of the region enclosed by the contour line of the cavity wall of the cooking cavity 110 is denoted as S1, and the area of the region enclosed by the inner contour line of the surrounding plate 324 is denoted as S2. Wherein, the relationship between S1 and S2 satisfies: S2/S1 ≤ 50%. This configuration ensures the effectiveness and feasibility of the reflecting portion 300 in optimizing the heat radiation path of the first heating element 200, and can reduce the amount of materials input for the reflecting portion 300 and lower the occupation ratio of the internal space of the cooking cavity 110 at the same time.

Exemplarily, S2/S1 = 45%, S2/S1 = 40%, S2/S1 = 36%, S2/S1 = 30%, S2/S1 = 25%, S2/S1 = 20%, S2/S1 = 15%, S2/S1 = 12%, S2/S1 = 10%, etc., which are not listed here one by one.

In some embodiments, optionally, a cross section of the surrounding plate 324 is taken along a direction perpendicular to the height direction of the cooking appliance 1. In the cross section, the inner contour line of the surrounding plate 324 comprises at least one or a combination of a straight line, a curved line and a broken line.

In the embodiments, the shape of the surrounding plate 324 is further defined.

A cross section of the surrounding plate 324 is taken along the direction perpendicular to the height direction of the cooking appliance 1. In the cross section, the inner contour line of the surrounding plate 324 comprises at least one or a combination of a straight line, a curved line, and a broken line. For example, the shape enclosed by the inner contour line of the surrounding plate 324 comprises an ellipse, a polygon, a special shape, etc., which are not listed here one by one. Wherein, the "special shape" refers to a structure with an irregular shape. For instance, the surrounding plate 324 may be a hollow cylindrical plate; for instance, the surrounding plate 324 may be a hollow square plate; for instance, the surrounding plate 324 may be a hollow frustum-shaped plate.

The configuration can meet a use need of limiting the heat radiation path of the first heating element 200 from multiple directions and multiple angles by the surrounding plate 324, and can meet the use need of effectively reflecting at least part of the radiation energy emitted by the first heating element 200 through the surrounding plate 324 to the food ingredients in the placement region 112.

In some embodiments, optionally, as shown in Fig. 3 and Fig. 33, the heating assembly 20 further comprises a protective net 400.

The protective net 400 is disposed at the opening 322.

In the embodiments, the structure of the heating assembly 20 is further defined. When the reflecting portion 300 comprises the reflecting cover 320, the heating assembly 20 further comprises the protective net 400, the protective net 400 is disposed at the opening 322, and the protective net 400 has a function of protecting the first heating element 200 located within the reflecting cover 320. It can be understood that the protective net 400 has a plurality of through-holes, and thus the protective net 400 does not hinder energy radiation.

It can be understood that the protective net 400 has a plurality of through-holes, and thus the protective net 400 does not hinder energy radiation.

In some embodiments, optionally, as shown in Fig. 5, when the reflecting portion 300 comprises the first reflecting plate 310, the first reflecting plate 310 is connected to the cavity wall of the cooking cavity 110 through a first connecting element 60.

A gap is provided between a side of the first reflecting plate 310 facing away from the first heating element 200 and the cavity wall of the cooking cavity 110.

In the embodiments, the cooperation structure of the reflecting portion 300 and the appliance body 10 is further defined.

When the reflecting portion 300 comprises the first reflecting plate 310, the cooking appliance 1 further comprises the first connecting element 60, the first reflecting plate 310 is connected to the cavity wall of the cooking cavity 110 through the first connecting element 60. The gap is provided between the side of the first reflecting plate 310 facing away from the first heating element 200 and the cavity wall of the cooking cavity 110. The gap between the first reflecting plate 310 and the cavity wall of the cooking cavity 110 opposite to it has a heat insulation function, which reduces the amount of heat radiated to the outer surface of the appliance body 10, thus reflecting most of the heat to the food ingredients in the placement region 112, and reducing heat loss. This improves the heating efficiency of the food ingredients, and thus enhances energy utilization rate and improves the energy efficiency of the cooking appliance 1.

Exemplarily, the first reflecting plate 310, the first connecting element 60, and the cavity wall of the cooking cavity 110 enclose a sealed cavity.

Exemplarily, the first reflecting plate 310, the first connecting element 60, and the cavity wall of the cooking cavity 110 enclose a non-sealed cavity.

Exemplarily, the value of the gap between the side of the first reflecting plate 310 facing away from the first heating element 200 and the cavity wall of the cooking cavity 110 comprises 1mm, 1.5mm, 2mm, 2.5mm, 3mm, 4mm, etc., which are not listed here one by one.

Exemplarily, the first connecting element 60 comprises a bolt, a screw, a rivet, etc., which are listed here one by one.

In some embodiments, optionally, when the reflecting portion 300 comprises the reflecting cover 320 and the first reflecting plate 310, the reflecting cover 320 is located on the side of the first reflecting plate 310 facing the placement region 112.

The reflecting cover 320 is connected to the cavity wall of the cooking cavity 110 through the first reflecting plate 310.

In the embodiments, the structure of the reflecting portion 300 is further defined.

When the reflecting portion 300 comprises the reflecting cover 320 and the first reflecting plate 310, the reflecting cover 320 is located on the side of the first reflecting plate 310 facing the placement region 112.The reflecting cover 320 is connected to the cavity wall of the cooking cavity 110 through the first reflecting plate 310. That is, the cooperation structure of the reflecting cover 320, the first reflecting plate 310, and the appliance body 10 is defined, and the reflecting cover 320 is indirectly connected to the cavity wall of the cooking cavity 110 via the first reflecting plate 310.

The reflecting cover 320 has a function of optimizing the heat radiation path of the first heating element 200, the first reflecting plate 310 has the function of separating the reflecting cover 320 from the cavity wall of the cooking cavity 110 that is immediately adjacent to the reflecting cover 320, and the first reflecting plate 310 can reflect at least part of the radiation energy emitted by the first heating element 200 to the food ingredients in the placement region 112 and reduce the radiation energy absorbed by the cavity wall of the cooking cavity 110.

In other words, the first reflecting plate 310 and the reflecting cover 320 cooperate with each other to jointly optimize the heat radiation path of the first heating element 200, so as to reflect at least part of the radiation energy emitted by the first heating element 200 to the food ingredients of the placement region 112, and reduce the radiation energy absorbed by the cavity wall of the cooking cavity 110, and then the thermal radiation emitted by the first heating element 200 is more intensively reflected to the food ingredients in the placement region 112.

In some embodiments, optionally, as shown in Fig. 5, the reflecting cover 320 is connected to the first reflecting plate 310 through a second connecting element 70.

A gap is provided between the reflecting cover 320 and the first reflecting plate 310.

In the embodiments, the cooperation structure of the reflecting cover 320 and the first reflecting plate 310 is further defined.

The cooking appliance 1 further comprises the second connecting element 70, the reflecting cover 320 and the first reflecting plate 310 are connected via the second connecting element 70, and there is a gap between the reflecting cover 320 and the first reflecting plate 310.

The gap between the reflecting cover 320 and the first reflecting plate 310 has the heat insulation function, and the gap between the reflecting cover 320 and the first reflecting plate 310 can further reduce the amount of heat radiated to the outer surface of the appliance body 10, so that most of the heat is reflected to the food ingredients in the placement region 112, thus reducing heat loss. This can improve the heating efficiency of the food ingredients, and thus enhance energy utilization rate and the energy efficiency of the cooking appliance 1.

Exemplarily, the second connecting element 70, the reflecting cover 320 and the first reflecting plate 310 enclose a sealed cavity.

Exemplarily, the second connecting element 70, the reflecting cover 320 and the first reflecting plate 310 enclose a non-sealed cavity.

Exemplarily, the value of the gap between the reflecting cover 320 and the first reflecting plate 310 comprises 1mm, 1.5mm, 2mm, 2.5mm, 3mm, 4mm, etc., which are not listed here one by one.

In some embodiments, optionally, as shown in Fig. 3 and Fig. 4,an ear plate 328 is arranged on the peripheral side of the reflecting cover 320.

The second connecting element 70 comprises a spacer plate 710 and a fastener 720.

The spacer plate 710 is disposed between the ear plate 328 and the first reflecting plate 310.

The fastener 720 passes through the ear plate 328 and the first reflecting plate 310.

In the embodiments, the ear plate 328 is provided on the peripheral side of the reflecting cover 320, and the ear plate 328 is used for cooperative connection with the first reflecting plate 310.

The second connecting element 70 comprises the spacer plate 710, and the spacer plate 710 is located between the ear plate 328 and the first reflecting plate 310. The spacer plate 710 has a function of elevating the reflecting cover 320, so as to meet a use need of providing a gap between the reflecting cover 320 and the first reflecting plate 310. The second connecting element 70 also comprises the fastener 720, and the fastener 70 passes through the ear plate 328 and the first reflecting plate 310, and is used for assembling the ear plate 328 and the first reflecting plate 310 together.

Exemplarily, the fastener 720 comprises a screw, a bolt, a rivet and the like, which are not listed here one by one.

Exemplarily, there is one ear plate 328 and one second connecting element 70.

Exemplarily, there are multiple ear plates 328 and multiple second connecting elements 70, and each ear plate 328 is connected to the first reflecting plate 310 through at least one second connecting element 70.

In some embodiments, optionally, as shown in Fig. 5, a first portion of the first reflecting plate 310 is recessed in a direction facing away from the first heating element 200 to form a first recessed portion 312; the reflecting cover 320 is opposite to and spaced apart from the groove bottom of the first recessed portion 312, and the part of the first reflecting plate 310 located on the peripheral side of the first recessed portion 312 is connected with the reflecting cover 320.

In the embodiments, the cooperation structure of the first reflecting plate 310 and the reflecting cover 320 is further defined. The first portion of the first reflecting plate 310 is recessed in a direction facing away from the first heating element 200 to form the first recessed portion 312. The reflecting cover 320 is disposed opposite to and spaced apart from the groove bottom of the first recessed portion 312, so as to increase the gap between the reflecting cover 320 and the first reflecting plate 310, enhance the heat insulation effect, and further reduce the amount of heat radiated to the outer surface of the appliance body 10, so that most of the heat is reflected to the food ingredients in the placement region 112.

Wherein, the part of the first reflecting plate 310 located on the peripheral side of the first recessed portion 312 is connected to the reflecting cover 320. In other words, the part of the first reflecting plate 310 located on the peripheral side of the first recessed portion 312 is connected with the reflecting cover 320 through the second connecting element 70.

In some embodiments, optionally, as shown in Fig. 3, Fig. 4, Fig. 5 and Fig. 33, the heating assembly 20 further comprises a second heating element 500. The second heating element 500 and the reflecting cover 320 are disposed on the same side of the first reflecting plate 310, and the second heating element 500 is arranged around the reflecting cover 320.

In the embodiments, the structure of the heating assembly 20 is further defined.

The heating assembly 20 further comprises the second heating element 500, and the second heating element 500 and the reflecting cover 320 are located on the same side of the first reflecting plate 310. Exemplarily, the second heating element 500 is connected to the first reflecting plate 310.

At least one of the first heating element 200 and the second heating element 500 can be controlled to operate according to actual use needs.

The second heating element 500 is located on the peripheral side of the reflecting cover 320. The second heating element 500 is arranged around the reflecting cover 320. For example, when it is necessary to increase the heat output of the heating assembly 20 per unit time, the first heating element 200 and the second heating element 500 can be controlled to operate simultaneously.

The second heating element 500 is arranged around the reflecting cover 320. The second heating element 500 operates to transfer heat by means of thermal radiation. The arrangement position of the second heating element 500 can ensure the uniformity of heat radiation, help enhance the uniformity of heating the food ingredients, guarantee the uniformity of heating different positions of the food ingredients, and facilitate improving the cooking effect of the food ingredients.

In some embodiments, optionally, the first reflecting plate 310 covers the second heating element 500.

A distance from the second heating element 500 to the outer edge of the first reflecting plate 310 is less than a distance from the second heating element 500 to the reflecting cover 320.

In the embodiments, the cooperation structure of the second heating element 500, the first reflecting plate 310 and the reflecting cover 320 is further defined.

The first reflecting plate 310 covers the second heating element 500, and the first reflecting plate 310 can further reflect at least part of the thermal radiation emitted from the operation of the second heating element 500 to the placement region 112. The first reflecting plate 310 also has the function of optimizing the heat radiation path of the second heating element 500, so as to reflect at least part of the radiation energy emitted by the second heating element 500 to the food ingredients in the placement region 112, and reduce the radiation energy absorbed by the cavity wall of the cooking cavity 110, so that the thermal radiation emitted by the second heating element 500 is more intensively reflected to the food ingredient in the placement region 112.

Wherein, the distance from the second heating element 500 to the outer edge of the first reflecting plate 310 is less than the distance from the second heating element 500 to the reflecting cover 320. This arrangement is conducive to increasing the extending length of the second heating element 500, and can increase the heat radiation when the second heating element 500 is in operation, and helps shorten the heating time of the cooking appliance 1.

In some embodiments, optionally, as shown in Fig. 3, a second portion of the first reflecting plate 310 is recessed in a direction facing away from the placement region 112 to form a second recessed portion 314, and the second heating element 500, the reflecting cover 320 and the first heating element 200 are all located at the second recessed portion 314.

In the embodiments, the structure of the first reflecting plate 310 is further defined.

The second portion of the first reflecting plate 310 is recessed in a direction facing away from the placement region 112 to form the second recessed portion 314. The second heating element 500, the reflecting cover 320 and the first heating element 200 are all disposed at the second recessed portion 314. This arrangement helps the first reflecting plate 310 to reflect thermal radiation more intensively to the food ingredients in the placement region 112, helps improve energy utilization rate, and helps improve the energy efficiency of the product.

In some embodiments, optionally, the heating assembly 20 and the placement region 112 are located on two opposite sides of the cooking cavity 110.

In the embodiments, the positions of the heating assembly 20 and the placement region 112 are defined. The heating assembly 20 and the placement region 112 are located on two opposite sides of the cooking cavity 110. For example, the placement region 112 is located at the bottom of the cooking cavity 110, and the heating assembly 20 is located at the top of the cooking cavity 110.

This arrangement defines the relative position of the heating assembly 20 and the placement region 112, and provides structural support for ensuring effectively reflecting thermal radiation to the placement region 112.

Exemplarily, as shown in Fig. 3, Fig. 4 and Fig. 5, the first reflecting plate 310 of the heating assembly 20 is connected to a top plate 120 of the appliance body 10.

In some embodiments, optionally, the cooking appliance 1 further comprises a second reflecting plate 80. The second reflecting plate 80 and the heating assembly 20 are disposed on two adjacent sides of the cooking cavity 110, and the second reflecting plate 80 is used for reflecting at least part of the thermal radiation emitted from the operation of the first heating element 200 to the placement region 112.

In the embodiments, the structure of the cooking appliance 1 is further defined. The cooking appliance 1 further comprises the second reflecting plate 80, and the second reflecting plate 80 and the heating assembly 20 are located on two adjacent sides of the cooking cavity 110. The second reflecting plate 80 has the function of reflecting at least part of the thermal radiation emitted during the operation of the first heating element 200 to the placement region 112. That is, the second reflecting plate 80 cooperates with the reflecting portion 300 to reflect thermal radiation to the placement region 112 from multiple positions and multiple angles, which can further reduce the radiation energy absorbed by the cavity wall of the cooking cavity 110. Therefore, the temperature rise of the outer surface of the appliance body 10 can be reduced. In this way, this can improve the touch feeling when a user's hand touches the outer surface of the appliance body 10, avoid scalding the user, and further enhance the service performance of the cooking appliance 1.

Exemplarily, the second reflecting plate 80 comprises at least one or a combination of a mirror aluminum reflecting plate, a mirror silver reflecting plate and a mirror stainless steel reflecting plate, which are not listed here one by one.

Exemplarily, the cooking appliance 1 comprises an oven, a microwave steam oven, a steam oven and the like, which are not listed here one by one.

Exemplarily, the cooking appliance 1 of the present application comprises the appliance body 10 and the heating assembly 20. The heating assembly 20 comprises the first heating element 200 and the reflecting portion 300. The reflecting portion 300 can constrain the thermal radiation range of the first heating element 200 and enhance the cooking effect of the first heating element 200.

Exemplarily, the cooking cavity 110 is disposed in the appliance body 10, the reflecting portion 300 comprises the first reflecting plate 310 and the reflecting cover 320, and the heating assembly 20 further comprises the second heating element 500.

It is taken as an example that the first reflecting plate 310 is an aluminum plate and the cooking appliance 1 is an oven, and the aluminum plate is disposed within the cooking cavity 110 and located on the upper side of the cooking cavity 110. The aluminum plate is used for reducing heat radiated to the upper cavity wall of the cooking cavity 110 by the first heating element 200 and the second heating element 500. The reflecting cover 320 is arranged below the aluminum plate, the opening 322 of the reflecting cover 320 faces downward, and the reflecting cover 320 is used for constraining the heat radiation range of the first heating element 200. The height of the reflecting cover 320 in the height direction of the cooking appliance 1 is greater than or equal to 1cm.

The first heating element 200 is disposed within the reflecting cover 320. The heating assembly 20 further comprises the protective net 400. The protective net 400 is arranged at the lower edge of the reflecting cover 320 and disposed at the opening 322 of the reflecting cover 320, and the protective net 400 is used for protecting the first heating element 200.

The second heating element 500 is disposed below the aluminum plate.

The present application reasonably arranges the structure of the oven. The power consumption in a single energy efficiency test is reduced by 50%, the energy efficiency of the oven is upgraded to Class A, the average temperature of the cavity wall of the cooking cavity 110 is decreased by 66°C, the overall heat leakage of the oven is reduced by 67%, and the heat storage capacity is decreased by 45%.

Exemplarily, the first reflecting plate 310 comprises a metal plate, for example, the metal plate comprises a mirror aluminum plate. The first reflecting plate 310 covers the first heating element 200 and the second heating element 500.

Exemplarily, the first reflecting plate 310 is a flat plate, or the first reflecting plate 310 is a plate with any protruding shape, or the first reflecting plate 310 is a plate with any bent shape.

Exemplarily, the first heating element 200 comprises any heat generating element capable of generating heat, such as a metal tube, a halogen tube, an infrared tube and a graphene tube.

Exemplarily, the second heating element 500 comprises any heat generating element capable of generating heat, such as a metal tube, a halogen tube, an infrared tube, and a graphene tube.

Exemplarily, the reflecting cover 320 comprises the surrounding plate 324, and the reflecting cover 320 is a hollow structure. For example, the reflecting cover 320 is a hollow cylindrical structure, a hollow square structure, or a hollow frustum-shaped structure.

Exemplarily, a cross section of the appliance body 10 and the surrounding plate 324 is taken along the direction perpendicular to the height direction of the cooking appliance 1. In the cross section, the area of the region enclosed by the contour line of the cavity wall of the cooking cavity 110 is S1, and the area of the region enclosed by the inner contour line of the surrounding plate 324 is S2, where S2/S1≤50%. For example, S2/S1=15%.

Exemplarily, the heating assembly 20 comprises the reflecting cover 320, the first reflecting plate 310 and the first heating element 200. Alternatively, the heating assembly 20 comprises the reflecting cover 320 and the first heating element 200. Alternatively, the heating assembly 20 comprises the first reflecting plate 310 and the first heating element 200. The heating assembly 20 can be used independently, and can also be used in cooperation with the second heating element 500 and other constituent components of the cooking appliance 1 to meet the use needs of different cooking modes. Other constituent components of the cooking appliance 1 comprise a lower heat generating element, a rear heat generating element, a rear hot air fan and the like, which are not listed here one by one. For example, the heating assembly 20 is combined with the rear hot air fan; for example, the heating assembly 20 is combined with the second heating element 500; for example, the heating assembly 20, the second heating element 500 and the rear hot air fan are combined; for example, the heating assembly 20 is combined with the lower heat generating element; for example, the heating assembly 20, the lower heat generating element and the rear hot air fan are combined; for example, the heating assembly 20 is combined with the rear heat generating element; for example, the heating assembly 20, the rear heat generating element and the rear hot air fan are combined.

In the related art, an oven is provided with a cooking cavity therein, and the cooking cavity is only provided with a heat generating tube.

As shown in Table 1, compared with the oven in the related art, the power consumption of the oven of the present application in a single energy efficiency test is reduced by 50%, the energy efficiency of the oven is upgraded to the new energy efficiency Class A, the average temperature of the cavity wall of the cooking cavity 110 of the oven is decreased by 66°C, the overall heat leakage of the oven is reduced by 67%, and the heat storage capacity is reduced by 45%.

**Table 1**

| | Oven of related art | Oven of the present application | Reduced amount |
|---|---|---|---|
| Energy efficiency | Class F | Class A | / |
| Energy consumption(kWh) | 0.928 | 0.456 | 50% |
| Heat leakage(kWh) | 0.354 | 0.113 | 67% |
| Heat storage(kWh) | 0.327 | 0.180 | 45% |
| Average temperature of cavity wall of cooking cavity | 196 | 130 | 34% |
| Average temperature of outer surface of oven (°C) | 93 | 60 | 35% |

Wherein, the calculation formula of Energy Efficiency Index (EEI) is as follows: EEI=EC/SEC. EC denotes energy consumption with the unit of kWh, and EC is the power consumption consumed in a single standard energy efficiency test, specifically referring to the electric energy consumed when the temperature rise of the standard energy efficiency test brick reaches 55K.

SEC represents standard energy consumption with the unit of kWh, and the SEC is a constant of 0.88. The initial temperature of the energy efficiency test brick is 5°C±2°C, and the initial weight thereof is 2000g±50g. The energy efficiency test brick is placed in the placement region 112 of the oven, for example, it is placed at the geometric center of the oven, and a thermocouple is used to measure the central temperature of the energy efficiency test brick. The power consumption required for enabling the central temperature rise of the energy efficiency test brick to reach 55K is tested when the oven is set at three different temperatures of 160°C, 190°C and 220°C. The final energy efficiency value is the linear regression value of the three temperature gears.

The complete test procedure for a single temperature gear is as follows:
Phase 1: Two thermocouples are placed in the cooking cavity 110. One thermocouple is placed on the grid shelf at the center of the cooking cavity 110, and an observed temperature is denoted as Tc; and the other thermocouple is placed beside an oven thermostat, and an observed temperature is denoted as T0. The energy efficiency test brick is placed at the central position of the oven, and an additional thermocouple is used to measure its temperature, and an observed temperature is denoted as Tbrick. Phase 1 starts at t0, and a set temperature is Tk, and the Phase 1 ends at tk (at the moment, the temperature rise of Tbrick reaches 55K). The energy consumption between t0 and tk is measured, and the oven is cooled down. The oven shall be turned off and cooled between Phase 1 and Phase 2. In this case, the oven cannot identify whether it is under test conditions, and thus cannot automatically re-adjust the temperature to meet the requirements of Phase 2.
Phase 2: Except for the arrangement of the energy efficiency test brick, the Phase 2 must follow the same test settings (that is, the thermocouple positions, the set temperatures and the heating function remain unchanged) as Phase 1; the duration of Phase 2 is the same as that of Phase 1 (i.e.,tk); a central temperature Tc of the cooking cavity 110 and the temperature T0 beside the thermostat are measured. Parameters such as Tc and T0 observed during the test are used to calculate other index parameters of the energy efficiency test.

As shown in Fig. 1, Fig. 2 and Fig. 5, the cooking appliance 1 further comprises a hot air fan 92 disposed at the back of the cooking cavity 110 and a pipe clamp 94 arranged at the top of the cooking cavity 110, and the pipe clamp 94 is used for fixing the first heating element 200.

In some technical solutions, optionally, the height of the surrounding plate is greater than or equal to 1.5cm, and less than or equal to 5cm.

In the technical solutions, the height of the surrounding plate is further detailed, and the height of the surrounding plate is greater than or equal to 1.5cm and less than or equal to 5cm, which can ensure the effectiveness of the heat radiation path of the first heating element.

If the height of the surrounding plate is less than 1.5cm, the surrounding plate presents a poor constraining effect on the heat radiation range of the first heating element, less heat is reflected to the food ingredients by the surrounding plate, energy inside the cooking cavity is dispersed, and most of the energy is still dissipated into the surrounding environment as ineffective heat through the appliance body, resulting in low energy efficiency of the cooking appliance.

If the height of the surrounding plate is greater than 5cm, the occupation rate of the internal space of the cooking cavity will be increased, thereby occupying the storage space for food ingredients.

Exemplarily, the values of the spacing between the inner surface of the protective sleeve and the outer surface of the first heating element comprise 0.2mm, 0.5mm, 1mm, 1.2mm, 1.5mm, 2mm, 3mm, 4mm and 5mm.

Exemplarily, the structure of the protective sleeve is also applicable to protect the second heating element, which will not be repeated herein.

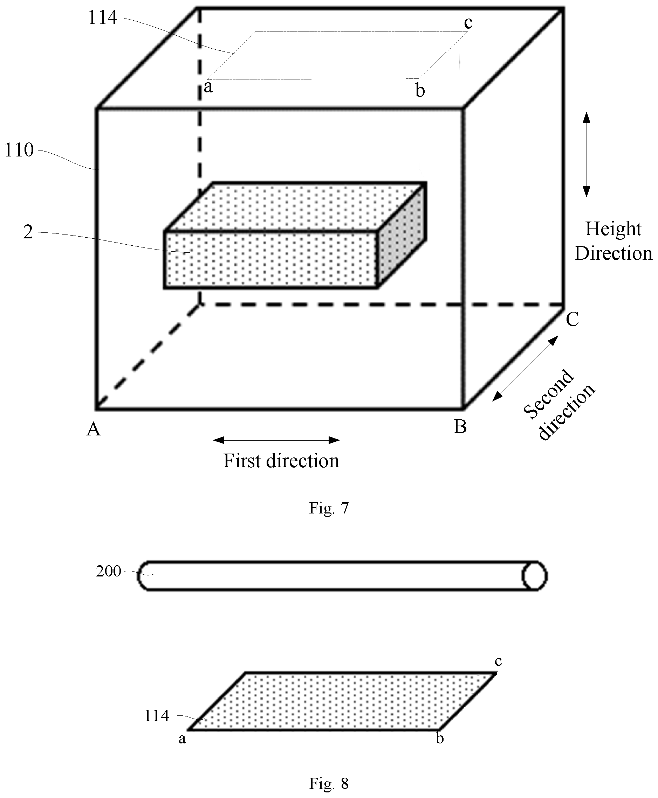

In some embodiments, optionally, as shown in Fig. 7, Fig. 8, Fig. 9, Fig. 10, Fig. 11, Fig. 12, Fig. 13, Fig. 14, Fig. 15, Fig. 16, Fig. 17, Fig. 18, Fig. 19, Fig. 20, Fig. 21, Fig. 22, Fig. 23, Fig. 24, Fig. 25, Fig. 26, Fig. 27, Fig. 29, Fig. 30, Fig. 31 and Fig. 32,in the cavity walls of the cooking cavity 110, the cavity wall on the side immediately adjacent to the first reflecting plate 310 comprises the central region 114, and the first reflecting plate 310 covers the central region 114; along a direction from the reflecting cover 320 to the first reflecting plate 310, the first heating element 200 forms an orthographic projection on the cavity wall of the cooking cavity 110, and at least part of the projection of the first heating element 200 overlaps the central region 114; in the overlapping portion of the projection of the first heating element 200 and the central region 114, the contour line of the projection and the central region 114 enclose at least one closed region 115, the maximum area of the at least one closed region 115 is Ae, the area of the central region 114 is S0, and Ae≥0.1×S0.

In the embodiments, in the cavity walls of the cooking cavity 110, the cavity wall on the side immediately adjacent to the first reflecting plate 310 comprises the central region 114, and the first reflecting plate 310 covers the central region 114; that is, the first reflecting plate 310 is located between the reflecting cover 320 and the cavity wall of the cooking cavity 110 comprising the central region 114, and the first reflecting plate 310 can also cover the central region 114.

Along the direction from the reflecting cover 320 to the first reflecting plate 310, the first heating element 200 forms an orthographic projection on the cavity wall of the cooking cavity 110, and at least part of the projection of the first heating element 200 overlaps the central region 114, so as to ensure that the thermal radiation emitted by the first heating element 200 is more intensively reflected to the food ingredients 2 and then ensure the cooking efficiency of the cooking appliance 1.

In the overlapping portion of the projection of the first heating element 200 and the central region 114, the contour line of the projection and the central region 114 enclose at least one closed region 115, the maximum area of the at least one closed region 115 is Ae, and the area of the central region 114 is S0, wherein, Ae≥0.1×S0. Ae is correlated with S0, and by defining the relationship between Ae and S0 to satisfy Ae≥0.1×S0, both the cooking efficiency and energy consumption of the cooking appliance 1 are balanced, which can avoid increasing the energy consumption of the cooking appliance 1 due to an excessively large Ae, and can also prevent lowering the cooking efficiency of the cooking appliance 1 due to an excessively small Ae.

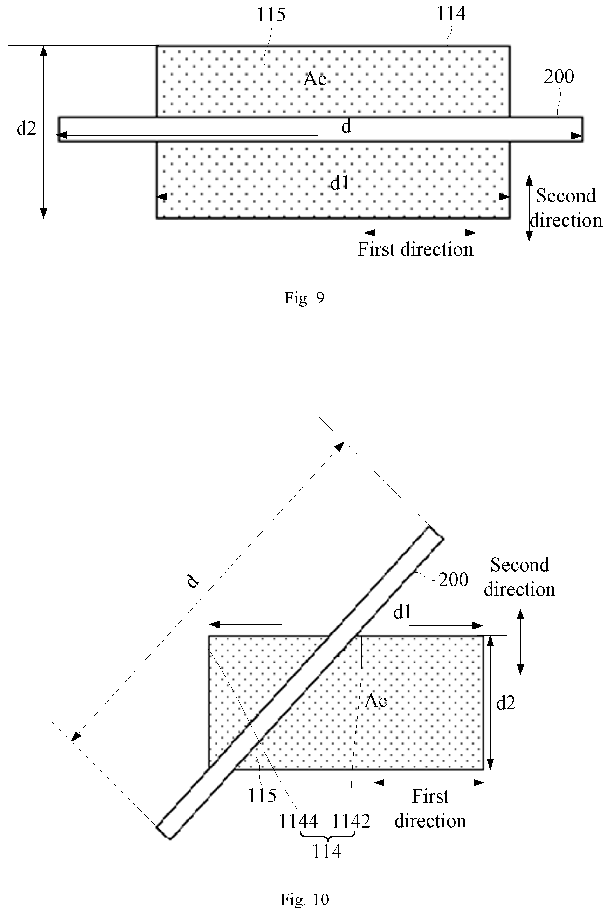

In some embodiments, optionally, as shown in Fig. 9, the outer edge of the central region 114 comprises a first side 1142 and a second side 1144 arranged adjacent to each other, the length of the first side 1142 is d1, and the length of the second side 1144 is d2; wherein, 150mm≤d1≤450mm, 80mm≤d2≤200mm, and d2<d1.

In the embodiments, the structure of the central region 114 is further detailed, so that the outer edge of the central region 114 comprises the first side 1142 and the second side 1144, and the first side 1142 and the second side 1144 are disposed adjacent to each other. Wherein, the length of the first side 1142 is denoted as d1, and the length of the second side 1144 is denoted as d2. The relationship between d1 and d2 satisfies: 150mm≤d1≤450mm, 80mm≤d2≤200mm, d2<d1. The structure of the central region 114 is correlated with the structural arrangement of the first heating element 200. By defining the relationship between d1 and d2, the arrangement position of the first heating element 200 can be indirectly defined, so as to indirectly define the position relationship between the first heating element 200 and the food ingredients 2, which provides structural support for balancing the cooking efficiency and energy consumption of the cooking appliance 1.

Exemplarily, the values of d1 comprise 160mm, 170mm, 180mm, 190mm, 200mm, 210smm, 220mm, 230mm, 240mm, 250mm, 260mm, 270mm, 280mm, 290mm, 300mm, 310mm, 320mm, 330mm, 340mm, 350mm, 360mm, 370mm, 380mm, 390mm, 410mm, 420mm, 430mm and 440mm, etc., which are not listed here one by one.

Exemplarily, the values of d2 comprise 90mm, 95mm, 100mm, 105mm, 110mm, 115mm, 120mm, 125mm, 130mm, 135mm, 140mm, 145mm, 150mm, 155mm, 160mm, 165mm, 170mm, 175mm, 180mm and 195mm, etc., which are not listed here one by one.

In some embodiments, optionally, in the overlapping portion of the projection of the first heating element 200 and the central region 114, the contour line of the projection forms the entire outer edge of the closed region 115.

In the embodiments, the position relationship between the first heating element 200 and the central region 114 is further detailed. In the overlapping portion of the projection of the first heating element 200 and the central region 114, the contour line of the projection forms the entire outer edge of the closed region 115. It can be seen that the outer edge of the closed region 115 is all formed by the contour line of the projection of the first heating element 200. For example, the projection of the first heating element 200 has an annular shape, the entire projection of the first heating element 200 is located within the central region 114, the region enclosed by the outer contour line of the first heating element 200 is the closed region 115, and the area of the closed region 115 is Ae.

As another example, the projection of the first heating element 200 has a shape of two nested annular rings, and the entire projection of the first heating element 200 is located within the central region 114. The region enclosed by the projection of the first heating element 200 comprises two closed regions 115. The area of the closed region 115 enclosed by the outer contour line of the annular projection at the outer side is Ae.

In some embodiments, optionally, as shown in Fig. 9, Fig. 10, Fig. 22 and Fig. 23, in the overlapping portion of the projection of the first heating element 200 and the central region 114, the contour line of the projection forms part of the outer edge of the closed region 115.

In the embodiments, the position relationship between the first heating element 200 and the central region 114 is further detailed. In the overlapping portion of the projection of the first heating element 200 and the central region 114, the contour line of the projection forms part of the outer edge of the closed region 115. That is, the contour line of the projection only forms part of the outer edge of the closed region 115, rather than all of the outer edge of the closed region 115.

In some embodiments, optionally, as shown Fig. 9, Fig. 10, Fig. 22 and Fig. 23, the outer edge of the central region 114 forms the other part of the outer edge of the closed region 115.

In the embodiments, in the overlapping portion of the projection of the first heating element 200 and the central region 114, the contour line of the projection forms part of the outer edge of the closed region 115, the outer edge of the central region 114 forms the other part of the outer edge of the closed region 115.It can be seen there from that the contour line of the projection of the first heating element 200 cooperates with the outer edge of the central region 114 to jointly enclose at least one closed region 115.

Exemplarily, the projection of the first heating element 200 has a shape of two parallel strips arranged at an interval, and two ends of each strip are both located at the outer side of the central region 114. The shape of the region enclosed by the outer contour lines of the two strips and the outer edge of the central region 114 comprises one closed diagram, and the area of the closed diagram is Ae.

For example, the projection of the first heating element 200 is arc-shaped, and both ends of the arc are located at the outer side of the central region 114. The shape of the region enclosed by the arc-shaped outer contour line and the outer edge of the central region 114 comprises a closed diagram, and the area of the closed diagram is Ae.

In some embodiments, optionally, the number of intersection points of the contour line of the projection of the first heating element 200 and the outer edge of the central region 114 is greater than or equal to 3, and the connecting line of all intersection points forms another part of the outer edge of the closed region 115.

In the embodiments, in the overlapping portion of the projection of the first heating element 200 and the central region 114, the contour line of the projection forms part of the outer edge of the closed region 115. The number of intersection points of the contour line of the projection of the first heating element 200 and the outer edge of the central region 114 is greater than or equal to 3, and the connecting line of all intersection points forms the other part of the outer edge of the closed region 115. It can be seen that the contour line of the projection of the first heating element 200 cooperates with the connecting line joining all the intersection points to jointly enclose at least one closed region 115.

For example, the projection of the first heating element 200 is X-shaped, and the number of intersection points of the first heating element 200 and the outer edge of the central region 114 is 8. The 8 intersection points and the connecting lines thereof enclose multiple closed regions 115. Among the multiple closed regions 115, the closed region 115 with the largest area is defined as the maximum region, and the area of the maximum region is Ae.

In some embodiments, optionally, as shown in Fig. 9 and Fig. 10, the first heating element 200 is a linear heating element, and the length of the first heating element 200 is d; when the projection of the first heating element 200 is parallel to the first side 1142 or the included angle between the projection of the first heating element 200 and the first side 1142 is less than 45°, d≤1.5×d1; when the included angle between the projection of the first heating element 200 and the first side 1142 is greater than or equal to 45°, d≤1.5×d2.

In the embodiments, the position relationship between the first heating element 200 and the central region 114 is further detailed.

The first heating element 200 is a linear heating element, and the length of the first heating element 200 is d.

When the projection of the first heating element 200 is parallel to the first side 1142 or the included angle between the projection of the first heating element 200 and the first side 1142 is less than 45°, d≤1.5×d1; when the included angle between the projection of the first heating element 200 and the first side 1142 is greater than or equal to 45°, d≤1.5×d2.

The high energy efficiency of the cooking appliance 1 is achieved by reasonably setting the dimension relationship between the length of the first heating element 200 and the central region 114.

Exemplarily, when the projection of the first heating element 200 is parallel to the first side 1142, or the included angle between the projection of the first heating element 200 and the first side 1142 is less than 45°, d=1.48×d1, d=1.45×d1, d=1.4×d1, d=1.38×d1 and d=1.35×d1, etc., which are not listed here one by one.

Exemplarily, when the included angle between the projection of the first heating element 200 and the first side 1142 is greater than or equal to 45°, d=1.48×d2, d=1.45×d2, d=1.4×d2, d=1.38×d2 and d=1.35×d2, etc., which are not listed here one by one.

In some embodiments, optionally, 0.5×S0≤Ae≤S0.

In the embodiment, the relationship between S0 and Ae is further detailed, so that S0 and Ae satisfy: 0.5×S0≤Ae≤S0. This balances the cooking efficiency and energy consumption of the cooking appliance 1, and can avoid increasing the energy consumption of the cooking appliance 1 caused by an excessively large Ae and also prevent reducing the cooking efficiency of the cooking appliance 1 caused by an excessively small Ae.

Exemplarily, Ae=0.6×S0, Ae=0.7×S0, Ae=0.8×S0 and Ae=0.9×S0, etc., which are not listed here one by one.

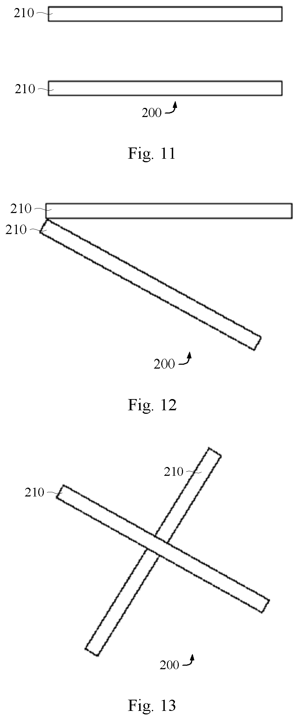

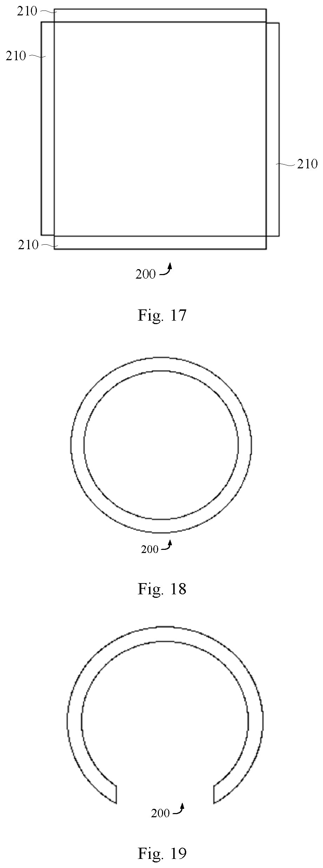

In some embodiments, optionally, the first heating element 200 comprises at least one heat generating tube 210; as shown in Fig. 18 and Fig. 19, when the number of the heat generating tube 210 is one, the power of the first heating element 200 is P, the power density of the first heating element 200 is PD1, and in the projection of the first heating element 200 on the cavity wall of the cooking cavity 110, the area of the region enclosed by the outermost contour line is A, P≥800W, and PD1=P/A≥0.028W/mm²; as shown in Fig. 11, Fig. 12, Fig. 13, Fig. 14, Fig. 15, Fig. 16, Fig. 17, Fig. 20, Fig. 21 and Fig. 22, when the number of the heat generating tubes 210 is greater than or equal to two, the power of the first heating element 200 is P, the power density of the first heating element 200 is PD2, P≥800W and PD2=P/Ae≥0.061W/mm².

In the embodiment, the structure of the first heating element 200 is further defined.

The first heating element 200 comprises at least one heat generating tube 210.

When the number of the heat generating tube 210 is one, the power of the first heating element 200 is P, the power density of the first heating element 200 is PD1, and in the projection of the first heating element 200 on the cavity wall of the cooking cavity 110, the area of the region enclosed by the outermost contour line is A, P≥800W, and PD1=P/A≥0.028W/mm².This arrangement achieves high energy efficiency of the cooking appliance 1.

When the number of the heat generating tubes 210 is greater than or equal to two, the power of the first heating element 200 is P, the power density of the first heating element 200 is PD2, P≥800W and PD2=P/Ae≥0.061W/mm². This arrangement achieves high energy efficiency of the cooking appliance 1.

In some embodiments, optionally, the closed region 115 with the maximum area covers the center of the central region 114.

In the embodiments, the relationship between the closed region 115 with the largest area and the central region 114 is further detailed. The closed region 115 with the largest area covers the center of the central region 114. In this way, the radiation energy emitted by the first heating element 200 can be effectively reflected to the food ingredients 2, and the contact area and contact region between the radiation energy and the food ingredients 2 can be ensured, so that the thermal radiation emitted by the first heating element 200 can be more intensively reflected to the food ingredients 2.

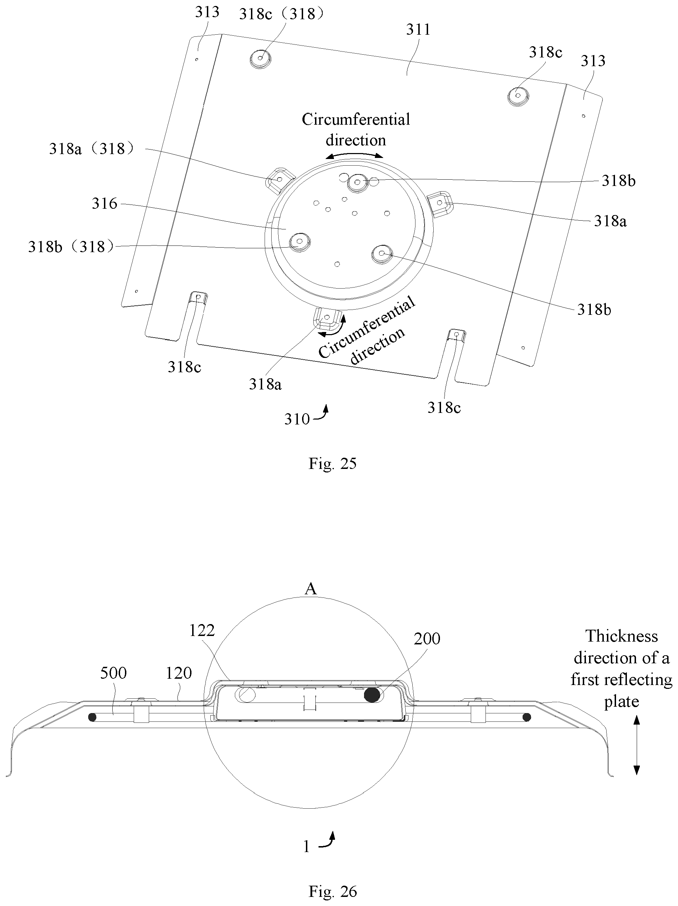

In some embodiments, optionally, as shown in Fig. 25, the first reflecting plate 310 comprises the plate body 311 and two bent plates 313, the plate body 311 is connected between the two bent plates 313, and the reflecting cover 320 is stacked on one side of the plate body 311; the spacing between the sides of the two bent plates 313 facing away from the plate body 311 is larger than the spacing between the sides of the two bent plates 313 connected to the plate body 311.

In the embodiments, the first reflecting plate 310 comprises the plate body 311 and two bent plates 313, and the plate body 311 is connected between the two bent plates 313.

It can be understood that the bent plates 313 are arranged oblique relative to the plate body 311. The side of the bent plate 313 connected to the plate body 311 is denoted as a first edge, and the side of the bent plate 313 facing away from the plate body 311 is defined as a second edge. The spacing between the second edges of the two bent plates 313 is greater than the spacing between the first edges of the two bent plates 313.

The two bent plates 313 cooperate with the plate body 311 to further optimize the heat radiation path, so that heat can be radiated intensively to the food ingredients 2, and the cooking effect of the food ingredients 2 is ensured. In addition, the oblique direction of the two bent plates 313 relative to the plate body 311 helps further increase the spacing between the first reflecting plate 310 and the cavity wall of the cooking cavity 110, and helps further reduce the thermal load on the cavity wall of the cooking cavity 110, so that more heat is concentrated on the food ingredients 2, which can improve energy utilization rate and enhance the energy efficiency of the cooking appliance 1.

Exemplarily, along a direction from the first edge to the second edge, the spacing between the two bent plates 313 gradually increases.

Exemplarily, along the direction from the first edge to the second edge, the spacing between part of the two bent plates 313 gradually increases.

In some embodiments, optionally, the heating assembly 20 is disposed at the top of the cooking cavity 110; or the heating assembly 20 is disposed at a side portion of the cooking cavity 110.

In the embodiments, the position of the heating assembly 20 inside the cooking cavity 110 is further detailed.

For example, the heating assembly 20 is disposed at the top of the cooking cavity 110, and the food ingredients 2 are arranged at the bottom of the cooking cavity 110. Heat generated from the operation of the heating assembly 20 can be effectively radiated to the food ingredients 2.

For example, the heating assembly 20 is disposed on the side portion of the cooking cavity 110, and the food ingredients 2 are arranged at the bottom of the cooking cavity 110. Heat generated from the operation of the heating assembly 20 can be effectively radiated to the food ingredients 2.

As shown in Fig. 7 and Fig. 8, along a first direction, a side edge *ab* of the central region 114 is parallel to a side edge *AB* of the cavity wall of the cooking cavity 110. Along a second direction, a side edge *bc* of the central region 114 is parallel to a side edge *BC* of the cavity wall of the cooking cavity 110.

Exemplarily, as shown in Fig. 9, Fig. 10, Fig. 11 and Fig. 12, the first heating element 200 is a structure unable to form a closed region; for example, the first heating element 200 is a single straight pipe. The length of the first heating element 200 (the length refers to the maximum length of the first heating element 200 including terminals) is less than or equal to 1.5 times the corresponding dimension of the central region 114. When the projection shape of the first heating element 200 is a strip, the dimension of the first heating element 200 in the length direction is *d*, the length of the first side 1142 of the central region 114 is *d1*, and the length of the second side 1144 of the central region 114 is d2, where d2<d1. When the included angle between the projection of the first heating element 200 and the first side 1142 is less than 45°, d≤1.5×d1; when the included angle between the projection of the first heating element 200 and the first side 1142 is greater than or equal to 45°, d≤1.5×d2.

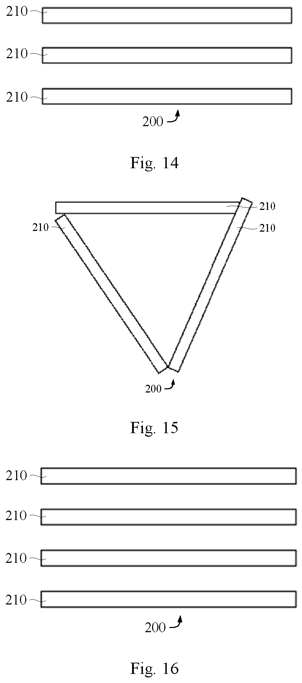

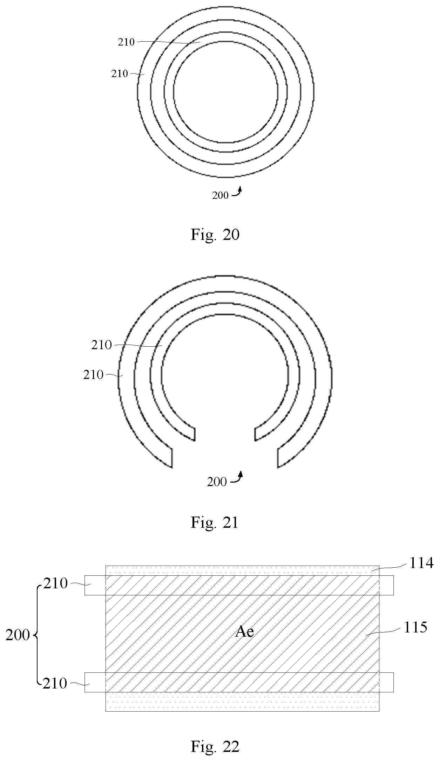

Exemplarily, as shown in Fig. 15, Fig. 17, Fig. 18 and Fig. 20, the first heating element 200 is a structure connected end to end that can form a closed region. For example, the first heating element 200 is a single-turn annular tube; for example, the first heating element 200 is a multi-turn annular tube; for example, the first heating element 200 is a triangular structure; for example, the first heating element 200 is a quadrilateral structure. As shown in Fig. 11, Fig. 12, Fig. 13, Fig. 14, Fig. 15, Fig. 16 and Fig. 17, the first heating element 200 comprises multiple straight pipes. As shown in Fig. 19 and Fig. 21, the first heating element 200 comprises multiple arc-shaped pipes, and the like, which are not listed here one by one.

Exemplarily, in the overlapping portion of the projection of the first heating element 200 and the central region 114, the contour line of the projection and the central region 114 enclose at least one closed region 115, the maximum area of the at least one closed region 115 is Ae, and the area of the central region 114 is S0, wherein, Ae≥0.1×S0.

Exemplarily, the first heating element 200 comprises at least one heat generating tube 210; when the number of the heat generating tube 210 is one, the power of the first heating element 200 is P, the power density of the first heating element 200 is PD1, and in the projection of the first heating element 200 on a projection surface, the area of the region enclosed by the outermost contour line is A, P≥800W, and PD1=P/A≥0.028W/mm²; when the number of the heat generating tubes 210 is greater than or equal to two, the power of the first heating element 200 is P, the power density of the first heating element 200 is PD2, P≥800W and PD2=P/Ae≥0.061W/mm².

In some embodiments, optionally, as shown in Fig. 4, the reflecting cover 320 comprises the surrounding plate 324, the surrounding plate 324 is arranged around the first heating element 200, and one end of the surrounding plate 324 encloses the opening 322.

In the embodiments, the structure of the reflecting cover 320 is detailed. Specifically, the reflecting cover 320 comprises the surrounding plate 324, the surrounding plate 324 is disposed around the first heating element 200, and one end of the surrounding plate 324 encloses the opening 322. In other words, the first heating element 200 is located in the region enclosed by the surrounding plate 324. The surrounding plate 324 can restrict the heat radiation path of the first heating element 200 from multiple directions and multiple angles, so as to meet the use need of effectively reflecting at least part of the radiation energy emitted by the first heating element 200 to the food ingredients 2 through the opening 322.

It can be understood that the surrounding plate 324 is a cylindrical structure.

In some embodiments, optionally, along the direction from the reflecting cover 320 to the first reflecting plate 310, the height of the surrounding plate 324 is greater than or equal to 1cm.

In the embodiments, the structure of the surrounding plate 324 is further defined, so that along the direction from the reflecting cover 320 to the first reflecting plate 310, the height of the surrounding plate 324 is greater than or equal to 1cm. By defining the height of the surrounding plate 324, the effectiveness of limiting the heat radiation path of the first heating element 200 is ensured.

If the height of the surrounding plate 324 is less than 1cm, the restraining effect of the surrounding plate 324 on the heat radiation range of the first heating element 200 is poor, less heat is reflected to the food ingredients 2 by the surrounding plate 324, energy inside the cooking cavity 110 is dispersed, most of the energy is still dissipated to the surrounding environment as ineffective heat through the appliance body 10, resulting in low energy efficiency of the cooking appliance 1.

Exemplarily, the height of the surrounding plate 324 is greater than or equal to 1cm and less than or equal to 5cm. If the height of the surrounding plate 324 is greater than 5cm, it will increase the occupation rate of the internal space of the cooking cavity 110 and occupy the storage space for food ingredients. For example, the height of the surrounding plate 324 comprises 1.5cm, 2cm, 2.6cm, 3cm, 3.2cm, 4cm and 5cm and the like, which are not listed here one by one.

In some embodiments, optionally, across section of the appliance body 10 and the surrounding plate 324 is taken along a direction perpendicular to the direction from the reflecting cover 320 to the first reflecting plate 310. In the cross section, the area of the region enclosed by the contour line of the cavity wall of the cooking cavity 110 is S1, and the area of the region enclosed by the inner contour line of the surrounding plate 324 is S2, where S2/S1≤50%.

In the embodiments, the cooperation structure of the surrounding plate 324 and the appliance body 10 is further defined.

The cross section of the appliance body 10 and the surrounding plate 324 is taken along the direction perpendicular to the direction from the reflecting cover 320 to the first reflecting plate 310. In the cross section, the area of the region enclosed by the contour line of the cavity wall of the cooking cavity 110 is denoted as S1, and the area of the region enclosed by the inner contour line of the surrounding plate 324 is denoted as S2. Wherein, the relationship between S1 and S2 satisfies: S2/S1≤50%. This configuration ensures the effectiveness and feasibility of the reflecting portion 300 in optimizing the heat radiation path of the first heating element 200, and can reduce the material input for the reflecting portion 300 and lower the occupation ratio of the internal space of the cooking cavity 110 at the same time.

In some technical solutions, optionally, 5%≤S2/S1≤40%.

In the embodiments, the ratio relationship of S1 and S2 is further detailed to satisfy 5%≤S2/S1≤40%, that is, the heat radiation path of the first heating element 200 is further optimized, which can balance the production cost and heating efficiency of the product.

Exemplarily, S2/S1=10%, S2/S1=15%, S2/S1=20%, S2/S1=25%, S2/S1=30% and S2/S1=35%, etc., which are not listed here one by one.

In some embodiments, optionally, a cross section of the surrounding plate 324 is taken along a direction perpendicular to the direction from the reflecting cover 320 to the first reflecting plate 310. In the cross section, the inner contour line of the surrounding plate 324 comprises at least one or a combination of a straight line, a curved line and a broken line.

In the embodiments, the shape of the surrounding plate 324 is further defined.

The cross section of the surrounding plate 324 is taken along the direction perpendicular to the direction from the reflecting cover 320 to the first reflecting plate 310. In the cross section, the inner contour line of the surrounding plate 324 comprises at least one or a combination of a straight line, a curved line, and a broken line. For example, the shape enclosed by the inner contour line of the surrounding plate 324 comprises an ellipse, a polygon, a special shape, etc., which are not listed here one by one. Wherein, the "special shape" refers to a structure with an irregular shape. For instance, the surrounding plate 324 may be a hollow cylindrical plate; for instance, the surrounding plate 324 may be a hollow square plate; for instance, the surrounding plate 324 may be a hollow frustum-shaped plate.

The configuration can meet a use need of limiting the heat radiation path of the first heating element 200 from multiple directions and multiple angles by the surrounding plate 324, and can meet the use need of effectively reflecting at least part of the radiation energy emitted by the first heating element 200 through the surrounding plate 324 to the food ingredients 2 in the placement region 112.

In some embodiments, optionally, as shown in Fig. 3, Fig. 6, Fig. 24, Fig. 31 and Fig. 32, the heating assembly 20 further comprises the protective net 400.The protective net 400 is disposed at the opening 322.

In the embodiments, the structure of the heating assembly 20 is further defined. When the reflecting portion 300 comprises the reflecting cover 320, the heating assembly 20 further comprises the protective net 400, the protective net 400 is disposed at the opening 322, and the protective net 400 has the function of protecting the first heating element 200 located within the reflecting cover 320. This prevents the occurrence of causing damage to the first heating element 200 due to the user's accidental collision with the first heating element 200 through the opening 322 and can ensure the service life of the first heating element 200.

It can be understood that the protective net 400 has a plurality of through-holes, and thus the protective net 400 does not hinder energy radiation.

In some embodiments, optionally, as shown in Fig. 5, the first reflecting plate 310 is connected to the cavity wall of the cooking cavity 110 through the first connecting element 60.A gap is provided between the side of the first reflecting plate 310 facing away from the first heating element 200 and the cavity wall of the cooking cavity 110.

In the embodiments, the cooperation structure of the reflecting portion 300 and the appliance body 10 is further defined.

When the reflecting portion 300 comprises the first reflecting plate 310, the cooking appliance 1 further comprises the first connecting element 60, the first reflecting plate 310 is connected to the cavity wall of the cooking cavity 110 through the first connecting element 60. The gap is provided between the side of the first reflecting plate 310 facing away from the first heating element 200 and the cavity wall of the cooking cavity 110. The gap between the first reflecting plate 310 and the cavity wall of the cooking cavity 110 opposite to it has a heat insulation function, which reduces the amount of heat radiated to the outer surface of the appliance body 10, thus reflecting most of the heat to the food ingredients 2, and reducing heat loss. This improves the heating efficiency of the food ingredients 2, and thus enhances energy utilization rate and the energy efficiency of the cooking appliance 1.

Exemplarily, the first reflecting plate 310, the first connecting element 60, and the cavity wall of the cooking cavity 110 enclose a sealed cavity.

Exemplarily, the first reflecting plate 310, the first connecting element 60, and the cavity wall of the cooking cavity 110 enclose a non-sealed cavity.

Exemplarily, the first connecting element 60 comprises a bolt, a screw, a rivet, etc., which are listed here one by one.

In some embodiments, optionally, the gap between the side of the first reflecting plate 310 facing away from the first heating element 200 and the cavity wall of the cooking cavity 110 is greater than or equal to 0.5mm and less than or equal to 5mm.

In the embodiments, the value of the gap between the first reflecting plate 310 and the cavity wall of the cooking cavity 110 is further detailed.

The gap between the side of the first reflecting plate 310 facing away from the first heating element 200 and the cavity wall of the cooking cavity 110 is greater than or equal to 0.5mm and less than or equal to 5mm, so as to balance the heating efficiency and energy consumption of the cooking appliance 1.

If the gap between the side of the first reflecting plate 310 facing away from the first heating element 200 and the cavity wall of the cooking cavity 110 is less than 0.5mm, the gap between the first reflecting plate 310 and the cavity wall of the cooking cavity 110 is excessively small, the heat insulation effect is poor, and a large amount of heat is radiated to the outer surface of the appliance body 10, which reduces the energy efficiency of the cooking appliance 1.

If the gap between the side of the first reflecting plate 310 facing away from the first heating element 200 and the cavity wall of the cooking cavity 110 is greater than 5mm, the cooking space for cooking the food ingredients 2 will be occupied and the service performance of the product is lowered.

Exemplarily, the values of the gap between the side of the first reflecting plate 310 facing away from the first heating element 200 and the cavity wall of the cooking cavity 110 comprise 0.6mm, 0.7mm, 0.8mm, 1mm, 1.2mm, 1.5mm, 1.8mm, 2mm, 2.2mm, 2.5mm, 2.7mm, 3mm, 3.5mm, 4mm, 4.2mm, 4.5mm and 4.8mm and the like, which are not listed here one by one.

In some embodiments, optionally, as shown in Fig. 5, the reflecting cover 320 is connected to the first reflecting plate 310 through the second connecting element 70, and a gap is provided between the reflecting cover 320 and the first reflecting plate 310.

In the embodiments, the cooperation structure of the reflecting cover 320 and the first reflecting plate 310 is further defined.

The cooking appliance 1 further comprises the second connecting element 70, the reflecting cover 320 and the first reflecting plate 310 are connected via the second connecting element 70, and there is a gap between the reflecting cover 320 and the first reflecting plate 310.

The gap between the reflecting cover 320 and the first reflecting plate 310 has a heat insulation function, and the gap between the reflecting cover 320 and the first reflecting plate 310 can further reduce the amount of heat radiated to the outer surface of the appliance body 10, so that most of the heat is reflected to the food ingredients 2, thus reducing heat loss. This can improve the heating efficiency of the food ingredients 2, and thus enhance energy utilization rate and the energy efficiency of the cooking appliance 1.

In some embodiments, optionally, the gap between the reflecting cover 320 and the first reflecting plate 310 is greater than or equal to 0.5mm and less than or equal to 5mm.

In the embodiments, the value of the gap between the reflecting cover 320 and the first reflecting plate 310 is further detailed.

The gap between the reflecting cover 320 and the first reflecting plate 310 is greater than or equal to 0.5mm and less than or equal to 5mm, so as to balance the heating efficiency and energy consumption of the cooking appliance 1.

If the gap between the reflecting cover 320 and the first reflecting plate 310 is less than 0.5mm, the heat insulation effect is poor, and a large amount of heat is radiated to the outer surface of the appliance body 10, which reduces the energy efficiency of the cooking appliance 1.

If the gap between the reflecting cover 320 and the first reflecting plate 310 is greater than 5mm, the cooking space for cooking the food ingredients 2 will be occupied and the service performance of the product is lowered.

Exemplarily, the values of the gap between the reflecting cover 320 and the first reflecting plate 310 comprise 0.6mm, 0.7mm, 0.8mm, 1mm, 1.2mm, 1.5mm, 1.8mm, 2mm, 2.2mm, 2.5mm, 2.7mm, 3mm, 3.5mm, 4mm, 4.2mm, 4.5mm and 4.8mm and the like, which are not listed here one by one.

In some embodiments, optionally, as shown in Fig. 3, Fig. 4, Fig. 5, Fig. 6, Fig. 26 and Fig. 29, the heating assembly 20 further comprises the second heating element 500. The second heating element 500 and the reflecting cover 320 are disposed on the same side of the first reflecting plate 310, and the second heating element 500 is arranged around the reflecting cover 320.

In the embodiments, the structure of the heating assembly 20 is further defined.

The heating assembly 20 further comprises the second heating element 500, and the second heating element 500 and the reflecting cover 320 are located on the same side of the first reflecting plate 310. Exemplarily, the second heating element 500 is connected to the first reflecting plate 310.

At least one of the first heating element 200 and the second heating element 500 can be controlled to operate according to actual use needs.

The second heating element 500 is located on the peripheral side of the reflecting cover 320. The second heating element 500 is arranged around the reflecting cover 320. For example, when it is necessary to increase the heat output of the heating assembly 20 per unit time, the first heating element 200 and the second heating element 500 can be controlled to operate simultaneously.

The second heating element 500 is arranged around the reflecting cover 320. The second heating element 500 operates to transfer heat by means of thermal radiation. The arrangement position of the second heating element 500 can ensure the uniformity of heat radiation, help enhance the uniformity of heating the food ingredients 2, guarantee the uniformity of heating different positions of the food ingredients 2, and facilitate improving the cooking effect of the food ingredients 2.

The second heating element 500 is disposed around the reflecting cover 320, which means that the second heating element 500 is located at the periphery of the reflecting cover 320 and extends along the circumferential direction of the reflecting cover 320.

In some embodiments, optionally, the first reflecting plate 310 covers the second heating element 500. The distance from the second heating element 500 to the outer edge of the first reflecting plate 310 is less than the distance from the second heating element 500 to the reflecting cover 320.

In the embodiments, the cooperation structure of the second heating element 500, the first reflecting plate 310 and the reflecting cover 320 is further defined.

The first reflecting plate 310 covers the second heating element 500, and the first reflecting plate 310 can further reflect at least part of the thermal radiation emitted from the operation of the second heating element 500 to the food ingredients 2. The first reflecting plate 310 also has the function of optimizing the heat radiation path of the second heating element 500, so as to reflect at least part of the radiation energy emitted by the second heating element 500 to the food ingredients 2, and reduce the radiation energy absorbed by the cavity wall of the cooking cavity 110, so that the thermal radiation emitted by the second heating element 500 is more intensively reflected to the food ingredients 2.

Wherein, the distance from the second heating element 500 to the outer edge of the first reflecting plate 310 is less than the distance from the second heating element 500 to the reflecting cover 320. This arrangement is conducive to increasing the extending length of the second heating element 500, and can increase the heat radiation when the second heating element 500 is in operation, and helps shorten the heating time of the cooking appliance 1.

In some embodiments, optionally, as shown in Fig. 3,the second portion of the first reflecting plate 310 is recessed in a direction facing away from the reflecting cover 320 to form the second recessed portion 314, and the second heating element 500, the reflecting cover 320 and the first heating element 200 are all located at the second recessed portion 314.

In the embodiments, the structure of the first reflecting plate 310 is further defined.

The second portion of the first reflecting plate 310 is recessed in a direction facing away from the reflecting cover 320 to form the second recessed portion 314. The second heating element 500, the reflecting cover 320 and the first heating element 200 are all disposed at the second recessed portion 314. This arrangement helps the first reflecting plate 310 to reflect thermal radiation more intensively to the food ingredients 2, helps improve energy utilization rate, and helps improve the energy efficiency of the product.

In some embodiments, optionally, the first heating element 200 comprises any one or a combination of a metal heating element, a graphene heating element, a halogen tube and an infrared tube; and/or the second heating element 500 comprises any one or a combination of a metal heating element, a graphene heating element, a halogen tube and an infrared tube.

In the embodiments, the specific types of the first heating element 200 and the second heating element 500 are further defined.

The first heating element 200 comprises any one or a combination of a metal heating element, a graphene heating element, a halogen tube and an infrared tube; and/or the second heating element 500 comprises any one or a combination of a metal heating element, a graphene heating element, a halogen tube and an infrared tube.

When at least one of the first heating element 200 and the second heating element 500 comprises a metal heating element, it has the advantages of efficient heat conduction and uniform heating, and also features high temperature resistance and high stability. The metal heating element has good impact resistance, wear resistance and long service life. When at least one of the first heating element 200 and the second heating element 500 comprises a graphene heating element, it has the advantages of efficient heat conduction and rapid temperature rise, and also features high temperature resistance and a long service life.

When at least one of the first heating element 200 and the second heating element 500 comprises a halogen tube, it has the advantages of fast heating and quick response, and also features high energy efficiency, and can save energy and power. Meanwhile, the halogen tube also has the characteristics of good stability and a long service life.

When at least one of the first heating element 200 and the second heating element 500 is an infrared tube, it has the advantages of high efficiency, energy saving and low heat loss, and can realize precise temperature control and directional heating. At the same time, it also has the advantages of a long service life and simple maintenance.

In some embodiments, optionally, the cooking cavity 110 is provided with the placement region 112 therein, the heating assembly 20 and the placement region 112 are located on two opposite sides of the cooking cavity 110.

In the embodiments, the positions of the heating assembly 20 and the placement region 112 are defined. The cooking cavity 110 is provided with the placement region 112 therein, and the food ingredients 2 are placed in the placement region 112. The heating assembly 20 and the placement region 112 are located on two opposite sides of the cooking cavity 110. For example, the placement region 112 is located at the bottom of the cooking cavity 110, and the heating assembly 20 is located at the top of the cooking cavity 110.

This arrangement defines the relative position of the heating assembly 20 and the placement region 112, and provides structural support for ensuring effectively reflecting thermal radiation to the placement region 112.

Exemplarily, as shown in Fig. 3, Fig. 4 and Fig. 5, the first reflecting plate 310 of the heating assembly 20 is connected to the top plate 120 of the appliance body 10.

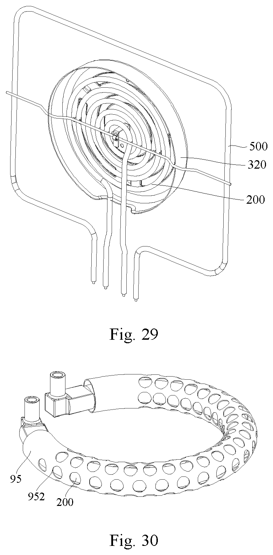

In some technical solutions, optionally, as shown in Fig. 30, the cooking appliance 1 further comprises a protective sleeve 95 sleeved on the outer side of the first heating element 200, the protective sleeve 95 is provided with a hole 952, and the hole952 is in communication with the first heating element 200.

In the embodiments, the structure of the cooking appliance 1 is further defined, so that the cooking appliance 1 further comprises the protective sleeve 95, and the protective sleeve 95 is sleeved on the outer side of the first heating element 200. The protective sleeve 95 has a function of protecting the first heating element 200 arranged within the reflecting cover 320, and this prevents damage to the first heating element 200 caused by an external force directly acting on the first heating element 200, and can avoid damage to the first heating element 200 due to accidental collision, ensure the service life of the first heating element 200, and guarantee the safety and reliability in using the first heating element 200.

It can be understood that the protective sleeve 95 is provided with the hole 952, the hole 952 is in communication with the first heating element 200, and the protective sleeve 95 will not hinder energy radiation, so that energy generated from the operation of the first heating element 200 can be radiated to the food ingredients 2 through the hole 952.

In some embodiments, optionally, the thickness of the protective sleeve 95 is greater than or equal to 0.2mm and less than or equal to 5mm.

In the embodiments, the thickness of the protective sleeve 95 is greater than or equal to 0.2mm and less than or equal to 5mm, that is, the value range of the thickness of the protective sleeve 95 is defined. In this way, the first heating element 200 can be effectively protected, and the use need of effectively radiating energy to the food ingredient 2 can also be satisfied.

If the thickness of the protective sleeve 95 is less than 0.2mm, the protective sleeve 95 is relatively thin and easily deformed or even damaged when an external force acts on the protective sleeve 95, which may cause damage to the first heating element 200 and fail to effectively protect the first heating element 200.

If the thickness of the protective sleeve 95 is greater than 5mm, the protective sleeve 95 is relatively thick and will block part of the energy, which reduces the energy radiated to the food ingredients 2 through the protective sleeve 95, and further lowers the cooking efficiency of the cooking appliance 1.

Exemplarily, the thickness values of the protective sleeve 95 comprise 0.5mm, 1.2mm, 1.5mm, 1.8mm, 2mm, 2.2mm, 2.5mm, 2.7mm, 3mm, 3.2mm, 3.5mm, 3.8mm, 4mm, 4.2mm, 4.5mm, 4.8mm and the like, which are not listed here one by one.

In some embodiments, optionally, as shown in Fig. 30, there are multiple holes 952, and the ratio of the sum of the areas of the cross sections of the multiple holes 952 to the area of the outer surface of the protective sleeve 95 is greater than or equal to 10% and less than or equal to 90%. The distance between any two points on the hole wall of the hole 952 is less than or equal to 10mm.

In the embodiments, the structure of the hole 952 is detailed.

There are multiple holes 952, and the multiple holes 952 are arranged at intervals. The sum of the areas of the cross sections of the multiple holes 952 is k1, and the area of the outer surface of the protective sleeve 95 is k2, wherein, 10%≤k1/k2≤90%. In this way, the first heating element 200 can be effectively protected, and the use need of effectively radiating the energy to the food ingredients 2 can also be satisfied.

If k1/k2<10%, the material dosage of the protective sleeve 95 is insufficient. When an external force acts on the protective sleeve 95, the protective sleeve 95 is prone to deformation or even damage, which may cause damage to the first heating element 200 and fail to effectively protect the first heating element 200.

If k1/k2>90%, the material dosage of the protective sleeve 95 is excessive. The protective sleeve 95 will block part of the energy, which reduces the energy radiated to the food ingredients 2 through the protective sleeve 95, and further lowers the cooking efficiency of the cooking appliance 1.

Exemplarily, k1/k2=20%, k1/k2=30%, k1/k2=40%, k1/k2=50%, k1/k2=60%, k1/k2=70%, k1/k2=80% and the like, which are not listed here one by one.

In addition, the distance between any two points on the hole wall of the hole 952 is less than or equal to 10mm, which may have an understanding that the maximum value of the distance between any two points on the hole wall of the hole 952 is 10mm. In this way, the first heating element 200 can be effectively protected, and the use need of effectively radiating energy to the food ingredients 2 can also be satisfied. If the distance between any two points on the hole wall of the hole 952 is greater than 10mm, the area of the region of the first heating element 200 exposed out of the protective sleeve 95 through the hole 952 is relatively large. In this case, when an external force acts on the protective sleeve 95, the external force is likely to directly contact the first heating element 200 through the hole 952, thereby causing damage to the first heating element 200 and reducing the effectiveness and reliability of protecting the first heating element 200.

Exemplarily, the values of the distance between any two points on the hole wall of the hole 952 comprise 1mm, 2mm, 3mm, 4mm, 5mm, 6mm, 7mm, 8mm, 9mm and the like, which are not listed here one by one.

In some embodiments, optionally, the spacing between the inner surface of the protective sleeve 95 and the outer surface of the first heating element 200 is greater than or equal to 0.1mm.

In the embodiments, a gap is formed between the protective sleeve 95 and the first heating element 200; specifically, the spacing between the inner surface of the protective sleeve 95 and the outer surface of the first heating element 200 is greater than or equal to 0.1mm. The gap between the protective sleeve 95 and the first heating element 200 can serve a buffering function. When an external force acts on the protective sleeve 95, the protective sleeve 95 cooperates with the gap between the protective sleeve 95 and the first heating element 200 to further alleviate the force exerted on the first heating element 200, so as to enhance the protection effect on the first heating element 200 and ensure the service performance and service life of the first heating element 200.

In some embodiments, optionally, the protective sleeve 95 is a metal sleeve.

In the technical solutions, the protective sleeve 95 is a metal sleeve, which features high temperature resistance and has relatively high structural strength, and can effectively protect the first heating element 200.

Exemplarily, the protective sleeve 95 comprises a stainless steel sleeve or an aluminum alloy sleeve, which are not listed here one by one.

Exemplarily, when the first heating element 200 comprises a metal heating element, the first heating element 200 will not be easily damaged or fail due to impact of an external force. Therefore, the cooking appliance 1 may comprise at least one of the protective net 400 and the protective sleeve 95, or the cooking appliance 1 does not need to be provided with the protective net 400 or the protective sleeve 95.

Exemplarily, when at least one of the first heating element 200 and the second heating element 500 comprises a graphene heating element, if the graphene heating element is directly exposed inside the cooking cavity 110, the graphene heating element is easily damaged due to accidental collision during use, and thus this has potential safety hazards. Therefore, protective measures need to be added, for example, the cooking appliance 1 comprises at least one of the protective net 400 and the protective sleeve 95. When the cooking appliance 1 comprises the protective sleeve 95, the protective sleeve 95 is made of materials such as a high-temperature resistant metal (for example, stainless steel). The thickness of the protective sleeve 95 is greater than or equal to 0.2mm and less than or equal to 5mm. The protective sleeve 95 is provided with multiple holes 952. The multiple holes 952 are used to ensure that the heat of at least one of the first heating element 200 and the second heating element 500 penetrates through the protective sleeve 95 as much as possible to effectively heat the food ingredients 2. The ratio of the sum of the areas of the cross sections of the multiple holes 952 to the area of the outer surface of the protective sleeve 95 is greater than or equal to 10% and less than or equal to 90%. The shape of the hole 952 is not limited. For example, when a cross section of the hole 952 is taken along the direction perpendicular to the axis of the hole 952, in the cross section, the shape of the region enclosed by the contour line of the hole wall of the hole 952 comprises a circle, a polygon or a special shape, wherein, the special shape refers to a structure with an irregular shape. The distance between any two points on the hole wall of the hole 952 is less than or equal to 10mm. The protective sleeve 95 is not in contact with the graphene heating element, and the spacing between the inner surface of the protective sleeve 95 and the outer surface of the graphene heating element is greater than or equal to 0.1mm. Exemplarily, the graphene heating element comprises a quartz glass tube and a heating wire.

Exemplarily, when at least one of the first heating element 200 and the second heating element 500 comprises an infrared tube, if the infrared tube is directly exposed inside the cooking cavity 110, the infrared tube is easily damaged due to accidental collision during use, and thus this has potential safety hazards. Therefore, protective measures need to be added, for example, the cooking appliance 1 comprises at least one of the protective net 400 and the protective sleeve 95. When the cooking appliance 1 comprises the protective sleeve 95, the protective sleeve 95 is made of materials such as a high-temperature resistant metal (for example, stainless steel). The thickness of the protective sleeve 95 is greater than or equal to 0.2mm and less than or equal to 5mm. The protective sleeve 95 is provided with multiple holes 952. The multiple holes 952 are used to ensure that the heat of at least one of the first heating element 200 and the second heating element 500 penetrates through the protective sleeve 95 as much as possible to effectively heat the food ingredients 2. The ratio of the sum of the areas of the cross sections of the multiple holes 952 to the area of the outer surface of the protective sleeve 95 is greater than or equal to 10% and less than or equal to 90%. The shape of the hole 952 is not limited. For example, a cross section of the hole 952 is taken along the direction perpendicular to the axis of the hole 952, in the cross section, the shape of the region enclosed by the contour line of the hole wall of the hole 952 comprises a circle, a polygon or a special shape, wherein, the special shape refers to a structure with an irregular shape. The distance between any two points on the hole wall of the hole 952 is less than or equal to 10mm. The protective sleeve 95 is not in contact with the infrared tube, and the spacing between the inner surface of the protective sleeve 95 and the outer surface of the infrared tube is greater than or equal to 0.1mm. Exemplarily, the infrared tube comprises a quartz glass tube and a heating wire.

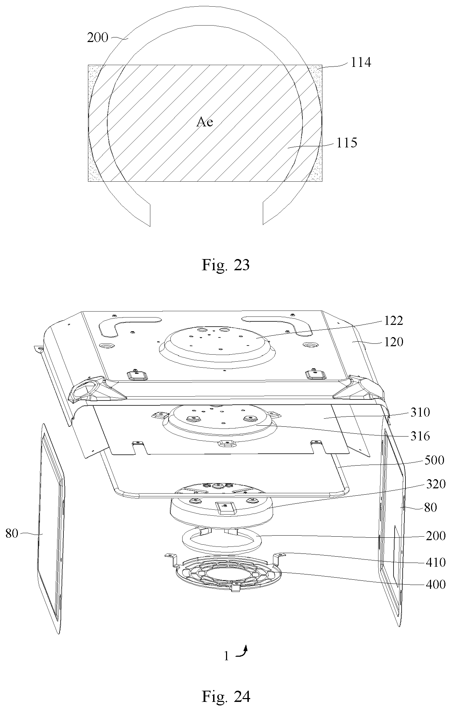

In some embodiments, optionally, as shown in Fig. 24, the side of the reflecting cover 320 facing the placement region 112 is attached to a side of the protective net 400 facing the first heating element 200; the outer edge of the protective net 400 is provided with multiple connecting plates 410 which are arranged at intervals, and the connecting plates 410 are located on the peripheral side of the reflecting cover 320; the cooking appliance 1 comprises multiple positioning elements, and each connecting plate 410 is connected to the cavity wall of the cooking cavity 110 through one positioning element.

In the embodiments, the cooperation structure of the reflecting cover 320 and the protective net 400 is further defined.

The side of the reflecting cover 320 facing the placement region 112 is attached to the side of the protective net 400 facing the first heating element 200.

The cooking appliance 1 comprises multiple positioning elements. The outer edge of the protective net 400 is provided with multiple connecting plates 410, the multiple connecting plates 410 are arranged at intervals, and any one of the multiple connecting plates 410 is located on the peripheral side of the reflecting cover 320. Each connecting plate 410 cooperates with one positioning element. Specifically, each connecting plate 410 is connected to the cavity wall of the cooking cavity 110 through one positioning element. The multiple positioning elements are used to connect the multiple connecting plates 410 with the cavity wall of the cooking cavity 110 so as to ensure the stability and reliability of the assembling of the protective net 400.

In this way, the cooperation area and cooperation angle between the protective net 400 and the cavity wall of the cooking cavity 110 are increased, and effective assembling of the protective net 400 can be guaranteed. Meanwhile, the side of the reflecting cover 320 facing the placement region 112 is attached to the side of the protective net 400 facing the first heating element 200, and the connecting plates 410 are located on the peripheral side of the reflecting cover 320. Therefore, the protective net 400 also has a function of limiting and supporting the reflecting cover 320, so as to enhance the stability and reliability of the assembling of the reflecting cover 320.

Exemplarily, the positioning element comprises a bolt, a screw or a rivet and the like, which are not listed here one by one.

Exemplarily, when the first heating element 200 comprises a fragile heating element such as a glass heating element or a quartz heating element, the heating assembly 20 comprises the protective net 400. When the first heating element 200 does not comprise a fragile heating element, the heating assembly 20 may comprise the protective net 400, or the heating assembly 200 may not comprise the protective net 400.

Exemplarily, when the heating assembly 20 comprises the second heating element 500, the heating assembly 20 is disposed at the top of the cooking cavity 110.

Exemplarily, when the heating assembly 20 comprises the second heating element 500, the heating assembly 20 is disposed at the side portion of the cooking cavity 110.

Exemplarily, when the heating assembly 20 does not comprise the second heating element 500, the heating assembly 20 is disposed at the side portion of the cooking cavity 110.

Exemplarily, when the heating assembly 20 does not comprise the second heating element 500, the heating assembly 20 is disposed at the top of the cooking cavity 110.

In some embodiments, optionally, as shown in Fig. 24, Fig. 25, Fig. 26 and Fig. 27,a third portion of the first reflecting plate 310 is recessed in a direction facing away from the first heating element 200 to form the first groove-shaped structure 316; the part of the cavity wall of the cooking cavity 110 disposed opposite to the first reflecting plate 310 is provided with a second groove-shaped structure 122, at least part of the first groove-shaped structure 316 extends into the second groove-shaped structure 122, and at least part of the reflecting cover 320 is located within the first groove-shaped structure 316.

In the embodiments, the cooperation structure of the first reflecting plate 310, the cavity wall of the cooking cavity 110 and the reflecting cover 320 is further defined.

The third portion of the first reflecting plate 310 is recessed in a direction facing away from the first heating element 200 to form the first groove-shaped structure 316. The part of the cavity wall of the cooking cavity 110 disposed opposite to the first reflecting plate 310 is provided with the second groove-shaped structure 122.

The first groove-shaped structure 316, the second groove-shaped structure 122 and the reflecting cover 320 cooperate with each other. Specifically, at least part of the first groove-shaped structure 316 extends into the second groove-shaped structure 122, and at least part of the reflecting cover 320 is located within the first groove-shaped structure 316. This arrangement enables the second groove-shaped structure 122 to have a function of accommodating the first groove-shaped structure 316 and the reflecting cover 320, so as to reduce the occupation ratio of the internal space of the cooking cavity 110 occupied by the heating assembly 20 along the direction from the heating assembly 20 to the placement area 112, ensure the space of the cooking cavity 110 for effectively accommodating the food ingredients 2, prevent the heating assembly 20 from compressing the volume of the cooking cavity 110, and facilitate fully utilization of the internal space of the cooking cavity 110.

Exemplarily, when the heating assembly 20 is located at the top of the cooking cavity 110, such arrangement can prevent the heating assembly 20 from compressing the volume of the cooking cavity 110, so that the grill arranged at the top layer of the cooking cavity 110 can still normally cook the food ingredients 2.

In some embodiments, optionally, along the direction from the first reflecting plate 310 to the reflecting cover 320, the height of the second heating element 500 exceeds the reflecting cover 320.

In the embodiments, the cooperation structure of the reflecting cover 320 and the second heating element 500 is further defined.

Along the direction from the first reflecting plate 310 to the reflecting cover 320, the height of the second heating element 500 exceeds the reflecting cover 320.

Specifically, when the heating assembly 20 is disposed at the top of the cooking cavity 110, along the direction from the reflecting cover 320 to the first reflecting plate 310, the positional height of the reflecting cover 320 is equal to that of the second heating element 500, or the positional height of the reflecting cover 320 is higher than that of the second heating element 500.

Specifically, when the heating assembly 20 is disposed at the side portion of the cooking cavity 110, along the direction from the reflecting cover 320 to the first reflecting plate 310, the distance from the position of the reflecting cover 320 to the food ingredients 2 is greater than or equal to the distance from the position of the second heating element 500 to the food ingredients 2.

This arrangement further defines the position relationship between the reflecting cover 320 and the second heating element 500 to reduce the occupation ratio of the internal space of the cooking cavity 110 occupied by the heating assembly 20, ensure the space of the cooking cavity 110 for effectively accommodating the food ingredients 2, prevent the heating assembly 20 from compressing the volume of the cooking cavity 110, and facilitate fully utilization of the internal space of the cooking cavity 110.

In some embodiments, optionally, the groove depth of at least one of the first groove-shaped structure 316 and the second groove-shaped structure 122 is greater than or equal to 17mm.

In the embodiments, the cooperation dimension of the first groove-shaped structure 316 and the second groove-shaped structure 122 is further defined.

The groove depth of at least one of the first groove-shaped structure 316 and the second groove-shaped structure 122 is greater than or equal to 17mm.That is, the groove depth of the first groove-shaped structure 316 is greater than or equal to 17mm, or the groove depth of the second groove-shaped structure 122 is greater than or equal to 17mm, or both the groove depth of the first groove-shaped structure 316 and the groove depth of the second groove-shaped structure 122 are greater than or equal to 17mm.

This arrangement provides structural support for the first groove-shaped structure 316 to extend effectively into the second groove-shaped structure 122 and for the reflecting cover 320 to extend effectively into the first groove-shaped structure 316, so as to reduce the occupation ratio of the internal space of the cooking cavity 110 occupied by the heating assembly 20 along the direction from the heating assembly 20 to the placement area 112.

If the groove depth of the second groove-shaped structure 122 is less than 17mm, along the groove depth direction of the second groove-shaped structure 122, the dimension of the part of the first groove-shaped structure 316 located inside the second groove-shaped structure 122 is too small, resulting in excessive compression of the cooking cavity 110 by the heating assembly 20 and affecting the effective volume of the cooking cavity 110.

If the groove depth of the first groove-shaped structure 316 is less than 17mm, along the groove depth direction of the first groove-shaped structure 316,the dimension of the part of the reflecting cover 320 located inside the first groove-shaped structure 316 is too small, resulting in excessive compression of the cooking cavity 110 by the heating assembly 20 and affecting the effective volume of the cooking cavity 110.

Exemplarily, the groove depth of the first groove-shaped structure 316 comprises 18mm, 19mm, 20mm, 21mm, 25mm, 28mm, 30mm and the like, which are not listed here one by one.

Exemplarily, the groove depth of the second groove-shaped structure 122 comprises 18mm, 19mm, 20mm, 21mm, 25mm, 28mm, 30mm and the like, which are not listed here one by one.

In some embodiments, optionally, as shown in Fig. 25, a fourth portion of the first reflecting plate 310 protrudes in a direction facing away from the first heating element 200 to form a protruding portion 318, and the protruding portion 318 and the cavity wall of the cooking cavity 110 are connected to each other through a third connecting element; wherein, a gap is formed between the part of the first reflecting plate 310 located on the peripheral side of the protruding portion 318 and the cavity wall of the cooking cavity 110.

In the embodiments, the cooperation structure of the first reflecting plate 310 and the cavity wall of the cooking cavity 110 is further defined.

The cooking appliance 1 further comprises the third connecting element. The fourth portion of the first reflecting plate 310 protrudes in a direction facing away from the first heating element 200 to form the protruding portion 318, and the protruding portion 318 is connected to the cavity wall of the cooking cavity 110 through the third connecting element.

A gap is provided between the part of the first reflecting plate 310 located on the peripheral side of the protruding portion 318 and the cavity wall of the cooking cavity 110. The gap plays a heat insulation role, and can reduce the amount of heat radiated to the outer surface of the appliance body 10, so that most heat is reflected to the food ingredients 2 in the placement region 112, heat loss is reduced, and the heating efficiency of the food ingredients 2 can be improved, thereby increasing the energy utilization rate and improving the energy efficiency of the cooking appliance 1.

Exemplarily, the gap between the part of the first reflecting plate 310 located on the peripheral side of the protruding portion 318 and the cavity wall of the cooking cavity 110 is greater than or equal to 0.5mm and less than or equal to 5mm.

Wherein, the value of the gap between the part of the first reflecting plate 310 located on the peripheral side of the protruding portion 318 and the cavity wall of the cooking cavity 110 comprises 0.6mm, 0.7mm, 0.8mm, 1mm, 1.2mm, 1.5mm, 1.8mm, 2mm, 2.2mm, 2.5mm, 2.7mm, 3mm, 3.5mm, 4mm, 4.2mm, 4.5mm, 4.8mm and the like, which are not listed here one by one.

Exemplarily, the third connecting element comprises a bolt, a screw or a rivet.

In some embodiments, optionally, as shown in Fig. 25,there are multiple protruding portions 318 and multiple third connecting elements, and each protruding portion 318cooperates with one third connecting element; the multiple protruding portions 318 comprise at least one first protruding portion 318a, at least one second protruding portion 318b and at least one third protruding portion 318c, the first protruding portion 318a is located on the peripheral side of the first groove-shaped structure 316, the second protruding portion 318b is located at the groove bottom of the first groove-shaped structure 316, and the third protruding portion 318c is located at the outer edge of the first reflecting plate 310.

In the embodiments, there are multiple protruding portions 318 and multiple third connecting elements, that is, there are a plurality of protruding portions 318 and there are a plurality of third connecting elements. Each protruding portion 318 cooperates with one third connecting element.

The types of the multiple protruding portions 318 are classified, so that the multiple protruding portions 318 comprise at least one first protruding portion 318a, at least one second protruding portion 318b and at least one third protruding portion 318c.

Wherein, the first protruding portion 318a is located on the peripheral side of the first groove-shaped structure 316, the second protruding portion 318b is located at the groove bottom of the first groove-shaped structure 316, and the third protruding portion 318c is located at the outer edge of the first reflecting plate 310. This arrangement increases the connection area between the first reflecting plate 310 and the cavity wall of the cooking cavity 110, increases the connection positions between the first reflecting plate 310 and the cavity wall of the cooking cavity 110, and can ensure the stability and reliability of the assembling of the first reflecting plate 310. Meanwhile, such arrangement can also ensure the uniformity and consistency of the gap between different positions of the first reflecting plate 310 and the cavity wall of the cooking cavity 110, thereby guaranteeing the heat insulation effect.

When there are multiple first protruding portions 318a, the multiple first protruding portions 318a are arranged at intervals.

When there are multiple second protruding portions 318b, the multiple second protruding portions 318b are arranged at intervals.

When there are multiple third protruding portions 318c, the multiple third protruding portions 318c are arranged at intervals.

In some embodiments, optionally, the distance from the part of the first reflecting plate 310 located on the peripheral side of the protruding portion 318 to the cavity wall of the cooking cavity 110 is greater than or equal to 1mm.

In the embodiments, the cooperation structure of the first reflecting plate 310 and the cavity wall of the cooking cavity 110 is further defined.

The distance from the part of the first reflecting plate 310 located on the peripheral side of the protruding portion 318 to the cavity wall of the cooking cavity 110 is greater than or equal to 1mm. This arrangement can ensure the distance of the gap in the direction from the first reflecting plate 310 to the cavity wall of the cooking cavity 110, guarantee the effectiveness and reliability of heat insulation, and effectively reduce the amount of heat radiated to the outer surface of the appliance body 10, so that most of the heat is reflected to the food ingredients 2 in the placement area 112, thus reducing heat loss.

Exemplarily, the distance from the part of the first reflecting plate 310 located on the peripheral side of the protruding portion 318 to the cavity wall of the cooking cavity 110 comprises 2mm, 3mm, 3.5mm, 4mm, 5mm and the like, which are not listed here one by one.

In some embodiments, optionally, the distance from the part of the first reflecting plate 310 located on the peripheral side of the protruding portion 318 to the cavity wall of the cooking cavity 110 is greater than or equal to 1.5mm and less than or equal to 10mm.

In the embodiments, the value range of the distance from the part of the first reflecting plate 310 located on the peripheral side of the protruding portion 318 to the cavity wall of the cooking cavity 110 is further defined. Wherein, the distance from the part of the first reflecting plate 310 located on the peripheral side of the protruding portion 318 to the cavity wall of the cooking cavity 110 is greater than or equal to 1.5mm and less than or equal to 10mm. That is to say, the distance from the part of the first reflecting plate 310 located on the peripheral side of the protruding portion 318 to the cavity wall of the cooking cavity 110 is further optimized, which helps improve the heat insulation effect, and can effectively reduce the amount of heat radiated to the outer surface of the appliance body 10, so that most of the heat is reflected to the food ingredients 2 in the placement area 112, thus reducing heat loss.

Exemplarily, the distance from the part of the first reflecting plate 310 located on the peripheral side of the protruding portion 318 to the cavity wall of the cooking cavity 110 comprises 2mm, 2.2mm, 2.5mm, 2.8mm, 3mm, 3.5mm, 3.7mm, 4mm, 4.2mm, 4.5mm, 4.8mm, 5mm, 5.1mm, 5.5mm, 5.7mm, 6mm, 7.2mm, 7.5mm, 7.8mm, 8mm, 8.5mm, 9mm, 9.5mm and the like, which are not listed here one by one.

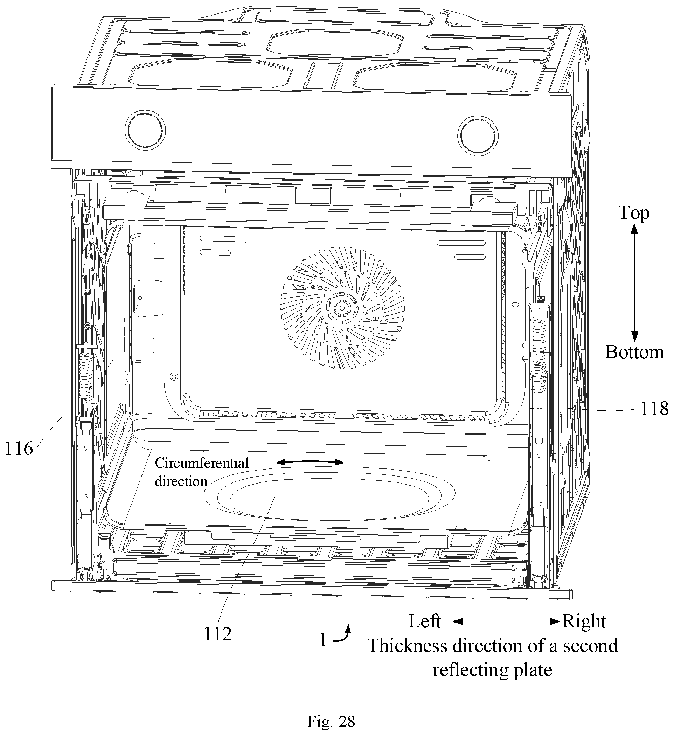

In some embodiments, optionally, as shown in Fig. 28, there are multiple second reflecting plates 80; the cavity sidewall of the cooking cavity 110 comprise multiple side walls, and the multiple side walls are sequentially connected along the circumferential direction of the placement region 112; each side wall of the cooking cavity 110 is disposed opposite to one second reflecting plate 80; alternatively, the multiple side walls of the cooking cavity 110 comprise a first side wall 116 and a second side wall 118 disposed opposite to each other, and either one of the first side wall 116 and the second side wall 118 is disposed opposite to one second reflecting plate 80.

In this embodiment, the number and arrangement position of the second reflecting plates 80 are further defined.

There are multiple second reflecting plates 80. The cavity sidewalls of the cooking cavity 110 comprise multiple side walls, and the multiple side walls are connected in sequence along the circumferential direction of the placement region 112.

Each side wall of the cooking cavity 110 is disposed opposite to one second reflecting plate 80, that is, each side wall cooperates with one second reflecting plate 80.

Alternatively, the multiple side walls of the cooking cavity 110 comprise the first side wall 116 and the second side wall 118 disposed opposite to each other, and any of the first side wall 116 and the second side wall 118 is disposed opposite to one second reflecting plate 80, that is, the first side wall 116 cooperates with one second reflecting plate 80, and the second side wall 118 cooperates with one second reflecting plate 80.

The number of the second reflecting plates 80 is greater than or equal to 2.

Thus, this has a function of increasing the cooperation area and cooperation angle between the second reflecting plate 80 and the cavity wall of the cooking cavity 110, and reflecting at least part of the thermal radiation emitted from the operation of the first heating element 200 to the placement region 112 from multiple directions and multiple angles. This can reflect thermal radiation to the placement region 112 from multiple positions and multiple angles, further reduce the radiation energy absorbed by the cavity wall of the cooking cavity 110, and thus reduce the temperature rise of the outer surface of the appliance body 10, and therefore, this can improve the touch feeling when a user's hand touches the outer surface of the appliance body 10, avoid the occurrence of scalding the user, and help further improve the service performance of the cooking appliance 1.

In some other embodiments, for two adjacent side walls among the multiple side walls of the cooking cavity 110, each side wall cooperates with one second reflecting plate 80.

In still some other embodiments, among three side walls of the multiple side walls of the cooking cavity 110, two of the three side walls are disposed opposite to each other and at an interval, the remaining one side wall is connected between the two side walls, and each side wall cooperates with one second reflecting plate 80.

In some embodiments, optionally, for the two end faces of the second reflecting plate 80 in the thickness direction of the second reflecting plate 80, the reflectivity of at least one end face is greater than or equal to 0.6; the thickness of the second reflecting plate 80 is greater than or equal to 0.3mm; a cross section of the second reflecting plate 80 is taken along a direction perpendicular to the thickness direction of the second reflecting plate 80, then the area of the cross section of the second reflecting plate 80 is S3, the area of the side wall disposed opposite to the second reflecting plate 80 is S4, and S3≥0.5×S4.

In the embodiments, for the two end faces of the second reflecting plate 80 in the thickness direction of the second reflecting plate 80, the reflectivity of at least one end face is greater than or equal to 0.6. Such arrangement can ensure the effectiveness and feasibility of the second reflecting plate 80 in reflecting at least part of the thermal radiation emitted from the operation of the first heating element 200 to the placement region 112. Exemplarily, the reflectivity of the at least one end face comprises 0.65, 0.7, 0.75, 0.8 and the like, which are not listed one by one here.

The thickness of the second reflecting plate 80 is greater than or equal to 0.3mm. This arrangement ensures the structural strength of the second reflecting plate 80, and can reduce the space occupation ratio of the cooking cavity 110 by the second reflecting plate 80, and prevent the heating assembly 20 from compressing the volume of the cooking cavity 110. Exemplarily, the thickness of the second reflecting plate 80 comprises 0.4mm, 0.5mm, 0.6mm, 0.7mm, 0.8mm and the like, which are not listed here one by one.

A cross section of the second reflecting plate 80 is taken along the direction perpendicular to the thickness direction of the second reflecting plate 80, the area of the cross section of the second reflecting plate 80 is S3, the area of the side wall disposed opposite to the second reflecting plate 80 is S4, and S3≥0.5×S4. By defining the ratio relationship of S3 and S4, the effectiveness of the second reflecting plate 80 in reflecting at least part of the radiation energy emitted by the first heating element 200 to the food ingredients 2 in the placement region 112 is ensured, and the radiation energy absorbed by the cavity wall of the cooking cavity 110 can be reduced. Exemplarily, S3=0.55×S4, S3=0.6×S4, S3=0.62×S4, S3=0.65×S4, S3=0.7×S4 and the like, which are not listed here one by one.

In some embodiments, optionally, for the two end faces of the first reflecting plate 310 in the thickness direction of the first reflecting plate 30, the reflectivity of at least one end face is greater than or equal to 0.6; the thickness of the first reflecting plate 310 is greater than or equal to 0.3mm; a cross section of the first reflecting plate 310 is taken along a direction perpendicular to the thickness direction of the first reflecting plate 310, then the area of the cross section of the first reflecting plate 310 is S5, the area of the cavity wall of the cooking cavity 110 disposed opposite to the first reflecting plate 310 is S6, and S5≥0.5×S6.

In the embodiments, for the two end faces of the first reflecting plate 310 in the thickness direction of the first reflecting plate 310, the reflectivity of at least one end face is greater than or equal to 0.6. This arrangement can ensure the effectiveness and feasibility of the first reflecting plate 310 in reflecting at least part of the thermal radiation emitted from the operation of the first heating element 200 to the placement region 112. Exemplarily, the reflectivity of the at least one end face comprises 0.65, 0.7, 0.75, 0.8 and the like, which are not listed here one by one.

The thickness of the first reflecting plate 310 is greater than or equal to 0.3mm. This arrangement ensures the structural strength of the first reflecting plate 310, and can also reduce the space occupation ratio of the cooking cavity 110 by the first reflecting plate 310, and prevent the heating assembly 20 from compressing the volume of the cooking cavity 110. Exemplarily, the thickness of the first reflecting plate 310 comprises 0.4mm, 0.5mm, 0.6mm, 0.7mm, 0.8mm and the like, which are not listed here one by one.

A cross section of the first reflecting plate 310 is taken along a direction perpendicular to the thickness direction of the first reflecting plate 310, then the area of the cross section of the first reflecting plate 310 is S5, the area of the cavity wall of the cooking cavity 110 disposed opposite to the first reflecting plate 310 is S6, and S5≥0.5×S6. The ratio relationship of S5 and S6 is defined to ensure the effectiveness of the first reflecting plate 310 in reflecting at least part of the radiation energy emitted by the first heating element 200 to the food ingredients 2 in the placement region 112, and the radiation energy absorbed by the cavity wall of the cooking cavity 110 can be reduced. Exemplarily, S5=0.55×S6, S5=0.6×S6, S5=0.62×S6, S5=0.65×S6, S5=0.7×S6, etc., which are not listed here one by one.

It can be understood that when the first reflecting plate 310 is disposed at the top of the cooking cavity 110, the area of the top wall of the cooking cavity 110 is S6.

In some embodiments, optionally, a cross section of the reflecting cover 320 is taken along a direction perpendicular to the height direction of the reflecting cover 320. In the cross section, a reference circle is located within the region enclosed by the inner contour line of the reflecting cover 320; wherein, the reference circle is a circle with a diameter less than or equal to 210mm, and the minimum distance from the center of the reference circle to a vertical center line of the cooking cavity 110 is less than or equal to 50mm.

In the embodiments, the structure of the reflecting cover 320 is further defined. A cross section of the reflecting cover 320 is taken along the direction perpendicular to the height direction of the reflecting cover 320. In the cross section, a reference circle is located within the region enclosed by the inner contour line of the reflecting cover 320. The reference circle is defined, wherein, the reference circle is a circle with a diameter less than or equal to 210mm. This arrangement can indirectly limit the dimension of the first heating element 200 disposed within the reflecting cover 320. While ensuring the effectiveness and feasibility of the reflecting portion 300 in optimizing the heat radiation path of the first heating element 200, the arrangement can reduce the material investment of the reflecting portion 300 and the first heating element 200, and lower the occupation ratio of the internal space of the cooking cavity 110.

Wherein, the minimum distance from the center of the reference circle to the vertical center line of the cooking cavity 110 is less than or equal to 50mm. That is, this arrangement can indirectly limit the positional relationship between the first heating element 200 disposed within the reflecting cover 320 and the vertical center line of the cooking cavity 112, so that the thermal radiation emitted from the operation of the first heating element 200 can be relatively uniformly reflected to different positions of the placement region 112, which provides structural support for ensuring the uniformity and consistency of heating different positions of the food ingredients 2. Exemplarily, the minimum distance from the center of the reference circle to the center line of the cooking cavity 110 comprises 48mm, 45mm, 42mm, 40mm, 35mm and the like, which are not listed here one by one.

In some embodiments, optionally, the depth of the reflecting cover 320 is H1, and the diameter of the reference circle is H2, where H1/H2≤0.17.

In the embodiments, the structure of the reflecting cover 320 is further defined. The depth of the reflecting cover 320 is H1, the diameter of the reference circle is H2, and the relationship between H1 and H2 satisfies: H1/H2≤0.17. This arrangement can indirectly limit the dimension of the first heating element 200 disposed within the reflecting cover 320. While ensuring the effectiveness and feasibility of the reflecting portion 300 in optimizing the heat radiation path of the first heating element 200, this arrangement can reduce the material investment of the reflecting portion 300 and the first heating element 200, and reduce the occupation ratio of the internal space of the cooking cavity 110.

Exemplarily, H1/H2=0.16, H1/H2=0.15, H1/H2=0.14, H1/H2=0.13 and H1/H2=0.12 and the like, which are not listed here one by one.

In some embodiments, optionally, when the heating assembly 20 is disposed on the side portion of the cooking cavity 110, part of the cavity wall of the cooking cavity 110 is recessed in a direction facing away from the heating assembly 20 to form a third groove-shaped structure, and the heating assembly 20 is disposed within the third groove-shaped structure.

In the embodiments, the cooperation structure between the heating assembly 20 and the cavity wall of the cooking cavity 110 is further defined.

When the heating assembly 20 is located at the side portion of the cooking cavity 110, part of the cavity wall of the cooking cavity 110 is recessed in a direction facing away from the heating assembly 20 to form the third groove-shaped structure, and the heating assembly 20 is located within the third groove-shaped structure. The third groove-shaped structure has a function of accommodating the heating assembly 20, so as to reduce the occupation ratio of the internal space of the cooking cavity 110 occupied by the heating assembly 20 in a direction from the cavity wall of the cooking cavity 110 to the center of the cooking cavity 110, thereby ensuring the space within the cooking cavity 110 for effectively accommodating the food ingredients 2, preventing the heating assembly 20 from compressing the volume of the cooking cavity 110, and facilitating fully utilization of the internal space of the cooking cavity 110.

In some embodiments, optionally, along the direction from the first reflecting plate 310 to the reflecting cover 320, the height of the reflecting cover 320 exceeds the first heating element 200.

In the embodiments, the cooperation structure of the reflecting cover 320, the first heating element 200 and the placement region 112 is further defined.

Along the direction from the heating assembly 20 to the placement region 112, the height of the reflecting cover 320 exceeds that of the first heating element 200.

Specifically, when the heating assembly 20 is disposed at the top of the cooking cavity 110, along the direction from the reflecting cover 320 to the first reflecting plate 310, the positional height of the reflecting cover 320 is equal to that of the first heating element 200, or the positional height of the first heating element 200 is greater than that of the reflecting cover 320.

Specifically, when the heating assembly 20 is disposed at the side portion of the cooking cavity 110, along the direction from the reflecting cover 320 to the first reflecting plate 310, the distance from the position of the first heating element 200 to the placement region 112 is greater than or equal to the distance from the position of the reflecting cover 320 to the placement region 112.

By further defining the positional relationship among the reflecting cover 320, the first heating element 200 and the placement region 112, the reflecting cover 320 can protect the first heating element 200 and provides structural support for guaranteeing the service performance of the cooking appliance 1.

In some embodiments, optionally, the power of the first heating element 200 is greater than or equal to 800W.

In the embodiments, the power of the first heating element 200 is greater than or equal to 800W to ensure the cooking efficiency of the cooking appliance 1.

Exemplarily, the power of the first heating element 200 comprises 850W, 900W, 950W, 980W and the like, which are not listed here one by one.

Exemplarily, the power of the second heating element 500 comprises 850W, 900W, 950W, 980W and the like, which are not listed here one by one.

Exemplarily, in the present application, the cavity wall of the cooking cavity 110 is pressed outward to form the second groove-shaped structure 122, and the heating assembly 20 is embedded into the second groove-shaped structure 122, so as to achieve the purpose of not compressing the cavity volume of the cooking cavity 110 and ensure that each layer of grill in the cooking cavity 110 can perform cooking normally.

Exemplarily, the cooking appliance 1 comprises the appliance body 10 and the heating assembly 20. The heating assembly 20 comprises the first reflecting plate 310, the reflecting cover 320, the first heating element 200, the second heating element 500 and two second reflecting plates 80.

Exemplarily, the first reflecting plate 310 is disposed within the cooking cavity 110 and located at the top of the cooking cavity 110. The first reflecting plate 310 can reduce heat radiated from the first heating element 200 and the second heating element 500 to the cavity top wall of the cooking cavity 110, and reduce the radiation energy absorbed by the cavity top wall of the cooking cavity 110.

Exemplarily, the reflecting cover 320 is disposed below the first reflecting plate 310, and the opening 322 of the reflecting cover 320 faces downward. The reflecting cover 320 is configured to constrain the heat radiation range of the first heating element 200, and the lower edge of the reflecting cover 320 is flush with the lower edge of the second heating element 500.

Exemplarily, the first heating element 200 is disposed within the reflecting cover 320.

Exemplarily, the second heating element 500 is disposed below the first reflecting plate 310.

Exemplarily, the two second reflecting plates 80 are located on the left and right sides of the cooking cavity 110, and the second reflecting plates 80 are used to reduce heat loss at the portion of the cavity wall of the cooking cavity 110 disposed opposite to the second reflecting plates 80.

Exemplarily, it is taken as an example that the heating assembly 20 is arranged at the top of the cooking cavity 110, the appliance body 10 comprises a top plate 120, and the top plate 120 forms part of the cavity wall of the cooking cavity 110. The top plate 120 is recessed in a direction facing away from the heating assembly 20 to form the second groove-shaped structure 122, and the groove depth of the second groove-shaped structure 122 is greater than or equal to 17mm.

Exemplarily, the first reflecting plate 310 is arranged to be attached to the top plate 120. For the two end faces of the first reflecting plate 310 in the thickness direction of the first reflecting plate 310, the reflectivity of at least one end face is greater than or equal to 0.6. The thickness of the first reflecting plate 310 is greater than or equal to 0.3mm. The first reflecting plate 310 is recessed in a direction facing away from the first heating element 200 to form the first groove-shaped structure 316, and the groove depth of the first groove-shaped structure 316 is greater than or equal to 17mm.

Exemplarily, the first reflecting plate 310 is connected to the top plate 120 through a screw. The fourth portion of the first reflecting plate 310 protrudes in a direction facing away from the first heating element 200 to form the protruding portion 318, and the protruding portion 318 is connected to the top wall through a screw. The value of the gap between the portion of the first reflecting plate 310 located on the peripheral side of the protruding portion 318 and the top plate 120 is greater than or equal to 1mm, and an air interlayer is formed between the portion of the first reflecting plate 310 located on the peripheral side of the protruding portion 318 and the top plate 120, so as to ensure the heat insulation effect.

Exemplarily, the second heating element 500, the first reflecting plate 310 and the top plate 320 are connected through a screw and a nut.

Exemplarily, the shape of the reflecting cover 320 is not limited. The reflecting cover 320 can accommodate a circle with a diameter less than or equal to 210mm. The reflecting cover 320 comprises the surrounding plate 324, and one end of the surrounding plate 324 encloses the opening 322. Alternatively, the reflecting cover 320 comprises the surrounding plate 324 and the cover plate 326, the cover plate 326 covers the other end of the surrounding plate 324, the cover plate 326 can completely block the other end of the surrounding plate 324, and the cover plate 326 can also block part of the other end of the surrounding plate 324. Along the height direction of the cooking appliance 1, the lower edge of the reflecting cover 320 shall not be lower than the positional height of the second heating element 500. In addition, the depth of the reflecting cover 320 is H1, the diameter of the reference circle is H2, where H1/H2≤0.17.

Exemplarily, the first heating element 200 is placed in the reflecting cover 320, and along the height direction of the cooking appliance 1, the positional height of the first heating element 200 is not lower than the lower edge of the reflecting cover 320. The power of the first heating element 200 is greater than or equal to 800W.

Exemplarily, when the first heating element 200 comprises fragile heating elements such as a glass heating element and a quartz heating element, the heating assembly 20 further comprises the protective net 400. The appearance and dimension of the protective net 400 are consistent with those of the reflecting cover 320, and the thickness of the protective net 400 is not limited. The upper surface of the protective net 400 is attached to the lower edge of the reflecting cover 320. A screw passes through the connecting plate 410 of the protective net 400 and the first reflecting plate 310 and is fixed to the top plate 120. Specifically, the screw is fixed with a nut on the top plate 120.

Exemplarily, the material of the first reflecting plate 310 is consistent with that of the two second reflecting plates 80. For the two end faces of the first reflecting plate 310 in the thickness direction of the first reflecting plate 310, the reflectivity of at least one end face is greater than or equal to 0.6. For the two end faces of the second reflecting plate 80 in the thickness direction of the second reflecting plate 80, the reflectivity of at least one end face is greater than or equal to 0.6. The thicknesses of the first reflecting plate 310 and the second reflecting plates 80 are both greater than or equal to 0.3mm. A cross section of the second reflecting plate 80 is taken along the direction perpendicular to the thickness direction of the second reflecting plate 80, the area of the cross section of the second reflecting plate 80 is S3, the area of the side wall disposed opposite to the second reflecting plate 80 is S4, and S3≥0.5×S4. A cross section of the first reflecting plate 310 is taken along the direction perpendicular to the thickness direction of the first reflecting plate 310, the area of the cross section of the first reflecting plate 310 is S5, the area of the cavity wall of the cooking cavity 110 disposed opposite to the first reflecting plate 310 is S6, and S5≥0.5×S6.

It is taken as an example that the cooking appliance 1 is an oven, the temperature gear is set to 190°C, an oven with the same specification and the same control logic are used, and the energy consumption results so obtained are shown in Table 2.

**Table 2**

| No. | Heating solution | Energy consumption (kWh) |
|---|---|---|
| 1 | The volume of the cooking cavity is compressed | 0.465 |
| 2 | The volume of the cooking cavity is not compressed | 0.592 |
| 3 | The volume of the cooking cavity is not compressed, and the heating assembly comprises two second reflecting plates | 0.492 |

In the heating solution of the present application corresponding to No.1, the second groove-shaped structure 122 is not formed on the cavity wall of the cooking cavity 110, and the heating assembly 20 occupies the space of the cooking cavity 110, which is therefore referred to as compressing the volume of the cooking cavity 110. In the heating solution of the present application corresponding to No.2 , the third portion of the first reflecting plate 310 is recessed in a direction facing away from the first heating element 200 to form the first groove-shaped structure 316, the second groove-shaped structure 122 is disposed at the portion of the cavity wall of the cooking cavity 110 arranged opposite to the first reflecting plate 310, at least part of the first groove-shaped structure 316 extends into the second groove-shaped structure 122, and at least part of the reflecting cover 320 is located within the first groove-shaped structure 316. That is, the heating assembly 20 does not occupy the effective cooking space of the cooking cavity 110, which is therefore said not to compress the volume of the cooking cavity 110, wherein, the heating assembly 20 does not comprise the two second reflecting plates 80. In the heating solution of the present application corresponding to No.3 , the third portion of the first reflecting plate 310 is recessed in a direction facing away from the first heating element 200 to form the first groove-shaped structure 316, the second groove-shaped structure 122 is disposed at the portion of the cavity wall of the cooking cavity 110 arranged opposite to the first reflecting plate 310, at least part of the first groove-shaped structure 316 extends into the second groove-shaped structure 122, and at least part of the reflecting cover 320 is located within the first groove-shaped structure 316. That is, the heating assembly 20 does not occupy the effective cooking space of the cooking cavity 110, which is therefore said not to compress the volume of the cooking cavity 110, and the heating assembly 20 comprises two second reflecting plates 80 arranged on the left and on the right.

Although the energy consumption of the heating solution corresponding to No.3 is slightly higher than that of the heating solution corresponding to No.1, it is still within a high energy efficiency (energy consumption less than 0.58kWh) range, and can solve the problem that cooking cannot be performed on the uppermost grill layer of the oven. Exemplarily, the number of the second reflecting plates 80 is greater than or equal to 2. Exemplarily, the heating assembly 20 may be mounted at any position on the cavity wall of the cooking cavity 110.

As shown in Fig. 34, Fig. 35, Fig. 36 and Fig. 37, the cooking appliance 1 according to some embodiments of the present application comprises: the appliance body 10, the appliance body 10 being provided with the cooking cavity 110 therein, and the cavity wall of the cooking cavity 110 comprising the first mounting wall 123; the heating assembly 20 located within the cooking cavity 110, the heating assembly comprising the first heating element 200 and the reflecting portion 300, the reflecting portion 300 being located between the first mounting wall 123 and the first heating element 200, and the reflecting portion 300 being connected to the first mounting wall 123; the reflective protrusion 344 is integrally formed on a side of the reflecting portion 300 facing away from the first mounting wall 123, and the reflective protrusion 344 is disposed around the first heating element 200.

Specifically, for the cooking appliance 1, the cooking appliance 1 comprises the appliance body 10 and the heating assembly 20. The appliance body 10 is provided with the cooking cavity 110 therein, and food ingredients can be placed inside the cooking cavity 110.

The heating assembly 20 is located within the cooking cavity 110, and the heating assembly 20 comprises the first heating element 200 and the reflecting portion 300.The first heating element 200 operates to transfer heat by thermal radiation. The reflecting portion 300 reflects at least part of the thermal radiation emitted from the operation of the first heating element 200 to the food ingredients 2. That is, the reflecting portion 300 has a function of optimizing the heat radiation path of the first heating element 200, so as to reflect at least part of the radiation energy emitted by the first heating element 200 to the food ingredients 2 and then reduce the radiation energy absorbed by the cavity wall of the cooking cavity 110, so that the thermal radiation emitted by the first heating element 200 is more intensively reflected to the food ingredients 2, which can improve the heating efficiency of the food ingredients 2, and then increases energy utilization rate, enhances the energy efficiency of the cooking appliance 1, and further improves product service performance and market competitiveness.

It can be understood that the thermal radiation emitted by the first heating element 200 is more intensively reflected to the food ingredients 2, and thus the radiation energy absorbed by the cavity wall of the cooking cavity 110 can be reduced, and the temperature rise of the outer surface of the appliance body 10 can be lowered. In this way, the touch feeling can be improved when the hand of a user touches the outer surface of the appliance body 10, which avoids the occurrence of scalding the user, and helps further improve the service performance of the cooking appliance 1.

The reflecting portion 300 is located between the first mounting wall 123 and the first heating element 200, the reflecting portion 300 has a function of separating the first heating element 200 from the first mounting wall 123, and the reflecting portion 300 can reflect at least part of the radiation energy emitted by the first heating element 200 to the food ingredients 2 and reduce the radiation energy absorbed by the cavity wall of the cooking cavity 110.

If the reflecting portion 300 is not provided, the thermal radiation emitted by the first heating element 200 will be directly irradiated to the cavity walls of the cooking cavity 110, especially the first mounting wall 123 immediately adjacent to the first heating element 200, and this will cause the temperature rise of the cavity wall of the cooking cavity 110 and further dissipate heat in the form of secondary radiation, thus reducing the heating efficiency of the cooking appliance 1; meanwhile, the cavity wall of the cooking cavity 1 will heat up after absorbing radiation and dissipate heat through the outer surface of the appliance body 10, and thus this will raise the temperature of the outer surface of the appliance body 10 and cause energy waste. Therefore, the structural arrangement of the present application can reduce the thermal load of the cavity wall of the cooking cavity 110, concentrate more heat on the food ingredients 2, which can increase energy utilization rate, enhance the energy efficiency of the cooking appliance 1, and further improve product service performance and market competitiveness.

The reflective protrusion 334 is integrally formed on the side of the reflecting portion 300 facing away from the first mounting wall 123, and the reflective protrusion 334 is arranged around the first heating element 200. It can be understood that the reflective protrusion is in cylindrical shape and located on the peripheral side of the first heating element 200. The side of the reflective protrusion 334 facing away from the first mounting wall 123 comprises the opening 322, and at least part of the opening 332 is disposed opposite to the region where the food ingredients 2 are located. The structural arrangement of the reflective protrusion 334 has a function of optimizing the heat radiation path of the first heating element 200, so as to reflect at least part of the radiation energy emitted by the first heating element 200 to the food ingredients 2 through the opening 322, and then reduce the radiation energy absorbed by the cavity wall of the cooking cavity 110, so that the thermal radiation emitted by the first heating element 200 is more intensively reflected to the food ingredients 2.

Thus, it can be seen that the present application reasonably arranges the structure of the cooking appliance 1, which can reduce the thermal load of the cavity wall of the cooking cavity 110, concentrate more heat on the food ingredients 2, and then can increase energy utilization rate, enhance the energy efficiency of the cooking appliance 1, and further improve product service performance and market competitiveness.

It can be understood that the reflective protrusion 344 is integrally formed on the side of the reflecting portion 300 facing away from the first mounting wall 123. Since this structural arrangement omits the assembling process of the reflective protrusion 344, it simplifies the processes of assembling and subsequently disassembling the reflecting portion 300, then helps improve the assembling and disassembling efficiency, and thereby reduces production and maintenance costs. In addition, the integral formation of the reflective protrusion 344 on the reflecting portion 300 can meet the precision requirement for the molding dimensions of the reflecting portion 300, further ensure the position relationship between the first heating element 200 and the region for placing food ingredients 2, guarantee the contact area between the path of thermal radiation and the food ingredients 2, and provide structural support for ensuring the cooking effect.

In some embodiments, optionally, the first portion of the reflecting portion 300 is recessed toward the side facing away from the first mounting wall 123 to form the reflective protrusion 344.

Specifically, the structure of the reflective protrusions 344 is detailed. The first portion of the reflective portion 300 is recessed toward the side facing away from the first mounting wall 123 to form the reflective protrusion 344, that is, the reflective protrusion 344 is a hollow structure, and the first portion of the reflective portion 300 is arranged in a bent form. In this way, it not only meets the use need of arranging the reflective protrusions 344 around the first heating element 200, but also helps improve the structural strength and rigidity of the reflecting portion 300, enhances the deformation resistance of the reflecting portion 300, improve the mounting reliability and use feasibility of the reflecting portion 300, suppress dynamic vibration, and helps prolong the service life of the product.

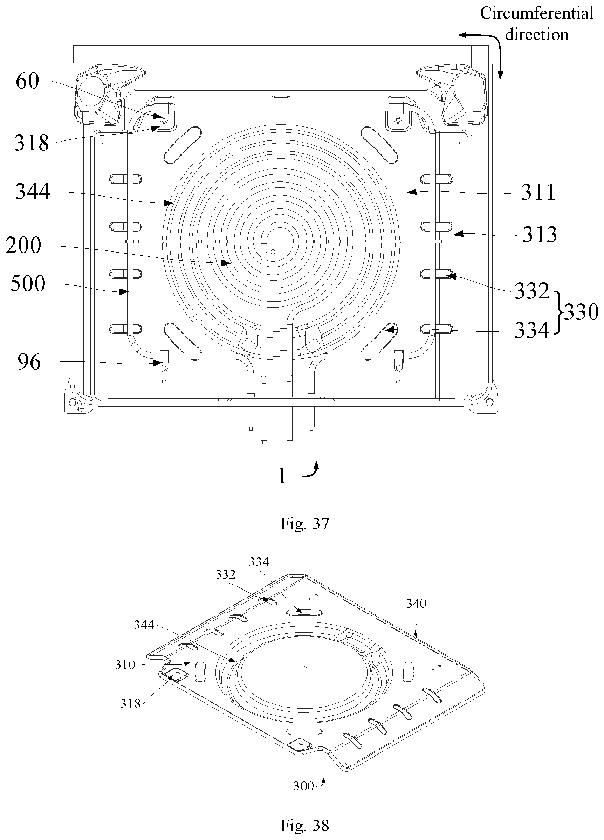

In some embodiments, optionally, as shown in Fig. 38, the reflecting portion 300 comprises the first reflecting plate 310, the first reflecting plate 310 is located between the reflective protrusion 344 and the first mounting wall 123, the reflective protrusion 344 is integrally connected with the first reflecting plate 310, and the first reflecting plate 310 is connected with the first mounting wall 123.

Specifically, the reflecting portion 300 comprises the first reflecting plate 310. The first reflecting plate 310 is located between the reflective protrusion 344 and the first mounting wall 123, the first reflecting plate 310 is connected to the first mounting wall 123, and the first reflecting plate 310 is located between the reflective protrusion 344 and the first mounting wall 123. In other words, the reflective protrusion 344 is connected to the first mounting wall 123 through the first reflecting plate 310. The first reflecting plate 310 serves as a rigid base body, when the reflecting portion 300 is subjected to an external load, the first reflecting plate 310 can bear most of the load, reduce the probability of excessive deformation of the reflective protrusion 344 due to being stressed alone, and improve the overall deformation resistance. Meanwhile, the cooperation of the first reflecting plate 310 and the reflective protrusion 344 can disperse stress concentration. The tensile stress at the joint between the reflective protrusion 344 and the first reflecting plate 310 can be transmitted to the outer edge of the first reflecting plate 310 via the first reflecting plate 310, thus avoiding crack formation caused by stress concentration in a small area and contributing to improving the service performance of the product.

Exemplarily, the reflective protrusion 344 is a hollow structure.

Exemplarily, the reflective protrusion 344 is a solid structure.

In some embodiments, optionally, as shown in Fig. 37 and Fig. 38, a first pressing rib structure 330 is arranged on the portion of the reflecting portion 300 located on the peripheral side of the reflective protrusion 344.

Specifically, the portion of the reflecting portion 300 located on the peripheral side of the reflective protrusion 344 is provided with the first pressing rib structure 330. By arranging the first pressing rib structure 330, the effective bearing thickness of the portion of the reflecting portion 300 located on the peripheral side of the reflective protrusion 344 is increased, and the bending stiffness of the reflecting portion 300 can be improved. Meanwhile, when the reflective protrusion 344 is subjected to thermal radiation and vibration, tensile stress is easily generated at the portion of the reflecting portion 300 located on the peripheral side of the reflective protrusion 344. The arrangement of the first pressing rib structure 330 can decompose a concentrated circumferential stress into multiple local stresses so as to disperse a peripheral stress. In addition, the arrangement of the first pressing rib structure 330 can increase the mass distribution and rigidity of the reflecting portion 300, help raise the natural frequency, and further achieve the purpose of suppressing resonance deformation.

At the same time, the first pressing rib structure 330 is located on the peripheral side of the reflective protrusion 344, and interference will not occur between the first pressing rib structure 330 and the first heating element 200 when the reflecting portion 300 and the first heating element 200 are assembled.

In some embodiments, optionally, as shown in Fig. 38, the outer edge of the reflecting portion 300 is bent toward the first mounting wall 123 to form a curled edge 340.

Specifically, the outer edge of the reflecting portion 300 is bent toward the first mounting wall 123 to form the curled edge 340, which can eliminate the problem of weak edge, achieve the effect of structural reinforcement and improve the overall rigidity. The structural arrangement of the curled edge 340 can increase the effective bearing thickness, improve the bending resistance and shear resistance of the edge of the reflecting portion 300, disperse an edge stress, avoid crack formation due to stress concentration, and can further inhibit vibration deformation and reduce the high-frequency vibration amplitude of the edge.

In addition, the outer edge of the reflecting portion 300 is bent toward the first mounting wall 123 to form the curled edge 340, in this way, when the reflecting portion 300 is assembled, the outer edge of the reflecting portion 300 will not scratch the operator, and the assembling safety of the cooking appliance 1 can be guaranteed.

In some embodiments, optionally, as shown in Fig. 37, the reflecting portion 300 comprises the plate body 311 and two bent plates 313, the plate body 311 is connected between the two bent plates 313, and the plate body 311 is integrally formed with the reflective protrusion 344; the spacing between the sides of the two bent plates 313 facing away from the plate body 311 is larger than the spacing between the sides of the two bent plates 313 connected to the plate body 311;on the basis that the reflecting portion 300 is provided with the first pressing rib structure 330, the first pressing rib structure 330 comprises a first pressing rib 332, the first pressing rib 332 is located at the joint of the plate body 311 and the bent plates 313, and/or the first pressing rib structure 330 comprises a second pressing rib 334, and the second pressing rib 334 is located at the plate body 311.

Specifically, the reflecting portion 300 comprises the plate body 311 and two bent plates 313, and the plate body 311 is connected between the two bent plates 313.

It can be understood that the bent plates 313 are arranged oblique relative to the plate body 311. The side of the bent plate 313 connected to the plate body 311 is denoted as a first edge, and the side of the bent plate 313 facing away from the plate body 311 is denoted as a second edge, and the spacing between the second edges of the two bent plates 313 is greater than the spacing between the first edges of the two bent plates 313.

The two bent plates 313 cooperate with the plate body 311 to further optimize the radiation path of heat, so that heat can be radiated intensively to the food ingredient 2 and the cooking effect of the food ingredients 2 is ensured. In addition, the oblique direction of the two bent plates 313 relative to the plate body 311 is conducive to further increasing the spacing between the reflecting portion 300 and the first mounting wall 123, and helping to further reduce the thermal load on the cavity wall of the cooking cavity 110, so that more heat is concentrated on the food ingredients 2, which can improve the energy utilization rate and enhance the energy efficiency of the cooking appliance 1.

On the basis that the reflecting portion 300 is provided with the first pressing rib structure 330, the first pressing rib structure 330 comprises the first pressing rib 332, the first pressing rib 332 is disposed at the joint of the plate body 311 and the bent plate 313, and/or the first pressing rib structure 330 comprises the second pressing rib 334, and the second pressing rib 334 is disposed at the plate body 311.

In the case that the first pressing rib structure 330 comprises the first rib 332, the first rib 332 is arranged at the joint of the plate body 311 and the bent plate 313, and the first pressing rib 332 has the advantages of strengthening connection rigidity, inhibiting the deformation of the bent plates 313 and improving assembling stability. Wherein, the number of the first rib 332 is one or there are multiple first pressing ribs 332, the multiple first pressing ribs 332 are arranged at intervals, and the first pressing rib 332 is disposed at the joint between each bent plate 313 and the plate body 311.

In the case that the first pressing rib structure 330 comprises the second pressing rib 334, the second pressing rib 334 has the advantages of improving the bending stiffness of the plate body 311 and optimizing the reflection uniformity of thermal radiation. It can be understood that the second pressing rib 334 can constrain the local deformation of the plate body 311, ensure the dimension of the plate body 311, and further enable thermal radiation to cover the food ingredients 2 more uniformly. Wherein, the number of the second pressing rib 334 is one or there are multiple second pressing ribs 334, the multiple second pressing ribs 334 are arranged at intervals, and the multiple second pressing ribs 334 are arranged at intervals along the circumferential direction of the reflective protrusion 344.

In some embodiments, optionally, for the two end faces of the reflecting portion 300 in the direction from the heating assembly 20 to the first mounting wall 123, the reflectivity of at least one end face is greater than or equal to 0.6; the thicknesses of the portion of the reflecting portion 300 located on the peripheral side of the reflective protrusion 344 and the portion of the reflecting portion 300 located within the reflective protrusion 344 are greater than or equal to 0.3mm.

Specifically, for the two end faces of the reflecting portion 300 in the direction from the heating assembly 20 to the first mounting wall 123, the reflectivity of at least one end face is greater than or equal to 0.6, and this arrangement can ensure the effectiveness and feasibility of the reflecting portion 300 in reflecting at least part of the thermal radiation emitted from the operation of the first heating element 200 to the food ingredients 2. Exemplarily, the reflectivity of the at least one end face comprises 0.65, 0.7, 0.75, 0.8 and the like, which are not listed here one by one.

The thicknesses of the part of the reflecting portion 300 located on the peripheral side of the reflective protrusion 344 and the part of the reflecting portion 300 located within the reflective protrusion 344 is greater than or equal to 0.3mm. This arrangement can reduce the occupation ratio of the space of the cooking cavity 110 occupied by the reflecting portion 300 while ensuring the structural strength of the reflecting portion 300, and can prevent the heating assembly 20 from compressing the volume of the cooking cavity 110. Exemplarily, the thicknesses of the part of the reflecting portion 300 located on the peripheral side of the reflective protrusion 344 and the part of the reflecting portion 300 located within the reflective protrusion 344 comprises 0.4mm, 0.5mm, 0.6mm, 0.7mm, 0.8mm and the like, which are not listed here one by one.

In some embodiments, optionally, as shown in Fig. 37 and Fig. 38, the portion of the reflecting portion 300 located on the peripheral side of the reflective protrusion 344 protrudes toward the first mounting wall 123 to form the protruding portion 318, and the protruding portion 318 and the first mounting wall 123 are connected through the first connecting element 60; wherein, a gap is provided between the portion of the reflecting portion 300 located on the peripheral side of the protruding portion 318 and the first mounting wall 123.

Specifically, the part of the reflecting portion 300 located on the peripheral side of the reflective protrusion 344 protrudes toward the first mounting wall 123 to form the protruding portion 318, and the protruding portion 318 is connected to the first mounting wall 123 through the first connecting element 60.

A gap is provided between the part of the reflecting portion 300 located on the peripheral side of the protrusion 318 and the first mounting wall 123, and the gap between the reflecting portion 300 and the first mounting wall 123 has a heat insulation effect, which can reduce the amount of heat radiated to the outer surface of the appliance body 10, so that most heat is reflected to the food ingredients 2, and heat loss is reduced, which can improve the heating efficiency of the food ingredients 2, and thereby increase the energy utilization rate and promote the energy efficiency of the cooking appliance 1.

Exemplarily, the value of the gap between the part of the reflecting plate 310 located on the peripheral side of the protruding portion 318 and the cavity wall of the cooking cavity 110 is greater than or equal to 0.5mm and less than or equal to 5mm.

Wherein, the value of the gap between the part of the reflecting portion 300 located on the peripheral side of the protruding portion 318 and the first mounting wall 123 comprises 0.6mm, 0.7mm, 0.8mm, 1mm, 1.2mm, 1.5mm, 1.8mm, 2mm, 2.2mm, 2.5mm, 2.7mm, 3mm, 3.5mm, 4mm, 4.2mm, 4.5mm, 4.8mm and the like, which are not listed here one by one.

In some embodiments, optionally, the gap between the portion of the reflecting portion 300 located on the peripheral side of the protruding portion 318 and the first mounting wall 123 is greater than or equal to 1mm.

Specifically, the value of the gap between the part of the reflecting portion 300 located on the peripheral side of the protruding portion 318 and the first mounting wall 123 is greater than or equal to 1mm, which can ensure the distance between the reflecting portion 300 and the first mounting wall 123, guarantee the effectiveness and reliability of heat insulation, and effectively reduce the amount of heat radiated to the outer surface of the appliance body 10, thus reflecting most of the heat to the food ingredients 2 and reducing heat loss.

In some embodiments, optionally, the gap between the portion of the reflecting portion 300 located on the peripheral side of the protruding portion 318 and the first mounting wall 123 is greater than or equal to 1.5mm and less than or equal to 10mm.

Specifically, the value of the gap between the part of the reflecting portion 300 located on the peripheral side of the protruding portion 318 and the first mounting wall 123 is greater than or equal to 1.5mm and less than or equal to 10mm, that is, the distance from the part of the reflecting portion 300 located on the peripheral side of the protruding portion 318 to the cavity wall of the cooking cavity 110 is further optimized, which is conducive to improving the heat insulation effect, and can effectively reduce the amount of heat radiated to the outer surface of the appliance body 10, thus reflecting most of the heat to the food ingredients 2 and reducing heat loss.

In some embodiments, optionally, there are multiple protruding portions 318 and multiple first connecting elements 60, and each protruding portion 318 cooperates with one first connecting element 60.

Specifically, there are multiple protruding portions 318 and there are multiple first connecting elements 60, that is, there are a plurality of protruding portions 318 and there are a plurality of first connecting elements 60. Each protruding portion 318 cooperates with one first connecting element 60, which increases the connection area between the reflecting portion 300 and the first mounting wall 123, increases the connection positions between the reflecting portion 300 and the first mounting wall 123, and can ensure the stability and reliability of the assembling of the reflecting portion 300. Meanwhile, such arrangement can ensure the uniformity and consistency of the gaps between different positions of the reflecting portion 300 and the first mounting wall 123, and guarantee the heat insulation effect.

In some embodiments, optionally, along the direction from the heating assembly 20 to the first mounting wall 123, the height of the reflective protrusion 344 is greater than or equal to 1cm.

Specifically, the height of the reflective protrusion 344 in the direction from the heating assembly 20 to the first mounting wall 123 is greater than or equal to 1cm, and the height of the reflective protrusion 344 is used to ensure the effectiveness of limiting the heat radiation path of the first heating element 200.

If the height of the reflective protrusion 344 is less than 1cm, the reflective protrusion 344 will have a poor restraining effect on the heat radiation range of the first heating element 200, less heat will be reflected to the food ingredient 2 by the reflective protrusion 344, the energy inside the cooking cavity 110 is dispersed, most of the energy will still be dissipated to the surrounding environment as ineffective heat through the appliance body 10, and the energy efficiency of the cooking appliance 1 is low.

In some embodiments, optionally, the area of the first mounting wall is S1, a cross section of the heating assembly 20 is taken along the direction perpendicular to the direction from the heating assembly 20 to the first mounting wall 123. In the cross section, the area of the region enclosed by the inner contour line of the reflective protrusion 344 is S2, where S2/S1≤50%.

Specifically, the cooperation structure of the heating assembly 20 and the appliance body 10 is further defined.

The area of the first mounting wall 123 is denoted as S1, and a cross section of the heating assembly 20 is taken along the direction perpendicular to the direction from the heating assembly 20 to the first mounting wall 123, and in the cross section, the area of the region enclosed by the inner contour line of the reflective protrusion 344 is denoted as S2. Wherein, the relationship between S1 and S2 satisfies: S2/S1≤50%. This arrangement can reduce the material input amount of the reflecting portion 300 and lower the occupation ratio of the internal space of the cooking cavity 110 while ensuring the effectiveness and feasibility of the reflecting portion 300 in optimizing the heat radiation path of the first heating element 200.

In some embodiments, optionally, a cross section of the reflective protrusion 344 is taken along a direction perpendicular to the direction from the heating assembly 20 to the first mounting wall 123. In the cross section, a reference circle is located within the region enclosed by the inner contour line of the reflective protrusion 344; wherein the reference circle is a circle with a diameter less than or equal to 210mm, and the minimum distance from the center of the reference circle to the center line of the cooking cavity 110 is less than or equal to 50mm.

Specifically, a cross section of the reflective protrusion 344 is taken along the direction perpendicular to the direction from the heating assembly 20 to the first mounting wall 123, and in the cross section, the reference circle is located within the region enclosed by the inner contour line of the reflective protrusion 344. The reference circle is defined, wherein, the reference circle is a circle with a diameter less than or equal to 210mm. This arrangement can indirectly limit the dimension of the first heating element 200 disposed within the reflective protrusion 344, and can reduce the material input amount of the reflecting portion 300 and the first heating element 200 while ensuring the effectiveness and feasibility of the reflecting portion 300 in optimizing the heat radiation path of the first heating element 200, and lower the occupation ratio of the internal space of the cooking cavity 110.

Wherein, the minimum distance from the center of the reference circle to the center line of the cooking cavity 110 is less than or equal to 50mm. That is, this arrangement can indirectly limit the positional relationship between the first heating element 200 located within the reflective protrusion 344 and the center line of the cooking cavity 110, so that the thermal radiation emitted from the operation of the first heating element 200 can be relatively uniformly reflected to different positions of the food ingredients 2, which provides structural support for ensuring the uniformity and consistency of heating different positions of the food ingredients 2. Exemplarily, the minimum distance from the center of the reference circle to the center line of the cooking cavity 110 comprises 48mm, 45mm, 42mm, 40mm, 35mm and the like, which are not listed here one by one.

In some embodiments, optionally, the height of the reflective protrusion 344 in the direction from the heating assembly 20 to the first mounting wall 123 is greater than or equal to 1.5cm and less than or equal to 5cm; 5%≤S2/S1≤40%; the height of the reflective protrusion 344 in the direction from the heating assembly 20 to the first mounting wall 123 is H1, the diameter of the reference circle is H2, and H1/H2≤0.17.

Specifically, the height of the reflective protrusion 344 is greater than or equal to 1.5cm and less than or equal to 5cm, which can ensure the effectiveness of the heat radiation path of the first heating element 200.

If the height of the reflective protrusion 344 is less than 1.5cm, the restraining effect of the reflective protrusion 344 on the heat radiation range of the first heating element 120 is poor, less heat is reflected to the food ingredients 2 by the reflective protrusion 344, the energy inside the cooking cavity 110 is dispersed, most of the energy is still dissipated to the surrounding environment as ineffective heat through the appliance body 10, and the energy efficiency of the cooking appliance 1 is low.

If the height of the reflective protrusion 344 is greater than 5cm, the occupation ratio of the internal space of the cooking cavity 110 will be increased, and the storage space for the food ingredients 2 will be occupied.

The ratio relationship of S1 and S2 is further detailed to satisfy 5%≤S2/S1≤40%, that is, the heat radiation path of the first heating element 200 is further optimized, which can balance the production cost and heating efficiency of the product.

Exemplarily, S2/S1=10%, S2/S1=15%, S2/S1=20%, S2/S1=25%, S2/S1=30%, S2/S1=35% and the like, which are not listed here one by one.

The structure of the reflective protrusion 344 is further limited, the height of the reflective protrusion 344 in the direction from the heating assembly 20 to the first mounting wall 123 is H1, the diameter of the reference circle is H2, and the relationship between H1 and H2 satisfies: H1/H2≤0.17. This arrangement can indirectly limit the dimension of the first heating element 200 located within the reflective protrusion 344, and can reduce the material input amount of the reflecting portion 300 and the first heating element 200 while ensuring the effectiveness and feasibility of the reflecting portion 300 in optimizing the heat radiation path of the first heating element 200, and reduce the occupation ratio of the internal space of the cooking cavity 110.

In some embodiments, optionally, the first heating element 200 is located between a plane where the side of the reflective protrusion 344 facing away from the first mounting wall 123 is located and the first mounting wall 123.

Specifically, the first heating element 200 is located between the plane where the side of the reflective protrusion 344 facing away from the first mounting wall 123 is located and the first mounting wall 123. That is, along the direction from the heating assembly 20 to the first mounting wall 123, the height of the reflective protrusion 344 exceeds that of the first heating element 200.

Specifically, when the heating assembly 20 is located at the top of the cooking cavity 110, the first heating element 200 does not protrude out of the reflective protrusion 344 along the direction from the heating assembly 20 to the first mounting wall 123.

Specifically, when the heating assembly 20 is located on the side portion of the cooking cavity 110, the first heating element 200 does not protrude out of the reflective protrusion 344 along the direction from the heating assembly 20 to the first mounting wall 123.

By defining the positional relationship between the reflective protrusion 344 and the first heating element 200, the reflective protrusion 344 can protect the first heating element 200, which provides structural support for ensuring the service performance of the cooking appliance 1.

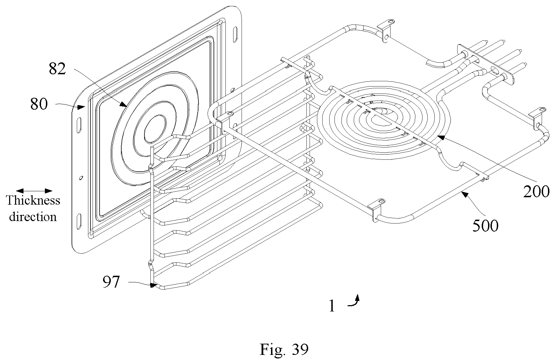

In some embodiments, optionally, as shown in Fig. 37 and Fig. 39, the heating assembly 20 further comprises the second heating element 500. The second heating element 500 and the first heating element 200 are disposed on the same side of the reflecting portion 300, and the second heating element 500 is arranged around the reflective protrusion 344.

Specifically, the structure of the heating assembly 20 is further defined.

The heating assembly 20 further comprises the second heating element 500, and the second heating element 500 and the first heating element 200 are located on the same side of the reflecting portion 300.

At least one of the first heating element 200 and the second heating element 500 can be controlled to operate according to actual use needs.

The second heating element 500 is disposed around the reflective protrusion 344. The second heating element 500 is disposed around the reflective protrusion 344. For example, when it is necessary to increase the heat output of the heating assembly 20 per unit time, the first heating element 200 and the second heating element 500 may be controlled to operate simultaneously.

The second heating element 500 is arranged around the reflective protrusion 344. The second heating element 500 operates to transfer heat by means of thermal radiation. The arrangement position of the second heating element 500 can ensure the uniformity of heat radiation, help improve the uniformity of heating the food ingredients 2, guarantee uniformly heating different positions of the food ingredients 2, and thereby help improve the cooking effect of the food ingredients 2.

That the second heating element 500 is arranged around the reflective protrusion 344 means that the second heating element 500 is located at the outer periphery of the reflective protrusion 344 and extends along the circumferential direction of the reflective protrusion 344.

In some embodiments, optionally, as shown in Fig. 37, the cooking appliance 1 comprises a bracket 96, and the second heating element 500 and the reflecting portion 300 are connected through the bracket 96.

Specifically, the cooking appliance 1 further comprises the bracket 96. The second heating element 500 and the reflecting portion 300 are connected through the bracket 96. The bracket 96 not only has a function of supporting the second heating element 500, but also has a function of connecting the assembling of the second heating element 500 and the reflecting portion 300, so as to ensure the cooperation dimension between the second heating element 500 and the reflecting portion 300.

In some embodiments, optionally, the reflecting portion 300 covers the second heating element 500, and the distance from the second heating element 500 to the outer edge of the reflecting portion 300 is less than the distance from the second heating element 500 to the reflective protrusion 344.

Specifically, the reflecting portion 300 covers the second heating element 500. The reflecting portion 300 can also reflect at least part of the thermal radiation emitted from the operation of the second heating element 500 to the food ingredients 2. The reflecting portion 300 also has a function of optimizing the heat radiation path of the second heating element 500, so as to reflect at least part of the radiation energy emitted by the second heating element 500 to the food ingredients 2 and then reduce the radiation energy absorbed by the cavity wall of the cooking cavity 110, so that the thermal radiation emitted by the second heating element 500 is more intensively reflected to the food ingredients 2.

Wherein, the distance from the second heating element 500 to the outer edge of the reflecting portion 300 is less than the distance from the second heating element 500 to the reflective protrusion 344. This arrangement is conducive to increasing the extending length of the second heating element 500, and can increase the heat radiation when the second heating element 500 is in operation, and helps shorten the heating time of the cooking appliance 1.

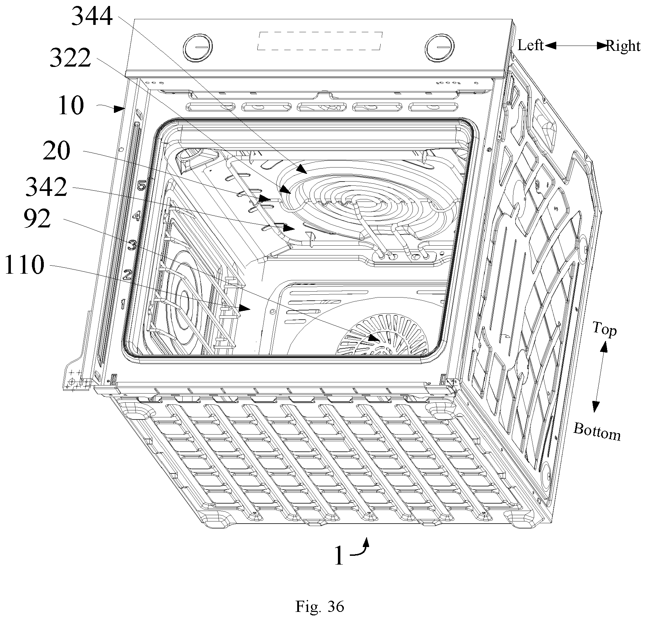

In some embodiments, optionally, as shown in Fig. 36, the second portion of the reflecting portion 300 is recessed in a direction facing away from the reflective protrusion 344 to form the third recessed portion 342. The second heating element 500, the reflective protrusion 344 and the first heating element 200 are all located at the third recessed portion 342.

Specifically, the structure of the reflecting portion 300 is further defined.

The second portion of the reflecting portion 300 is recessed in a direction facing away from the reflective protrusion 344 to form the third recessed portion 342, and the second heating element 500, the reflective protrusion 344 and the first heating element 200 are all located at the third recessed portion 342, which helps the reflecting portion to more intensively reflect the thermal radiation to the food ingredients 2, and helps improve energy utilization rate and energy efficiency of the product.

In some embodiments, optionally, the first heating element 200 comprises any one or a combination of a metal heating element, a graphene heating element, a halogen tube and an infrared tube; and/or the second heating element 500 comprises any one or a combination of a metal heating element, a graphene heating element, a halogen tube and an infrared tube.

Specifically, the specific types of the first heating element 200 and the second heating element 500 are defined.

The first heating element 200 comprises any one or a combination of a metal heating element, a graphene heating element, a halogen tube and an infrared tube; and/or the second heating element 500 comprises any one or a combination of a metal heating element, a graphene heating element, a halogen tube and an infrared tube.

When at least one of the first heating element 200 and the second heating element 500 comprises a metal heating element, it features high heat conduction efficiency and uniform heating, as well as high temperature resistance and excellent stability. The metal heating element has good impact resistance, wear resistance and long service life. When at least one of the first heating element 200 and the second heating element 500 comprises a graphene heating element, it has the advantages of high heat conduction efficiency and rapid temperature rise, and also features high temperature resistance and long service life.

When at least one of the first heating element 200 and the second heating element 500 comprises a halogen tube, it has the advantages of fast heating and quick response, features high energy efficiency, and can save energy and power. Meanwhile, the halogen tube also features good stability and long service life.

When at least one of the first heating element 200 and the second heating element 500 is an infrared tube, it has the advantages of high efficiency and energy saving, low heat loss, and can realize precise temperature control and directional heating. Meanwhile, it also has advantages of long service life and simple maintenance.

In some embodiments, optionally, as shown in Fig. 34, Fig. 35 and Fig. 39, the cooking appliance 1 further comprises the second reflecting plate 80 disposed within the cooking cavity 110. The cavity wall of the cooking cavity 110 further comprises the second mounting wall 124. The second reflecting plate 80 is connected to the second mounting wall 124, and the first mounting wall 123 and the second mounting wall 124 are cavity walls on different sides of the cooking cavity 110.

Specifically, the structure of the cooking appliance 1 is further defined. The cooking appliance 1 further comprises the second reflecting plate 80, and the second reflecting plate 80 is located in the cooking cavity 110. The cavity wall of the cooking cavity 110 further comprises the second mounting wall 124. The second reflecting plate 80 is connected to the second mounting wall 124. The first mounting wall 123 and the second mounting wall 124 are cavity walls on different sides of the cooking cavity 110; that is, the reflecting portion 300 and the second reflecting plate 80 are arranged on different sides of the cooking cavity 110. The second reflecting plate 80 has a function of reflecting at least part of the thermal radiation generated during the operation of the first heating element 200 to the food ingredients 2. In other words, the second reflecting plate 80 cooperates with the reflecting portion 300 to reflect thermal radiation to the food ingredients 2 from multiple positions and multiple angles, which can further reduce the radiation energy absorbed by the cavity wall of the cooking cavity 110. Therefore, the temperature rise of the outer surface of the appliance body 10 can be reduced. This can improve the touch feeling when a user's hand touches the outer surface of the appliance body 10, avoids the occurrence of scalding the user, and further helps improve the service performance of the cooking appliance 1.

In some embodiments, optionally, there is at least one second reflecting plate 80 and at least one second mounting wall 124, each second reflecting plate 80 cooperates with one second mounting wall 124, and the first mounting wall 123 and the second mounting wall 124 are two adjacent sides of the cooking cavity 110. When there are multiple second reflecting plates 80, the multiple second reflecting plates 80 are arranged along the circumferential direction of the heating assembly 20.

Specifically, there is at least one second reflecting plate 80 and at least one second mounting wall 124. That is, there is one second reflecting plate 80 and one second mounting wall 124, or there are multiple second reflecting plates 80 and multiple second mounting walls 124, and each second reflecting plate 80 cooperates with one second mounting wall 124.The first mounting wall 123 and the second mounting wall 124 are two adjacent sides of the cooking cavity 110. When there are multiple second reflecting plates 80, the multiple second reflecting plates 80 are arranged along the circumferential direction of the heating assembly 20. For example, when there are multiple second mounting walls 124, the multiple second mounting walls 124 are sequentially connected along the circumferential direction of the first mounting wall 123, and the number of the second mounting walls 124 is equal to the number of the second reflecting plates 80.

When there are two second mounting walls 124, the first mounting wall 123 is connected between the two second mounting walls 124.

When there are three second mounting walls 124, the three second mounting walls 124 and the first mounting wall 124 jointly enclose a groove-shaped structure.

Thus, this has a function of increasing the cooperation area and cooperation angle between the second reflecting plate 80 and the cavity wall of the cooking cavity 110, and reflecting at least part of the thermal radiation generated during the operation of the first heating element 200 to the food ingredients 2 from multiple directions and multiple angles. This can reflect thermal radiation to the food ingredients 2 from multiple positions and multiple angles, further reduce the radiation energy absorbed by the cavity wall of the cooking cavity 110, and thus reduce the temperature rise of the outer surface of the appliance body 10, and therefore, this can improve the touch feeling when a user's hand touches the outer surface of the appliance body 10, avoid the occurrence of scalding the user, and help further improve the service performance of the cooking appliance 1.

In some embodiments, optionally, there is at least one second reflecting plate 80 and at least one second mounting wall 124, and each second reflecting plate 80 cooperates with one second mounting wall 124; when there are multiple second mounting walls 124, part of the multiple second mounting walls 124 and the first mounting wall 123 are opposite sides of the cooking cavity 110, and the other part of the multiple second mounting walls 124 and the first mounting wall 123 are adjacent sides of the cooking cavity 110.

Specifically, there is at least one second reflecting plate 80 and at least one second mounting wall 124. That is, there is one second reflecting plate 80 and one second mounting wall 124, or there are multiple second reflecting plates 80 and multiple second mounting walls 124, and each second reflecting plate 80 cooperates with one second mounting wall 124. The number of the second mounting walls 124 is equal to the number of the second reflecting plates 80.

When there are multiple second mounting walls 124, part of the multiple second mounting walls 124 and the first mounting wall 123 are opposite sides of the cooking cavity 110, and the other part of the multiple second mounting walls 124 and the first mounting wall 123 are adjacent sides of the cooking cavity 110. That is, part of the multiple second reflecting plates 80 and the heating assembly 20 are located on the opposite sides of the cooking cavity 110, and the other part of the multiple second reflecting plates 80 and the heating assembly 20 are located on adjacent sides of the cooking cavity 110. For example, each side of the cooking cavity 110 is provided with either the heating assembly 20 or the second reflecting plate 80.

Thus, this has a function of increasing the cooperation area and cooperation angle between the second reflecting plate 80 and the cavity wall of the cooking cavity 110, and reflecting at least part of the thermal radiation generated during the operation of the first heating element 200 to the food ingredients 2 from multiple directions and multiple angles. This can reflect thermal radiation to the food ingredients 2 from multiple positions and multiple angles, further reduce the radiation energy absorbed by the cavity wall of the cooking cavity 110, and thus reduce the temperature rise of the outer surface of the appliance body 10, and therefore, this can improve the touch feeling when a user's hand touches the outer surface of the appliance body 10, avoid the occurrence of scalding the user, and help further improve the service performance of the cooking appliance 1.

In some embodiments, optionally, for the two end faces of the second reflecting plate 80 in the thickness direction, the reflectivity of at least one end face is greater than or equal to 0.6; the thickness of the second reflecting plate 80 is greater than or equal to 0.3mm.

Specifically, for the two end faces of the second reflecting plate 80 in the thickness direction, the reflectivity of at least one end face is greater than or equal to 0.6. Such arrangement can ensure the effectiveness and feasibility of the second reflecting plate 80 in reflecting at least part of the thermal radiation generated during the operation of the first heating element 200 to the food ingredients 2. Exemplarily, the reflectivity of the at least one end face comprises 0.65, 0.7, 0.75, 0.8 and the like, which will not be listed one by one here.

The thickness of the second reflecting plate 80 is greater than or equal to 0.3mm. This arrangement ensures the structural strength of the second reflecting plate 80, and can reduce the space occupation ratio of the cooking cavity 110 by the second reflecting plate 80, and prevent the heating assembly 20 from compressing the volume of the cooking cavity 110. Exemplarily, the thickness of the second reflecting plate 80 comprises 0.4mm, 0.5mm, 0.6mm, 0.7mm, 0.8mm and the like, which are not listed here one by one.

In some embodiments, optionally, as shown in Fig. 39, the second reflecting plate 80 is provided with a second pressing rib structure 82.

Specifically, the second reflecting plate 80 is provided with the second pressing rib structure 82. The provision of the second pressing rib structure 82 can increase the effective load-bearing thickness of the second reflecting plate 80, improve the bending stiffness of the second reflecting plate 80, and enhance the mass distribution and rigidity of the second reflecting plate 80. This helps increase a natural frequency, thereby achieving the purpose of suppressing resonance deformation.

In some embodiments, optionally, there are multiple second pressing rib structures 82; the multiple second pressing rib structures are sequentially nested along a direction from the middle part of the second reflecting plate 80 to the edge of the second reflecting plate 80. Specifically, there are multiple second pressing rib structures 82, and the multiple second pressing rib structures are sequentially nested along a direction from the middle part of the second reflecting plate 80 to the edge of the second reflecting plate 80. That is, for two adjacent second pressing rib structures 82, the second pressing rib structure 82 located on an outer side surrounds the second pressing rib structure 82 located on an inner side.

Setting the arrangement positions of the multiple second pressing rib structures 82 can increase an arrangement area of the second pressing rib structures 82, which helps further improve the bending stiffness of the second reflecting plate 80, and helps further enhance the mass distribution and rigidity of the second reflecting plate 80.

In some technical solutions, optionally, a cross section of the second reflecting plate 80 is taken along a direction perpendicular to the thickness direction of the second reflecting plate 80, then the area of the cross section of the second reflecting plate 80 is S3, the area of the second mounting wall 124 is S4, and S3≥0.5×S4.

Specifically, a cross section of the second reflecting plate 80 is taken along a direction perpendicular to the thickness direction of the second reflecting plate 80, the area of the cross section of the second reflecting plate 80 is denoted as S3, and the area of the second mounting wall 124 is denoted as S4. The ratio relationship of S3 and S4 is defined so that S3 ≥ 0.5 × S4, thus ensuring the effectiveness of the second reflecting plate 80 in reflecting at least part of the radiation energy emitted by the first heating element 200 to the food ingredients 2, and the radiation energy absorbed by the cavity wall of the cooking cavity 110 can be reduced. Exemplarily, S3 = 0.55 × S4, S3 = 0.6 × S4, S3 = 0.62 × S4, S3 = 0.64 × S4, S3 = 0.65 × S4, S3 = 0.7 × S4, etc., which are not listed here one by one.

In some embodiments, optionally, a cross section of the reflective protrusion 344 is taken along a direction perpendicular to the direction from the heating assembly 20 to the first mounting wall 123. In the cross section, the inner contour line of the reflective protrusion 344 comprises at least one or a combination of a straight line, a curved line and a broken line.

Specifically, a cross section of the reflective protrusion 344 is taken along a direction perpendicular to the direction from the heating assembly 20 to the first mounting wall 123. In the cross section, the inner contour line of the reflective protrusion 344 comprises at least one or a combination of a straight line, a curved line and a broken line. For example, the shape enclosed by the inner contour line of the reflective protrusion 344 comprises an ellipse, a polygon, a special shape, etc., which are not listed here one by one. Wherein, the "special shape" refers to a structure with an irregular shape. For instance, the reflective protrusion 344 may be a hollow cylindrical plate; for instance, the reflective protrusion 344 may be a hollow square plate; for instance, the reflective protrusion 344 may be a hollow frustum-shaped plate. Thus, this can meet a use need of limiting the heat radiation path of the first heating element 200 by the reflective protrusion 344 from multiple directions and multiple angles, and can meet a use need of effectively reflecting at least part of the radiation energy emitted by the first heating element 200 through the reflective protrusion 344 to the food ingredients 2.

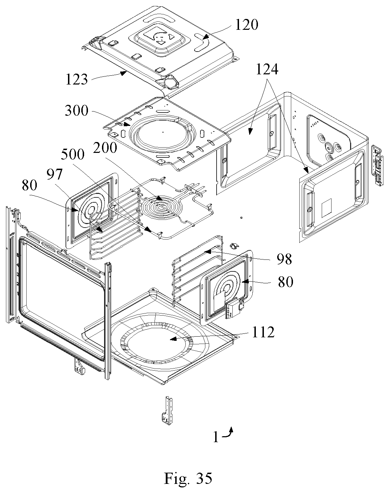

In some embodiments, optionally, as shown in Fig. 34 and Fig. 35, the cooking cavity 110 comprises the placement region 112 therein, and the heating assembly 20 and the placement region 112 are located on two opposite sides of the cooking cavity 110.

Specifically, the positions of the heating assembly 20 and the placement region 112 are defined. The cooking cavity 110 comprises the placement region 112 therein, the food ingredients 2 are placed in the placement region 112, and the heating assembly 20 and the placement region 112 are located on two opposite sides of the cooking cavity 110. For example, the placement region 112 is located at the bottom of the cooking cavity 110, and the heating assembly 20 is located at the top of the cooking cavity 110.

This arrangement defines the relative position of the heating assembly 20 and the placement region 112, and provides structural support for ensuring effectively reflecting thermal radiation to the placement region 112.

In some technical solutions, optionally, a cross section of the reflecting portion 300 is taken along the direction perpendicular to the direction from the heating assembly 20 to the first mounting wall 123. In the cross section, the area of the region enclosed by the outer edge of the reflecting portion 300 is S5, the area of the first mounting wall 123 is S6, and S5≥0.5×S6.

Specifically, the cross section of the reflecting portion 300 is taken along the direction perpendicular to the direction from the heating assembly 20 to the first mounting wall 123. In the cross section, the area of the region enclosed by the outer edge of the reflecting portion 300 is S5, the area of the first mounting wall 123 is S6, and S5≥0.5×S6. The ratio relationship of S5 and S6 is defined to ensure the effectiveness of the first reflecting plate 310 in reflecting at least part of the radiation energy emitted by the first heating element 200 to the food ingredients 2 in the placement region 112, and the radiation energy absorbed by the cavity wall of the cooking cavity 110 can be reduced. Exemplarily, S5=0.55×S6, S5=0.6×S6, S5=0.62×S6, S5=0.64×S6, S5=0.65×S6, S5=0.7×S6, etc., which are not listed here one by one.

In some embodiments, optionally, when the heating assembly 20 is disposed on the side portion of the cooking cavity 110, part of the first mounting wall 123 is recessed in a direction facing away from the heating assembly 20 to form the third groove-shaped structure, and the heating assembly 20 is disposed within the third groove-shaped structure.

Specifically, when the heating assembly 20 is disposed on the side portion of the cooking cavity 110, part of the first mounting wall 123 is recessed in a direction facing away from the heating assembly 20 to form the third groove-shaped structure, and the heating assembly 20 is disposed within the third groove-shaped structure. The third groove-shaped structure has a function of accommodating the heating assembly 20, so as to reduce the occupation ratio of the internal space of the cooking cavity 110 occupied by the heating assembly 20 in the direction from the cavity wall of the cooking cavity 110 to the center of the cooking cavity 110, thereby ensuring the space within the cooking cavity 110 for effectively accommodating the food ingredients 2, preventing the heating assembly 20 from compressing the volume of the cooking cavity 110, and facilitating fully utilization of the internal space of the cooking cavity 110.

Exemplarily, the structure of the protective sleeve 95 is also applicable to the protection of the second heating element 500, which will not be elaborated herein.

In some embodiments, optionally, there are multiple holes 952, and the ratio of the sum of the areas of the cross sections of the multiple holes 952 to the area of the outer surface of the protective sleeve 95 is greater than or equal to 10% and less than or equal to 90%.

The structure of the hole 952 is detailed.

There are multiple holes 952, and the multiple holes 952 are arranged at intervals. The sum of the areas of the cross sections of the multiple holes 952 is k1, and the area of the outer surface of the protective sleeve 95 is k2, wherein, 10%≤k1/k2≤90%. In this way, the first heating element 200 can be effectively protected, and the use need of effectively radiating the energy to the food ingredients 2 can be satisfied.

If k1/k2<10%, the material dosage of the protective sleeve 95 is insufficient. When an external force acts on the protective sleeve 95, the protective sleeve 95 is prone to deformation or even damage, which may cause damage to the first heating element 200 and fail to effectively protect the first heating element 200.

If k1/k2>90%, the material dosage of the protective sleeve 95 is excessive. The protective sleeve 95 will block part of the energy, reduce the energy radiated to the food ingredients 2 through the protective sleeve 95, and further lower the cooking efficiency of the cooking appliance 1.

In some embodiments, optionally, the distance between any two points on the hole walls of the holes 952 is less than or equal to 10mm. Specifically, the distance between any two points on the hole walls of the holes 952 is less than or equal to 10mm, which may also have an understanding that the maximum distance between any two points on the hole walls of the holes 952 is 10mm. In this way, the first heating element 200 can be effectively protected, and the use need of effectively radiating the energy to the food ingredients 2 can be satisfied. If the distance between any two points on the hole walls of the holes 952 is greater than 10mm, the area of the first heating element 200 exposed out of the protective sleeve 95 through the hole 952 is relatively large. In this case, when an external force is applied to the protective sleeve 95, the external force may easily directly contact the first heating element 200 through the hole 952, thereby causing damage to the first heating element 200 and reducing the effectiveness and reliability of protecting the first heating element 200.

In some embodiments, optionally, the spacing between the inner surface of the protective sleeve 95 and the outer surface of the first heating element 200 is greater than or equal to 0.1mm. Specifically, the spacing is formed between the protective sleeve 95 and the first heating element 200; specifically, the spacing between the inner surface of the protective sleeve 95 and the outer surface of the first heating element 200 is greater than or equal to 0.1mm. The gap between the protective sleeve 95 and the first heating element 200 can serve a buffering function. When an external force acts on the protective sleeve 95, the protective sleeve 95 cooperates with the gap between the protective sleeve 95 and the first heating element 200 to further alleviate the force exerted on the first heating element 200, so as to enhance the protection effect on the first heating element 200 and ensure the service performance and service life of the first heating element 200.

Exemplarily, the values of the spacing between the inner surface of the protective sleeve 95 and the outer surface of the first heating element 200 comprise 0.2mm, 0.5mm, 1mm, 1.2mm, 1.5mm, 2mm, 3mm, 4mm, and 5mm.

In some embodiments, optionally, the protective sleeve 95 is a metal sleeve.

Specifically, the protective sleeve 95 is a metal sleeve, which features high temperature resistance and relatively high structural strength, and can effectively protect the first heating element 200.

Exemplarily, the cooking appliance 1 comprises the appliance body 10 and the heating assembly 20. The heating assembly 20 comprises the first heating element 200 and the reflecting portion 300. The reflective protrusion 344 is integrally formed on the side of the reflecting portion 300 facing away from the first mounting wall 123 of the cooking cavity 110. A curled edge 340 is arranged on the outer edge of the reflecting portion 300. The reflecting portion 300 comprises the plate body 311 and two bent plates 313. The plate body 311 is connected between the two bent plates 313. The first pressing rib 332 is disposed at the joint of the plate body 311 and the bent plates 313, and the second pressing rib 334 is arranged on the portion of the plate body 311 located on the peripheral side of the reflective protrusion 344. A bracket 96 is further disposed on the reflecting portion 300. The bracket 96 is used for fixing the rear sides of the first heating element 200 and the reflecting portion 300, so as to fix the first heating element 200 and the reflecting portion 300 together.

Exemplarily, the first heating element 200 and the second heating element 500 are integrally connected.

Exemplarily, the second reflecting plate 80 is provided with the second pressing rib structure 82 to improve the structural rigidity of the second reflecting plate 80.

Exemplarily, the cooking appliance 1 comprises an upper heat insulation plate (i.e., the reflecting portion 300). The upper heat insulation plate is disposed at the top of the cooking cavity 110, and is used for reducing heat transferred from the first heating element 200 and the second heating element 500 to the first mounting wall 123. The upper heat insulation plate is integrally formed, and the opening 322 of the reflective protrusion 344 on the upper heat insulation plate faces downward. The reflective protrusion 344 is used for restraining the thermal radiation range of the first heating element 200.

Exemplarily, the first heating element 200 is disposed within the reflective protrusion 344, and the second heating element 500 is disposed outside the reflective protrusion 344 and below the reflecting portion 300.

Exemplarily, there are two second reflecting plates 80, which are disposed on the left side and the right side of the cooking cavity 110 respectively. The second reflecting plates 80 are used for reducing heat transferred to the second mounting wall 124 and lower heat loss.

Exemplarily, the shape of the reflecting portion 300 is substantially identical to the shape and area of the first mounting wall 123 so as to attach to the first mounting wall 123. The reflectivity of at least one surface of the reflecting portion 300 is greater than or equal to 0.6, and the thickness of the reflecting portion 300 is greater than or equal to 0.3mm. The upper heat insulation plate is connected to the top plate 120 of the appliance via the first connecting member 60 (e.g., a screw). A pressed profile (i.e., the protruding portion 318) is arranged at the screw hole 952, so as to ensure forming an air interlayer with a thickness greater than or equal to 1mm between the upper heat insulation plate and the top plate 120, thereby ensuring the heat insulation effect. The shape of the reflective protrusion 344 of the upper heat insulation plate is not limited. The interior of the reflective protrusion 344 can accommodate a circular structure (i.e., a reference circle) with a diameter greater than or equal to 200mm. The top surface of the reflective protrusion 344 is a fully closed plane, and the bottom surface thereof is fully open (i.e., the opening 322 is formed on the side of the reflective protrusion 344 facing away from the first mounting wall 123). The edge of the upper heat insulation plate is provided with the curled edge 340, and the upper heat insulation plate is provided with the first pressing rib structure 330.

Exemplarily, the top plate 120 is provided with the hole 952. The first heating element 200 passes through the hole 952 of the top plate 120 through a screw (i.e., the first connecting member 60) to be fixed in position. The screw penetrates sequentially the upper heat insulation plate and the top plate 120, and is fastened with a nut on the upper side of the top plate 120. The rear sides of the second heating element 500 and the reflecting portion 300 are connected together through the bracket 96 integrated with the second heating element 500.

Exemplarily, the first heating element 200 is disposed within the reflective protrusion 344 of the reflecting portion 300, and the lowest position of the first heating element 200 is not lower than the lower edge of the reflective protrusion 344. The power of the first heating element 200 is greater than or equal to 800W.

Exemplarily, the material of the two second reflecting plates 80 is the same as that of the reflecting portion 300. The reflectivity of at least one surface of each second reflecting plate 80 is greater than or equal to 0.6, the thickness of the second reflecting plate 80 is greater than or equal to 0.3mm, and the second reflecting plate 80 is provided with the second pressing rib structure 82. The area of the first mounting wall 123 is S1. A cross section of the heating assembly 20 is taken along the direction perpendicular to the direction from the heating assembly 20 to the first mounting wall 123. In the cross section, the area of the region enclosed by the inner contour line of the reflective protrusion 344 is S2, and S2/S1≤ 50%.

Exemplarily, the heating assembly 20 further comprises a protective net, which is arranged on the side of the reflective protrusion 344 facing away from the first mounting wall 123. The protective net has a function of protecting the first heating element 200 disposed within the reflective protrusion 344, which prevents the occurrence of damage to the first heating element 200 caused by accidental collision of the user with the first heating element 200 through the opening 322, and can ensure the service life of the first heating element 200.

It can be understood that the protective net has a plurality of through-holes, and thus the protective net does not hinder energy radiation.

Exemplarily, the cooking appliance 1 further comprises a first hanger 97 and a second hanger 98.

Exemplarily, the number of the second reflecting plates 80 is greater than or equal to 2. For example, the reflecting portion 300 is disposed at the top of the cooking cavity 110, and the two second reflecting plates 80 are respectively arranged on the left side and the right side of the cooking cavity 110. The reflecting portion 300 and the second reflecting plates 80 may be mounted at any position of the cooking cavity 110.

**Table 3**

| Mode | Gear | Energy consumption of the present application (kWh) | Energy consumption of related art (kWh) |
|---|---|---|---|
| The first heating element operates | 160°C | 0.4545 | 0.8316 |
| | 190°C | 0.5022 | 0.9374 |
| | 220°C | 0.5582 | 1.034 |

It can be seen from Table 3 that the cooking appliance 1 of the present application greatly reduces the energy consumption of the product compared with the cooking appliances in the related art.

In some embodiments, optionally, as shown in Fig. 7, Fig. 8, Fig. 9, Fig. 10, Fig. 11, Fig. 12, Fig. 13, Fig. 14, Fig. 15, Fig. 16, Fig. 17, Fig. 18, Fig. 19, Fig. 20, Fig. 21, Fig. 22 and Fig. 23, for the cavity wall of the cooking cavity 110, the first mounting wall comprises the central region 114, and the first reflecting plate 310 covers the central region 114; along the direction from the reflective protrusion 344 to the first reflecting plate 310, the first heating element 200 forms an orthographic projection on the cavity wall of the cooking cavity 110, and at least part of the projection of the first heating element 200 overlaps the central region 114; in the overlapping portion of the projection of the first heating element 200 and the central region 114, the contour line of the projection and the central region 114 enclose at least one closed region 115, the maximum area of the at least one closed region 115 is Ae, the area of the central region 114 is S0, and Ae≥0.1×S0.

Specifically, for the cavity walls of the cooking cavity 110, the cavity wall (i.e., the first mounting wall 123) on the side immediately adjacent to the first reflecting plate 310 is provided with the central region 114, and the first reflecting plate 310 covers the central region 114. That is, the first reflecting plate 310 is disposed between the reflective protrusion 344 and the cavity wall of the cooking cavity 110 where the central region 114 is located. The first reflecting plate 314 can also cover the central region 114; alternatively, the reflecting portion 300 can cover the central region 114.

Along the direction from the reflective protrusion 344 to the first reflecting plate 310, the first heating element 200 forms an orthogonal projection on the cavity wall of the cooking cavity 110. At least part of the projection of the first heating element 200 overlaps the central region 114, so as to ensure more intensively reflecting the thermal radiation emitted by the first heating element 200 reflected to the food ingredients 2, thereby ensuring the cooking efficiency of the cooking appliance 1.

In the overlapping portion of the projection of the first heating element 200 and the central region 114, the contour line of the projection and the central region 114 enclose at least one closed region 115, the maximum area of the at least one closed region 115 is Ae, and the area of the central region 114 is S0, wherein, Ae≥0.1×S0. Ae is correlated with S0, and by defining the relationship between Ae and S0 to satisfy Ae≥0.1×S0, both the cooking efficiency and energy consumption of the cooking appliance 1 are balanced, which can avoid increasing the energy consumption of the cooking appliance 1 due to an excessively large Ae, and can also prevent lowering the cooking efficiency of the cooking appliance 1 due to an excessively small Ae.

In some embodiments, optionally, the heating assembly 20 is disposed at the top of the cooking cavity 110; or the heating assembly 20 is disposed at a side portion of the cooking cavity 110.

Specifically, the position of the heating assembly 20 inside the cooking cavity 110 is further detailed.

For example, the heating assembly 20 is disposed at the top of the cooking cavity 110, and the food ingredients 2 are arranged at the bottom of the cooking cavity 110. Heat generated from the operation of the heating assembly 20 can be effectively radiated to the food ingredients 2.

For example, the heating assembly 20 is disposed on the side portion of the cooking cavity 110, and the food ingredients 2 are arranged at the bottom of the cooking cavity 110. Heat generated from the operation of the heating assembly 20 can be effectively radiated to the food ingredients 2.

For example, the height of the reflective protrusion 344 comprises 1.5cm, 2cm, 2.6cm, 3cm, 3.2cm, 4cm, 5cm, etc., which are not listed here one by one.

Exemplarily, the first connecting element 60 comprises a bolt, a screw, a rivet, etc., which are listed here one by one.

Exemplarily, at least one of the first heating element 200 and the second heating element 500 can be controlled to operate according to actual use needs.

The second heating element 500 is located on the peripheral side of the reflective protrusion 344. The second heating element 500 is disposed around the reflective protrusion 344. For example, when it is necessary to increase the heat output of the heating assembly 20 per unit time, the first heating element 200 and the second heating element 500 may be controlled to operate simultaneously.

The second heating element 500 is arranged around the reflective protrusion 344. The second heating element 500 operates to transfer heat by means of thermal radiation. The arrangement position of the second heating element 500 can ensure the uniformity of heat radiation, help improve the uniformity of heating the food ingredient 2, guarantee uniformly heating different positions of the food ingredients 2, and thereby help improve the cooking effect of the food ingredients 2.

That the second heating element 500 is arranged around the reflective protrusion 344 means that the second heating element 500 is located at the outer periphery of the reflective protrusion 344 and extends along the circumferential direction of the reflective protrusion 344.

Exemplarily, the second reflecting plate 80 comprises at least one or a combination of a mirror aluminum reflecting plate, a mirror silver reflecting plate and a mirror stainless steel reflecting plate, which are not listed here one by one.

Exemplarily, the value of the thickness of the protective sleeve 95 comprises 0.5mm, 1.2mm, 1.5mm, 1.8mm, 2mm, 2.2mm, 2.5mm, 2.7mm, 3mm, 3.2mm, 3.5mm, 3.8mm, 4mm, 4.2mm, 4.5mm, 4.8mm, etc., which are not listed one by one here.

Exemplarily, when at least one of the first heating element 200 and the second heating element 500 comprises an infrared tube, if the infrared tube is directly exposed inside the cooking cavity 110, the infrared tube is prone to damage due to accidental collision during use, which poses a potential safety hazard. Therefore, protective measures need to be arranged. For example, the cooking appliance 1 comprises at least one of the protective net and the protective sleeve 95. When the cooking appliance 1 comprises the protective sleeve 95, the protective sleeve 95 is made of materials such as a high-temperature resistant metal (e.g., stainless steel). The thickness of the protective sleeve 95 is greater than or equal to 0.2mm and less than or equal to 5mm. The protective sleeve 95 is provided with multiple holes 952. The multiple holes 952 are used for ensuring that heat generated by at least one of the first heating element 200 and the second heating element 500 can penetrate the protective sleeve 95 as much as possible, so as to effectively heat the food ingredients 2. The ratio of the sum of the areas of the cross sections of the multiple holes 952 to the area of the outer surface of the protective sleeve 95 is greater than or equal to 10% and less than or equal to 90%. The shape of the holes 952 is not limited. For example, a cross section of the holes 952 is taken along a direction perpendicular to the axis of the hole 952, in the cross section, the shape of the region enclosed by the contour line of the hole wall of the hole 952 comprises a circle, a polygon or a special shape, wherein, the special shape refers to a structure with an irregular shape. The distance between any two points on the hole walls of the holes 952 is less than or equal to 10mm. The protective sleeve 95 does not contact the infrared tube, and the spacing between the inner surface of the protective sleeve 95 and the outer surface of the infrared tube is greater than or equal to 0.1mm. Exemplarily, the infrared tube comprises a quartz glass tube and a heating wire.

It is taken as an example that the reflecting portion 300 is an aluminum plate and the cooking appliance 1 is an oven. The aluminum plate is disposed in the cooking cavity 110 and located on the upper side of the cooking cavity 110. The aluminum plate is used for reducing heat radiated from the first heating element 200 and the second heating element 500 to the upper cavity wall of the cooking cavity 110. The reflective protrusion 344 is arranged below the aluminum plate, and is used for restraining the thermal radiation range of the first heating element 200. The height of the reflective protrusion 344 in the height direction of the cooking appliance 1 is greater than or equal to 1cm.

The second heating element 500 is disposed below the aluminum plate.

In some embodiments, optionally, the height of the second heating element 500 exceeds that of the reflective protrusion 344 along the direction from the first mounting wall 123 to the reflective protrusion 344.

The embodiments further define the cooperation structure of the reflective protrusion 344 and the second heating element 500.

Along the direction from the first mounting wall 123 to the reflective protrusion 344, the height of the second heating element 500 exceeds that of the reflective protrusion 344.

Specifically, when the heating assembly 20 is disposed at the top of the cooking cavity 110, along the direction from the first mounting wall 123 to the reflective protrusion 344, the positional height of the reflective protrusion 344 is equal to the positional height of the second heating element 500, or the positional height of the reflective protrusion 344 exceeds that of the second heating element 500.

Specifically, when the heating assembly 20 is disposed at the side portion of the cooking cavity 110, the distance from the position of the reflective protrusion 344 to the food ingredients 2 is greater than or equal to the distance from the position of the second heating element 500 to the food ingredients 2 along the direction from the reflective protrusion 344 to the first reflecting plate 310.

By further defining the positional relationship between the reflective protrusion 344 and the second heating element 500, such arrangement reduces the occupation ratio of the internal space of the cooking cavity 110 occupied by the heating assembly 20, ensures the effective space of the cooking cavity 110 for accommodating the food ingredients 2, prevents the heating assembly 20 from compressing the volume of the cooking cavity 110, and facilitates fully utilization of the internal space of the cooking cavity 110.

In the present application, the term of "a plurality of" indicates two or more than two, unless otherwise explicitly defined. Terms such as "mount", "connect with", "connect to" and "fix" shall be understood in a broad sense. For example, "connect to" may refer to a fixed connection, a detachable connection, or an integral connection; "connect with" may refer to a direct connection or an indirect connection through an intermediate medium. For those of ordinary skill in the art, the specific meanings of the above terms in the present application can be understood based on specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples. The above-mentioned are merely some preferred embodiments of the present application and are not intended to limit the present application, and for one skilled in the art, various modifications and changes may be made to the present application. Any modifications, equivalent substitutions, improvements and so on made within the spirit and principle of the present application should be covered within the scope of protection of the present application.

## Claims

1. A cooking appliance (1), comprising:
an appliance body (10), the appliance body (10) being provided with a cooking cavity (110) therein, and a cavity wall of the cooking cavity (110) comprising a first mounting wall (123);
a heating assembly (20) located within the cooking cavity (110), the heating assembly (20) comprising a first heating element (200) and a reflecting portion (300), the reflecting portion (300) being located between the first mounting wall (123) and the first heating element (200), and the reflecting portion (300) being connected to the first mounting wall (123);
wherein, a reflective protrusion (344) is integrally formed on a side of the reflecting portion (300) facing away from the first mounting wall (123), and the reflective protrusion (344) is disposed around the first heating element (200).

2. The cooking appliance (1) according to claim 1, wherein, a first pressing rib structure (330) is arranged on a portion of the reflecting portion (300) located on a peripheral side of the reflective protrusion (344); and/or, an outer edge of the reflecting portion (300) is bent toward the first mounting wall (123) to form a curled edge (340);
wherein, the reflecting portion (300) comprises a plate body (311) and two bent plates (313), the plate body (311) is connected between the two bent plates (313), and the plate body (311) is integrally formed with the reflective protrusion (344); a spacing between sides of the two bent plates (313) facing away from the plate body (311) is larger than a spacing between sides of the two bent plates (313) connected to the plate body (311);
wherein, when the reflecting portion (300) is provided with the first pressing rib structure (330), the first pressing rib structure (330) comprises a first pressing rib (332), the first pressing rib (332) is located at a joint of the plate body (311) and the bent plates (313), and/or the first pressing rib structure (330) comprises a second pressing rib (334), and the second pressing rib (334) is located at the plate body (311).

3. The cooking appliance (1) according to claim 1, wherein, along a direction from the heating assembly (20) to the first mounting wall (123), a height of the reflective protrusion (344) is greater than or equal to 1cm; and/or,
an area of the first mounting wall (123) is S1, a cross section of the heating assembly (20) is taken along a direction perpendicular to the direction from the heating assembly (20) to the first mounting wall (123), in the cross section, an area of a region enclosed by an inner contour line of the reflective protrusion (344) is S2, where S2/S1≤50%; and/or,
a cross section of the reflective protrusion (344) is taken along a direction perpendicular to the direction from the heating assembly (20) to the first mounting wall (123), in the cross section, a reference circle is located within a region enclosed by an inner contour line of the reflective protrusion (344), the reference circle is a circle with a diameter less than or equal to 210mm, and a minimum distance from a center of the reference circle to a center line of the cooking cavity (110) is less than or equal to 50mm.

4. The cooking appliance (1) according to claim 3, wherein, the height of the reflective protrusion (344) in the direction from the heating assembly (20) to the first mounting wall (123) is greater than or equal to 1.5cm and less than or equal to 5cm; $5 % \leq S 2 / S 1 \leq 40 % ;$ the height of the reflective protrusion (344) in the direction from the heating assembly (20) to the first mounting wall (123) is H1, the diameter of the reference circle is H2, and H1/H2≤0.17.

5. A cooking appliance (1), comprising:
an appliance body (10), the appliance body (10) being provided with a cooking cavity (110) therein, and the cooking cavity (110) comprising a placement region (112) therein; and
a heating assembly (20) located within the cooking cavity (110), the heating assembly (20) comprising a first heating element (200) and a reflecting portion (300), the reflecting portion (300) being configured to reflect at least part of thermal radiation emitted by the first heating element (200) during operation to the placement region (112);
wherein, the reflecting portion (300) comprises a first reflecting plate (310), and the first heating element (200) is located on a side of the first reflecting plate (310) facing the placement region (112);
wherein, the reflecting portion (300) comprises a reflecting cover (320), the reflecting cover (320) comprises an opening (322), the first heating element (200) is located within the reflecting cover (320), and at least part of the opening (322) is disposed opposite to the placement region (112);
where, when the reflecting portion (300) comprises the reflecting cover (320), the reflecting cover (320) comprises a surrounding plate (324), the surrounding plate (324) is arranged around the first heating element (200), and an end of the surrounding plate (324) encloses the opening (322).

6. The cooking appliance (1) according to claim 5, wherein, along a height direction of the cooking appliance (1), a height of the surrounding plate (324) is greater than or equal to 1cm; and/or
a cross section of the appliance body (10) and the surrounding plate (324) are taken in a direction perpendicular to the height direction of the cooking appliance (1), in the cross section, an area of a region enclosed by a contour line of a cavity wall of the cooking cavity (110) is S1, and an area of a region enclosed by an inner contour line of the surrounding plate (324) is S2, and S2/S1≤50%.

7. A cooking appliance (1), comprising:
an appliance body (10), the appliance body (10) being provided with a cooking cavity (110) therein;
a heating assembly (20) located within the cooking cavity (110), the heating assembly (20) comprising a first heating element (200) and a reflecting portion (300), wherein, the reflecting portion (300) comprises a first reflecting plate (310) and a reflecting cover (320), the reflecting cover (320) is stacked on a side of the first reflecting plate (310), the reflecting cover (320) is connected to a cavity wall of the cooking cavity (110) through the first reflecting plate (310), a side of the reflecting cover (320) facing away from the first reflecting plate (310) comprises an opening (322), and the first heating element (200) is located within the reflecting cover (320);
wherein, among cavity walls of the cooking cavity (110), the cavity wall on a side immediately adjacent to the first reflecting plate (310) comprises a central region (114), and the first reflecting plate (310) covers the central region (114);
wherein, along a direction from the reflecting cover (320) to the first reflecting plate (310), the first heating element (200) forms an orthographic projection on the cavity wall of the cooking cavity (110), and at least part of the projection of the first heating element (200) overlaps the central region (114);
wherein, in an overlapping portion of the projection of the first heating element (200) and the central region (114), a contour line of the projection and the central region (114) enclose at least one closed region (115), a maximum area of the at least one closed region (115) is Ae, an area of the central region (114) is S0, and Ae≥0.1×S0.

8. The cooking appliance (1) according to claim 7, wherein, an outer edge of the central region (114) comprises a first side (1142) and a second side (1144) arranged adjacent to each other, a length of the first side (1142) is d1, and a length of the second side (1144) is d2;
wherein, 150mm≤d1≤450mm, 80mm≤d2≤200mm, and d2 < d1.

9. The cooking appliance (1) according to claim 8, wherein, in the overlapping portion of the projection of the first heating element (200) and the central region (114), the contour line of the projection forms part of an outer edge of the closed region (115).

10. The cooking appliance (1) according to claim 9, wherein, the first heating element (200) is a linear heating element, and a length of the first heating element (200) is d;
when the projection of the first heating element (200) is parallel to the first side (1142) or an included angle between the projection of the first heating element (200) and the first side (1142) is less than 45°, d≤1.5×d1;
when the included angle between the projection of the first heating element (200) and the first side (1142) is greater than or equal to 45°, d≤1.5×d2.

11. The cooking appliance (1) according to claim 7, wherein, the first heating element (200) comprises at least one heat generating tube (210);
when a number of the heat generating tube (210) is one, a power of the first heating element (200) is P, a power density of the first heating element (200) is PD1, an area of a region enclosed by an outermost contour line in the projection of the first heating element (200) on the cavity wall of the cooking cavity (110) is A, P≥800W, and PD1=P/A≥0.028W/mm²;
when the number of the heat generating tubes (210) is greater than or equal to two, the power of the first heating element (200) is P, the power density of the first heating element (200) is PD2, P≥800W and PD2=P/Ae≥0.061W/mm².

12. A cooking appliance (1), comprising:
an appliance body (10), the appliance body (10) being provided with a cooking cavity (110) therein;
a heating assembly (20) located within the cooking cavity (110), the heating assembly (20) comprising a first heating element (200) and a reflecting portion (300), wherein, the reflecting portion (300) comprises a first reflecting plate (310) and a reflecting cover (320), the reflecting cover (320) is stacked on a side of the first reflecting plate (310), the reflecting cover (320) is connected to a cavity wall of the cooking cavity (110) through the first reflecting plate (310), a side of the reflecting cover (320) facing away from the first reflecting plate (310) comprises an opening (322), and the first heating element (200) is located within the reflecting cover (320).

13. The cooking appliance (1) according to claim 12, wherein, the reflecting cover (320) comprises a surrounding plate (324), the surrounding plate (324) is arranged around the first heating element (200), and an end of the surrounding plate (324) encloses the opening (322).

14. The cooking appliance (1) according to claim 13, wherein, along a direction from the reflecting cover (320) to the first reflecting plate (310), a height of the surrounding plate (324) is greater than or equal to 1cm; and/or
a cross section of the appliance body (10) and the surrounding plate (324) is taken along a direction perpendicular to the direction from the reflecting cover (320) to the first reflecting plate (310), in the cross section, an area of a region enclosed by a contour line of the cavity wall of the cooking cavity (110) is S1, and an area of a region enclosed by an inner contour line of the surrounding plate (324) is S2, where S2/S1≤50%.

15. The cooking appliance (1) according to claim 12, wherein, a cross section of the reflecting cover (320) is taken along a direction perpendicular to a height direction of the reflecting cover (320), and in the cross section, a reference circle is located within a region enclosed by an inner contour line of the reflecting cover (320);
wherein, the reference circle is a circle with a diameter less than or equal to 210mm, and a minimum distance from a center of the reference circle to a vertical center line of the cooking cavity (110) is less than or equal to 50mm;
a depth of the reflecting cover (320) is H1, and the diameter of the reference circle is H2, where H1/H2≤0.17.
